# EUROPEAN PATENT APPLICATION

(11) **EP 4 095 698 A1**
(43) Date of publication of application: **30.11.2022**
(21) Application number: 20916133.0
(22) Date of filing: 20.01.2020
(51) Int. Cl.: G06F 11/36, G06F 8/41, G06F 9/34, G06F 9/455

(54) **PROCESSOR, SIMULATOR PROGRAM, ASSEMBLER PROGRAM, AND INFORMATION PROCESSING PROGRAM**

(71) Applicant: FUJITSU LIMITED, Kawasaki-shi, Kanagawa 211-8588 (JP)
(72) Inventor: KAWAKAMI, Kentaro, Kawasaki-shi, Kanagawa 211-8588 (JP); KURIHARA, Koji, Kawasaki-shi, Kanagawa 211-8588 (JP)
(74) Representative: Hoffmann Eitle
(86) International application number: PCT/JP2020/001742
(87) International publication number: WO 2021/149113

(57) **Abstract**

A processor includes a first register, a second register configured to store status information related to the first register, and a detection circuit configured to detect an exception in an instruction in which the first register is specified in an operand, based on the status information stored in the second register.

## Description

### FIELD

The present invention relates to a processor, a simulator program, an assembler program, and an information processing program

### BACKGROUND

A code of an assembly language generated by a compiler from a source program may include unnecessary instructions that do not affect an execution result of a program. Such instructions slow down the execution speed of the program, and prevent a processor from drawing out its performance to the limit. In addition, because of the limitation of optimization capabilities of the compiler, in some cases, an executable program acquired by compiling the source program in which complex processing is described is slower in execution speed than the code of the assembly language optimized by human hands.

Therefore, in fields such as HPC (High Performance Computing) where high-speed program execution is required, a developer may manually write the code of the assembly language suitable for the program.

However, since the assembly language has a lower level of abstraction than the high-level language such as C and C++, description errors is likely to occur, and it is difficult to find out where the description errors are in the program.

### PRIOR ART DOCUMENT

### PATENT DOCUMENT

Patent Document 1: Japanese Laid-Open Patent Publication No. 05-143338

### SUMMARY OF THE INVENTION

### PROBLEMS TO BE SOLVED BY THE INVENTION

In an aspect of embodiments, the purpose of the present invention is to detect an exception caused by a description error in a program.

### MEANS FOR SOLVING THE PROBLEMS

In one aspect of embodiments, there is provided a processor including: a first register; a second register configured to store status information related to the first register; and a detection circuit configured to detect an exception in an instruction in which the first register is specified in an operand, based on the status information stored in the second register.

### EFFECTS OF THE INVENTION

According to one aspect, it is possible to detect an exception caused by a description error in a program.

### BRIEF DESCRIPTION OF DRAWINGS

FIG. 1A is a schematic diagram of general-purpose registers provided in a processor;
FIG. 1B is a schematic diagram of vector registers provided in the processor;
FIG. 2 is a schematic diagram illustrating formats of an assembly language that specify 128-bit long vector registers;
FIGs. 3A and 3B are schematic diagrams illustrating a syntax of the assembly language using the vector registers (part 1);
FIGs. 4A and 4B are schematic diagrams illustrating the syntax of the assembly language using the vector registers (part 2);
FIG. 5 is a schematic diagram illustrating the syntax of the assembly language using the vector registers (part 3);
FIGs. 6A and 6B are schematic diagrams illustrating the syntax of the assembly language using general-purpose registers;
FIG. 7 is a schematic diagram illustrating a correct coding example of a source code of the assembly language written by a developer;
FIG. 8 is a schematic diagram illustrating a source code of the assembly language for explaining a description error according to a first example;
FIG. 9 is a schematic diagram illustrating a source code of the assembly language for explaining example of the description error according to the first example when vector registers are specified in operands;
FIG. 10 is a schematic diagram illustrating a source code of the assembly language for explaining an error according to a second example;
FIG. 11 is a schematic diagram illustrating a source code of the assembly language for explaining the error according to a third example;
FIG. 12 is a schematic diagram illustrating a source code of the assembly language for explaining the description error according to a fourth example;
FIG. 13 is a schematic diagram illustrating a source code of the assembly language for explaining the description error according to a fifth example;
FIG. 14 is a diagram summarizing description errors according to the first to the fifth examples;
FIG. 15 is a configuration diagram of a processor according to a first embodiment;
FIG. 16 is a schematic diagram of each of a status register file and an arithmetic register file according to the first embodiment;
FIG. 17 is a diagram schematically illustrating a detection rule when a second exception detection unit according to the first embodiment detects an exception;
FIG. 18 is a block diagram of the second exception detection unit according to the first embodiment;
FIG. 19 is a schematic diagram for explaining a function of an exception processing circuit according to the first embodiment;
FIG. 20 is a diagram schematically illustrating a storeStatus instruction and a loadStatus instruction according to the first embodiment;
FIG. 21 is a diagram schematically illustrating the storeStatus instruction and the loadStatus instruction according to the first embodiment (part 1);
FIG. 22 is a diagram schematically illustrating the storeStatus instruction and the loadStatus instruction according to the first embodiment (part 2);
FIG. 23A is a schematic diagram of a source code of the assembly language when the function of the exception detection circuit according to the first embodiment is suppressed;
FIG. 23B is a schematic diagram of an example in which the operands are described in a disableExeptGen instruction according to the first embodiment;
FIG. 23C is a schematic diagram of an example in which the operands are described in an enableExeptGen instruction according to the first embodiment;
FIG. 24 is a hardware configuration diagram of an information processing device that executes a simulation program according to a second embodiment;
FIG. 25 is a functional configuration diagram of the information processing device when the information processing device according to the second embodiment executes the simulation program;
FIG. 26 is a functional block diagram of a pseudo processor generated by an environment construction unit according to the second embodiment;
FIG. 27 is a diagram illustrating a correspondence relationship between each unit of the processor according to the first embodiment and each unit of the pseudo processor according to the second embodiment;
FIG. 28 is a flowchart for explaining a simulation method according to the second embodiment;
FIG. 29 is a flowchart of an exception detection processing according to the second embodiment;
FIG. 30 is a configuration diagram of a processor included in a target machine that executes an executable program in a third embodiment;
FIG. 31 is a hardware configuration diagram of an information processing device that executes the assembler program according to the third embodiment;
FIG. 32 is a functional configuration diagram of the information processing device when the information processing device according to the third embodiment executes the assembler program;
FIG. 33 is a schematic diagram of a C++ source code representing status information according to the third embodiment;
FIG. 34Ais a diagram schematically illustrating the detection rule according to the third embodiment when a general-purpose register is specified in an operand;
FIG. 34B is a diagram schematically illustrating the detection rule according to the third embodiment when the vector register is specified in an operand;
FIG. 35 is a schematic diagram of a source program of the assembly language when the function of an exception detection unit according to the third embodiment is suppressed;
FIG. 36 is a schematic diagram illustrating an example of a command line argument according to the third embodiment;
FIG. 37 is a flowchart of a process executed by the assembler program according to the third embodiment;
FIG. 38 is a flowchart of an exception detection processing according to the third embodiment;
FIG. 39 is a hardware configuration diagram of an information processing device according to a fourth embodiment that executes the executable program generated by an AOT (Ahead Of Time) compiler technology or a JIT (Just In Time) compiler technology;
FIG. 40A is a schematic diagram illustrating an example of a C++ pseudo source code premised on compiling with the AOT compiler technology;
FIG. 40B is a schematic diagram illustrating an example of a C++ pseudo source code in which a parameter "q" and arrays "in" and "out" are declared;
FIG. 40C is a schematic diagram illustrating an example of a C++ pseudo source code in which an initial value of the array "Tbl" is declared;
FIG. 41 is a schematic diagram of a pseudo code of the assembly program acquired by compiling with the AOT compiler technology;
FIG. 42 is a schematic diagram illustrating the operation of the executable program acquired by the AOT compiler technology;
FIG. 43 is a schematic diagram illustrating an example of a C++ pseudo source code using the JIT compiler technology;
FIG. 44 is a schematic diagram illustrating what kind of instruction sequence of the machine language has been written in the memory during the execution of the executable program acquired by compiling the source code using the JIT compiler technology;
FIG. 45 is a schematic diagram illustrating the operation of the executable program in which the function to be called at the time of execution is generated at the time of execution by the JIT compiler technology;
FIG. 46 is a schematic diagram of a C++ source code for the application program to explain the description error according to the first example;
FIG. 47 is a schematic diagram of a C++ source code for the application program to explain the description error according to the second example;
FIG. 48 is a schematic diagram of a C++ source code for the application program to explain the description error according to the third and the fourth examples;
FIG. 49 is a schematic diagram of a C++ source code for the application program to explain the description error according to the fifth example;
FIG. 50 is a diagram summarizing description errors according to the first to the fifth examples;
FIG. 51 is a schematic diagram illustrating a C++ pseudo source code representing the status information according to the fourth embodiment;
FIG. 52Ais a diagram schematically illustrating a detection rule according to the fourth embodiment when the general-purpose register is specified as an argument of the mnemonic function;
FIG. 52B is a diagram schematically illustrating a detection rule according to the fourth embodiment when the vector register is specified as an argument of the mnemonic function;
FIGs. 53A to 53D are schematic diagrams of a C++ pseudo-source code that define various types used in the mnemonic function according to the fourth embodiment (part 1);
FIGs. 54A to 54D are schematic diagrams of a C++ pseudo-source code that define various types used in the mnemonic function according to the fourth embodiment (part 2);
FIG. 55 is a schematic diagram of a source file in which a C++ source code that defines a mnemonic function multiply according to the fourth embodiment is described (part 1);
FIG. 56 is a schematic diagram of the source file in which the C++ source code that defines the mnemonic function multiply according to the fourth embodiment is described (part 2);
FIG. 57 is a schematic diagram of a source file in which a C++ source code that defines a mnemonic function float_multiply according to the fourth embodiment is described (part 1);
FIG. 58 is a schematic diagram of the source file in which the C++ source code that defines the mnemonic function float multiply according to the fourth embodiment is described (part 2);
FIG. 59 is a schematic diagram of a source file in which a C++ source code that defines a mnemonic function vload that loads 8-bit data is described in the fourth embodiment;
FIG. 60 is a schematic diagram of a source file in which a C++ source code that defines a mnemonic function vload that loads 16-bit data is described in the fourth embodiment;
FIG. 61 is a schematic diagram of a source file in which a C++ source code that defines a mnemonic function vadd that adds 8-bit data is described in the fourth embodiment;
FIG. 62 is a schematic diagram of a source file in which a C++ source code that defines a mnemonic function vadd that adds 16-bit data is described in the fourth embodiment;
FIG. 63 is a schematic diagram of a source file in which a C++ source code that defines a mnemonic function vstore that stores 8-bit data in a memory is described in the fourth embodiment;
FIG. 64 is a schematic diagram of a source file in which a C++ source code that defines a mnemonic function vstore that stores 32-bit data in a memory is described in the fourth embodiment;
FIG. 65 is a schematic diagram of a source file in which a C++ source code that defines a mnemonic function cvtssBtoH according to the fourth embodiment is described;
FIG. 66 is a schematic diagram of a source file in which a C++ source code that defines a mnemonic function vmov that loads a signed integer immediate value is described in the fourth embodiment;
FIG. 67 is a schematic diagram of a source file in which a C++ source code that defines a mnemonic function vmov that loads an unsigned integer immediate value is described in the fourth embodiment;
FIG. 68 is a schematic diagram of a source file in which a C++ source code that defines a mnemonic function vmov that loads a 32-bit floating point immediate value is described in the fourth embodiment;
FIG. 69 is a schematic diagram of a source file in which a C ++ source code that defines a mnemonic function cvtFloatSigned according to the fourth embodiment is described;
FIGs. 70A and 70B are diagrams schematically illustrating a method of suppressing the function detecting an exception in the fourth embodiment;
FIG. 71 is a schematic diagram of a C++ pseudo source code of a mnemonic function that can suppress the function detecting the exception in the fourth embodiment;
FIG. 72A is a schematic diagram of a source file when a global variable for suppressing the function detecting the exception is described inside a mnemonic function xor in the fourth embodiment;
FIG. 72B is a diagram schematically illustrating a C++ pseudo source code of a source file for the application program using the mnemonic function xor;
FIG. 73 is a schematic diagram illustrating an example of a source file in which a C++ pseudo source code of a MachineCodeEmitter function is described in the fourth embodiment;
FIG. 74 is a schematic diagram illustrating a development environment using a source file in which a mnemonic function is defined in the fourth embodiment;
FIG. 75 is a schematic diagram of a C++ pseudo source code described in a source file for the application program for acquiring an executable program in the fourth embodiment;
FIG. 76 is a flowchart illustrating the operation of the information processing device when the executable program is executed in the fourth embodiment;
FIG. 77 is a functional configuration diagram of the information processing device according to the fourth embodiment when executing the mnemonic function;
FIG. 78 is a flowchart of an information processing method according to the fourth embodiment; and
FIG. 79 is a flowchart of an exception detection processing according to the fourth embodiment.

### DESCRIPTION OF EMBODIMENTS

As described above, as compared with the high-level language such as C language, the description errors are more likely to occur in coding in the assembly language. Although the description errors can occur in various situations during coding, it is easy to make the errors, especially when a register is specified as an operand of the instruction. Therefore, registers provided in the processor will be described first.

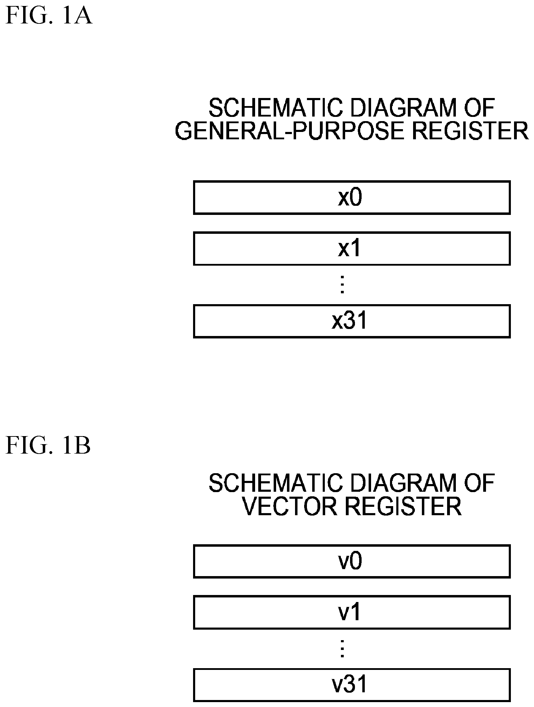

FIG. 1A is a schematic diagram of general-purpose registers xn (n=0,1,2,..., 31) provided in a processor.

The general-purpose registers xn (n = 0,1,2, ..., 31) are registers that are not limited to a specific use and store, for example, data, an address, an immediate value, and the like. Here, each of the plurality of general-purpose registers xn is identified by an index n (= 0,1,2, ..., 31).

On the other hand, FIG. 1B is a schematic diagram of the vector registers vn (n = 0,1,2, ..., 31) provided in the processor.

The vector registers vn (n = 0,1,2, ..., 31) are SIMD (Single Instruction Multiple Data) registers and are registers for storing the vector data to be the target of the vector arithmetic. Similar to the general-purpose registers xn (n = 0,1,2, ..., 31), a plurality of vector registers vn (n = 0,1) are identified by the index n (= 0,1,2, ..., 31) in the present embodiment. The size of each of the vector registers vn (n = 0,1,2, ..., 31) is, for example, 128 bits.

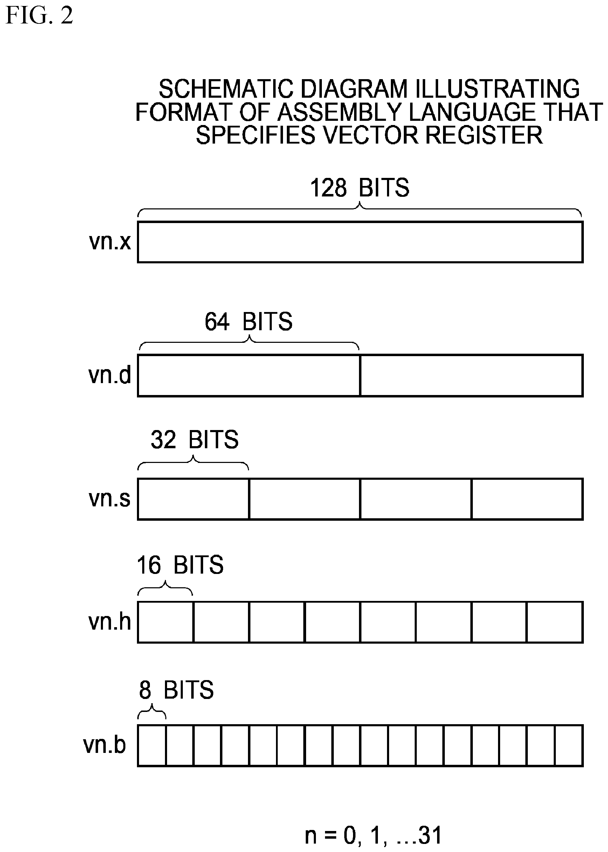

FIG. 2 is a schematic diagram illustrating formats of the assembly language that specify 128-bit long vector registers vn (n = 0,1,2, ..., 31) in the processor based on ARMv8-A architecture of ARM Ltd. which is an instruction set that allows the vector registers to be specified.

As illustrated in FIG. 2, formats "vn.x", "vn.d", "vn.s", "vn.h", and "vn.b" are employed to specify the vector registers vn (n=0,1,2,...31) in the assembly language.

In this format, "vn" is a format that specifies the vector register vn whose index is "n". Each of the "x", "d", "s", "h", and "b" following a dot "." are a format indicating a size of the element of the vector data stored in one vector register vn. For example, "x" indicates that the size of the element is 128 bits, and "d" indicates that the size of the element is double word (64 bits).

Similarly, "s", "h", and "b" indicate that the size of the element is a single word (32 bits), a half word (16 bits), and a byte (8 bits), respectively.

Thus, in this format, the vector register vn and the size of the element are specified by a character string such as "vn.d" which is a concatenation of "vn" and "d" with the dot".".

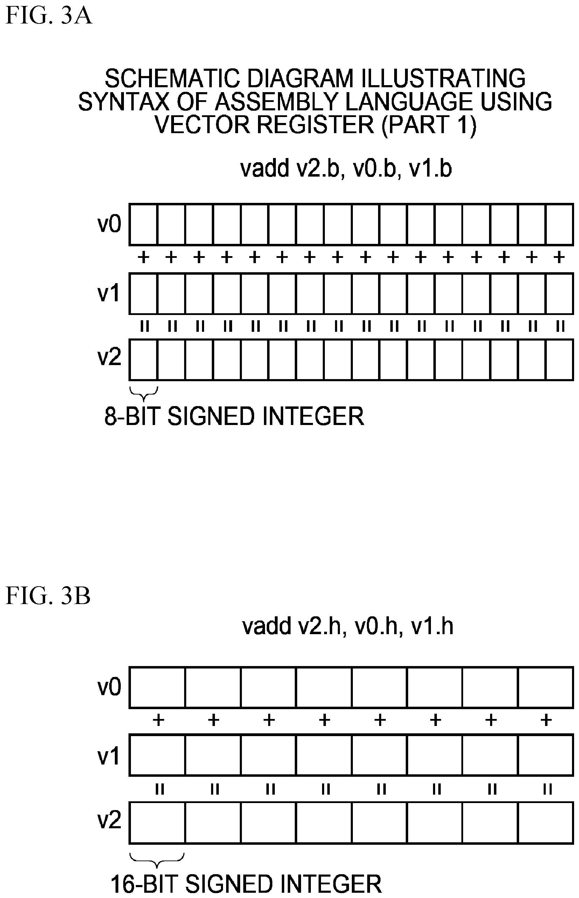

Next, a syntax of the assembly language using the vector registers will be described. FIGs. 3 to 5 are schematic diagrams illustrating the syntax of the assembly language using the vector registers.

Here, FIG. 3A is a schematic diagram illustrating the syntax of a vadd instruction. The vadd instruction in FIG. 3A is a signed integer addition instruction that adds the corresponding elements of the two vector registers v0 and v1 and stores the result in the corresponding element of the vector register v2. Thus, since the vadd instruction is an addition instruction for each element of each vector register, it is assumed that the size of each element of each vector register v0, v1 and v2 is the same.

Therefore, the developer makes the size of elements in all vector registers in the operand of the vadd instruction the same, for example, at "b". In this case, the vadd instruction is an instruction to add an 8-bit signed integer stored in the element of each vector register.

FIG. 3B is a schematic diagram illustrating another example of the syntax of a vadd instruction. In the example of FIG. 3B, the size of the element of each vector register specified in the operand of the vadd instruction is "h". In this case, the vadd instruction is an instruction to add a 16-bit signed integer stored in the element of each vector register.

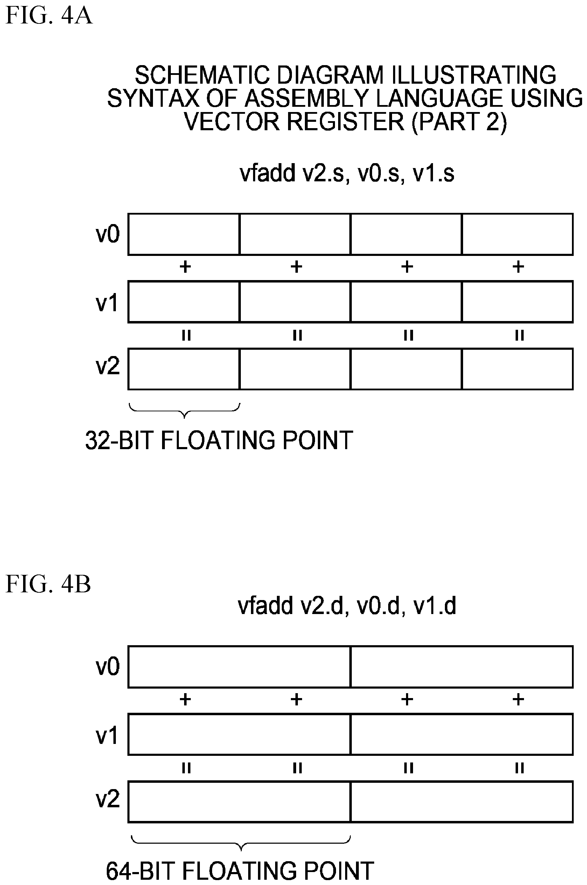

FIG. 4A is a schematic diagram illustrating the syntax of a vfadd instruction. The vfadd instruction in FIG. 4A is a floating point addition instruction that adds the corresponding elements of the two vector registers v0 and v1 and stores the result in the corresponding element of the vector register v2. As in the vadd instruction described above, since the vfadd instruction is also an addition instruction for each element of each vector register, it is an instruction on the premise that the size of each element of the respective vector registers v0, v1 and v2 is the same.

Therefore, the developer makes the size of elements in all vector registers in the operand of the vfadd instruction the same, for example, at "s". In this case, the vfadd instruction is an instruction to add 32-bit floating point stored in the elements of each vector register.

FIG. 4B is a schematic diagram illustrating another example of the syntax of the vfadd instruction. In the example of FIG. 4B, the size of the elements of each vector register specified in the operand of the vfadd instruction is set to "d". In this case, the vfadd instruction is an instruction to add 64-bit floating point stored in the elements of each vector register.

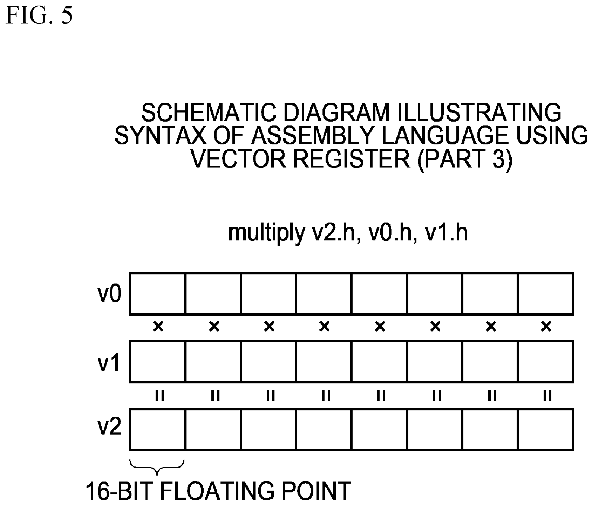

FIG. 5 is a schematic diagram showing the syntax of a multiply instruction. The multiply instruction in FIG. 5 is an integer multiplication instruction that multiplies the corresponding elements of the two vector registers v0 and v1 and stores the result in each element of the vector register v2. Since the multiply instruction is a multiplication instruction for each element in this way, it is an instruction on the premise that the size of each element of the respective vector register v0, v1 and v2 is the same. In this example, the size of each element in each of the vector registers v0, v1, and v2 is the same at "h".

Furthermore, the multiply instruction does not support the product of data of different data types, such as integers and floating point. Therefore, the multiply instruction is an instruction on the premise that data of the same data type is written in each of the vector registers v0 and v1 as a source register.

Next, the syntax of the assembly language using general-purpose registers will be described.

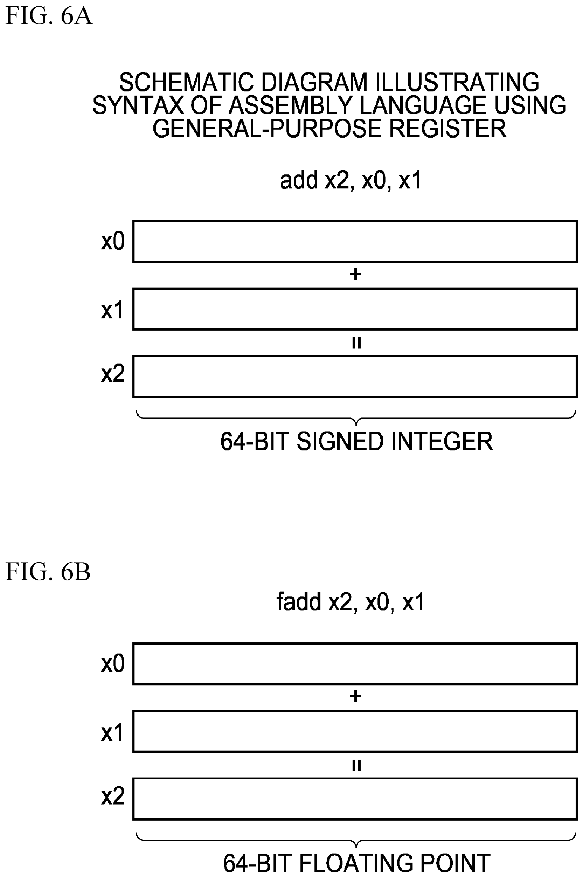

FIGs. 6A and 6B are schematic diagrams illustrating the syntax of the assembly language using the general-purpose registers. Here, FIG. 6A is a schematic diagram illustrating the syntax of an add instruction. The add instruction is a signed 64-bit integer addition instruction for the general-purpose registers. In the example of FIG. 6A, the respective data stored in the two general-purpose registers x0 and x1 are added to each other, and the result is written in the general-purpose register x2.

Unlike the vector registers, there is no concept of arithmetic between the elements in general-purpose registers. Therefore, it is not necessary to specify the element size with the dot "." in the operand of the add instruction.

Further, FIG. 6B is a schematic diagram illustrating the syntax of a faded instruction. The fadd instruction is a 64-bit floating point addition instruction for general-purpose registers. In the example of FIG. 6B, the respective data stored in the two general-purpose registers x0 and x1 are added to each other, and the result is written in the general-purpose register x2.

As in the add instruction, it is not necessary to specify the element size with a dot "." also in the operand of the fadd instruction, either.

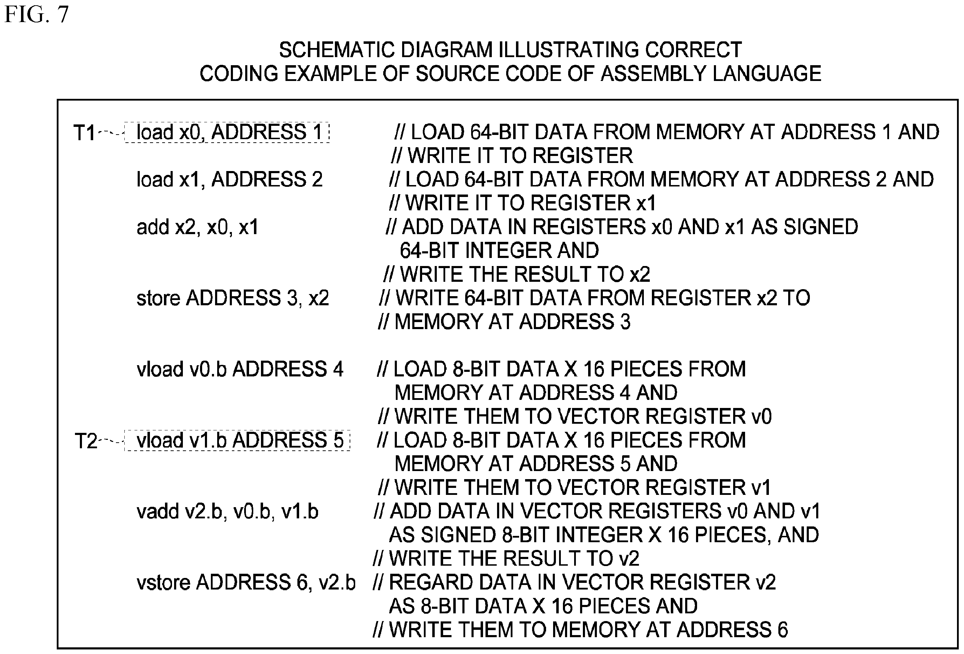

Next, a coding example in the assembly language will be described. FIG. 7 is a schematic diagram illustrating a correct coding example of the source code of the assembly language described by the developer.

In the source code of the assembly language, the general-purpose registers xn (n=0,1,2,..., 31), the vector registers vn (n=0,1,2,..., 31), and immediate values such as addresses are specified as operands of the instruction.

For example, in a code T1, "x0" and "address 1" are specified as the operands of the load instruction. The code T1 is a code that reads 64-bit data from the memory of "address 1" specified as the immediate value and writes it to the general-purpose register x0.

Further, in the code T2, "v2.b", "v0.b", and "v1.b" are specified as the operands of the vadd instruction. The code T2 is an instruction that reads the data stored in respective elements of the vector register v0 and the vector register v1, adds them as 8-bit signed integers, and writes the result to the vector register v2.

Hereinafter, the register from which data is read, such as the vector registers v0 and v1 in the code T2, is also referred to as a source (src) register. In addition, the register to which data is written, such as the general-purpose register x0 of the code T1 and the vector register v2 of the code T2, is also referred to as a destination (dst) register.

Next, examples of the description errors in the source code of the assembly language written by the developer will be described. The types of description errors include the following first to fifth examples.

### FIRST EXAMPLE

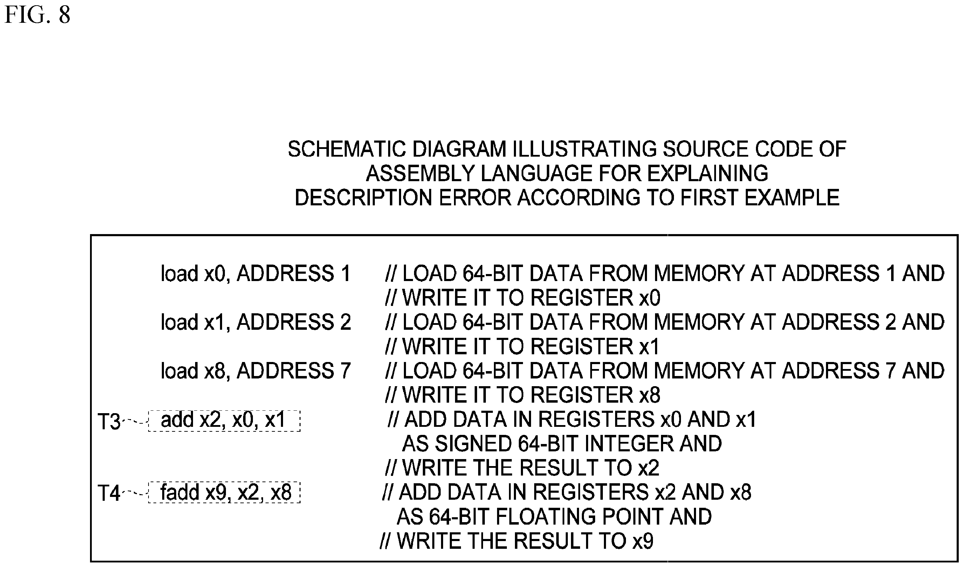

FIG. 8 is a schematic diagram illustrating a source code of the assembly language for explaining the description error according to the first example.

In the example of FIG. 8, in a code T3, the addition result of the signed 64-bit integer is written in the general-purpose register x2 which is the destination register. Then, in the code T4, the general-purpose register x2 is specified as the source register of the faded instruction.

Since the data type that the fadd instruction targets for arithmetic is a floating point, the floating point must be written to the general-purpose register x2 which is the source register for the fadd instruction. However, in this example, this coding is incorrect because a signed integer is written to the general-purpose register x2 in the code T3.

In codes T3 and T4, the general-purpose registers are specified in the operands, but the same error can occur when the vector registers are specified in the operands.

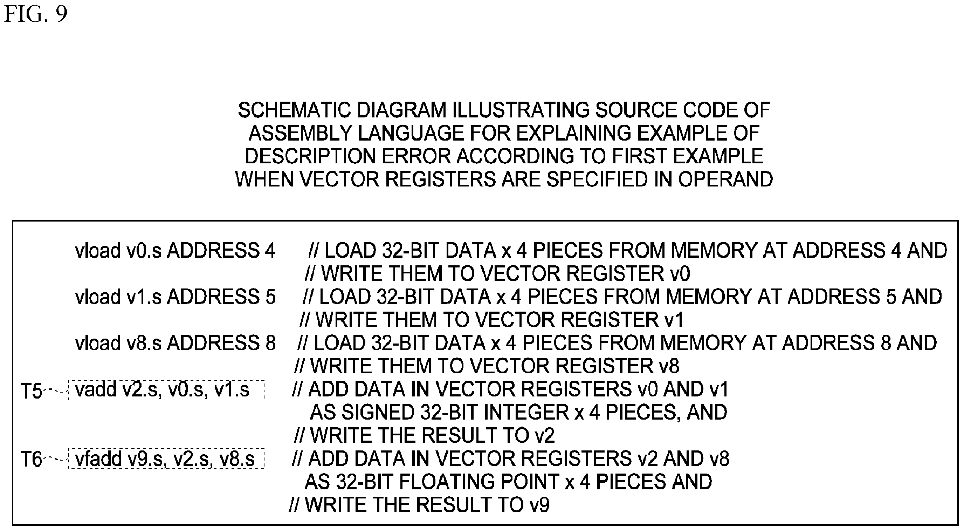

FIG. 9 is a schematic diagram illustrating a source code of the assembly language for explaining an example of the description error according to the first example when the vector register is specified in the operand.

In the example of FIG. 9, in a code T5, the addition result of the signed 32-bit integer is written in the vector register v2 which is the destination register. Then, in a code T6, the vector register v2 is specified as the source register of the vfadd instruction.

As in the fadd instruction, since the vfadd instruction is also an instruction that adds the floating points to each other, the floating point must be written to the vector register v2 which is the source register. However, in this example, this coding is incorrect because the integer is written to the vector register v2 in the code T5.

As illustrated in FIGs. 8 and 9, the coding in which the data type as an arithmetic target by the instruction does not match the data type of the data actually written in the source register is incorrect.

### . SECOND EXAMPLE

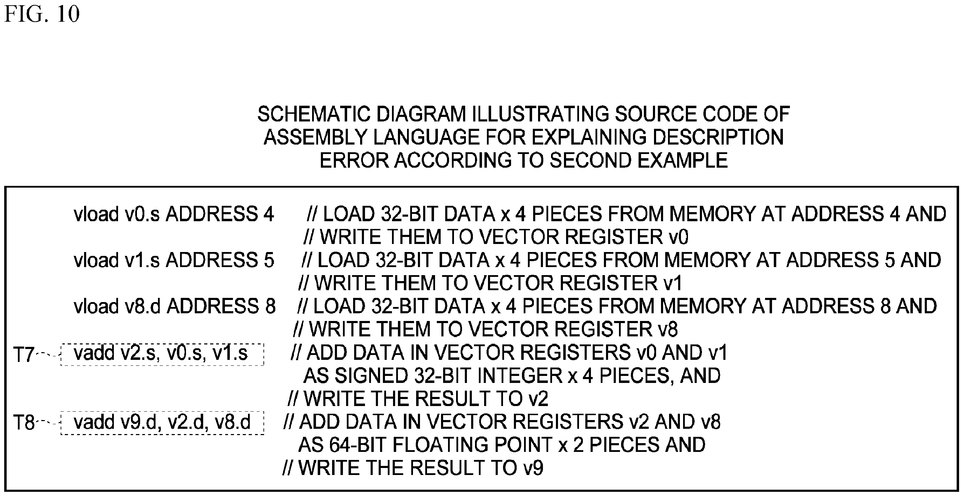

FIG. 10 is a schematic diagram illustrating a source code of the assembly language for explaining the error according to the second example.

In the example of FIG. 10, in a vadd instruction of a code T7, a single word "s" is specified as the data size of the destination register. Therefore, when the vadd instruction of the code T7 is executed, vector data having an element whose data size is single word "s" is written to the vector register v2.

On the other hand, in the vadd instruction of the following code T8, a double word "d" is specified as the data size of each of the source register and the destination register. According to this, the developer intends to perform arithmetic between data with the data size of the double word "d" in the code T8.

However, since the element with the data size of the single word "s" is written in the vector register v2 of the source register by the above code T7, the execution of code T8 will produce a result different from the developer's intention.

Thus, the description in which the data size of the destination register of a preceding instruction and the data size of the source register of a succeeding instruction using the destination register as the source register are different is incorrect.

### THIRD EXAMPLE

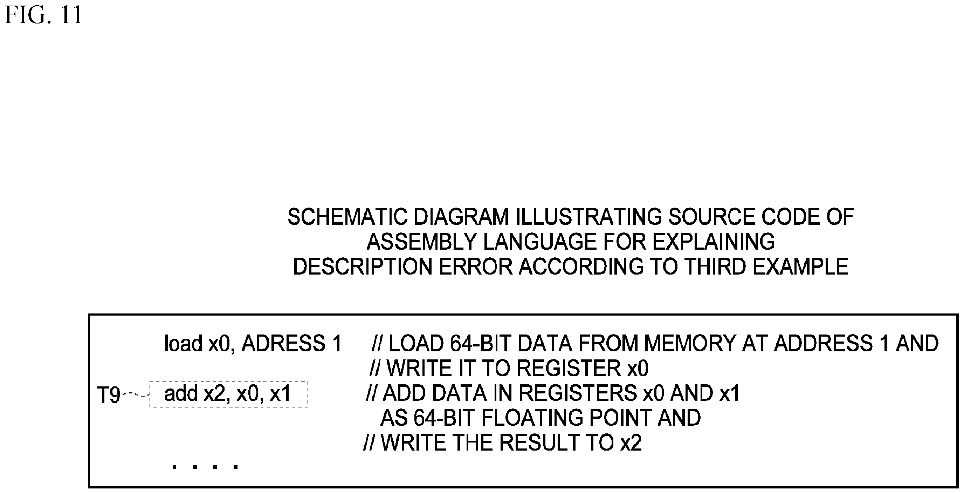

FIG. 11 is a schematic diagram illustrating a source code of the assembly language for explaining the error according to the third example.

In the example of FIG. 11, in the add instruction of a code T9, the data of the general-purpose registers x0 and x1 which are the source registers are added, and the result is written to the general-purpose register x2. However, no code uses the general-purpose register x1 as the destination register before the code T9. Therefore, it is unclear what kind of data is written in the general-purpose register x1, and the data is. Even if the code T9 is executed in such a state, the data written to the general-purpose register x2 is also indefinite.

Therefore, it is erroneous to specify a register that has never been used as the destination register as a source register in this manner.

### FOURTH EXAMPLE

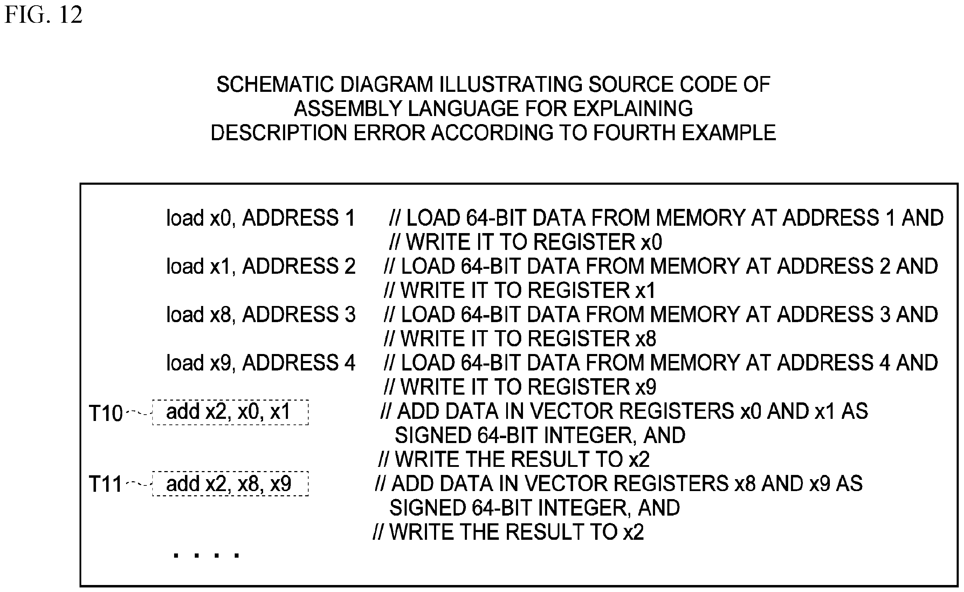

FIG. 12 is a schematic diagram illustrating a source code of the assembly language for explaining the description error according to the fourth example.

In the example in FIG. 12, the general-purpose register x2 is used as the destination register in the add instruction of a code T10, and a value obtained by adding the data of each of the general-purpose registers x0 and x1 is written to the general-purpose register x2.

However, in a code after the code T10, the contents of the general-purpose register x2 are overwritten by the add instruction of the code T11 without using the general-purpose register x2 as the source register. This means that the execution result of the code T10 written to general-purpose register x2 has never been used, so the significance of the existence of the code T10 is unclear, and a register misspecification in the code T10 or a code T11 is suspected.

Therefore, it is erroneous to specify the register used as the destination register in this way as the destination register again without subsequently using it as the source register.

### .FIFTH EXAMPLE

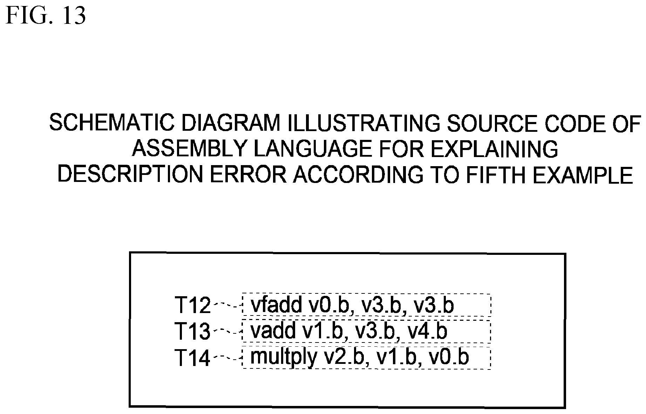

FIG. 13 is a schematic diagram illustrating a source code of the assembly language for explaining the description error according to the fifth example.

In the example of FIG. 13, in a code T12, a floating point which is the execution result of the vfadd instruction is written to the vector register v0. Further, in a code T13, an integer which is the execution result of the vadd instruction is written in the vector register v1.

Then, in a multiply instruction of a code T14, the data of the respective elements of the vector registers v0 and v1 as the source register str multiplied with each other, and the result is written to the vector register v2 as the destination register.

However, the multiply instruction assumes that the types of data written to the two source registers are the same, as described above. In this example, the data types written to the respective vector registers v0 and v1 are different between a floating-point type and an integer type, so executing this multiply instruction will obtain a different execution result from a result intended by the developer.

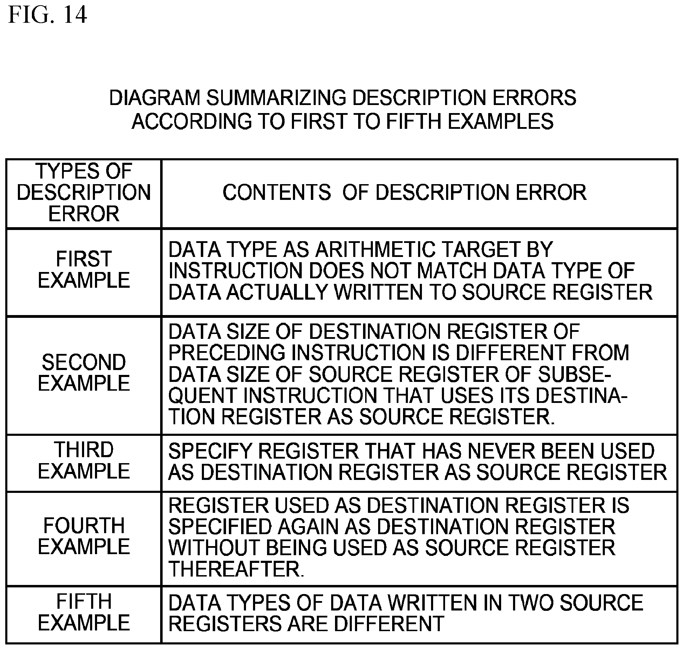

Therefore, even if the data types of the data written in the two source registers are different in this way, the coding error will occur. FIG. 14 is a diagram summarizing the description errors according to the first to the fifth examples.

Hereinafter, each embodiment capable of detecting each description error in FIG. 14 and an error equivalent thereto will be described.

### (FIRST EMBODIMENT)

In the present embodiment, a processor capable of detecting the exception caused by the description error according to the first to fifth examples of FIG. 14 will be described.

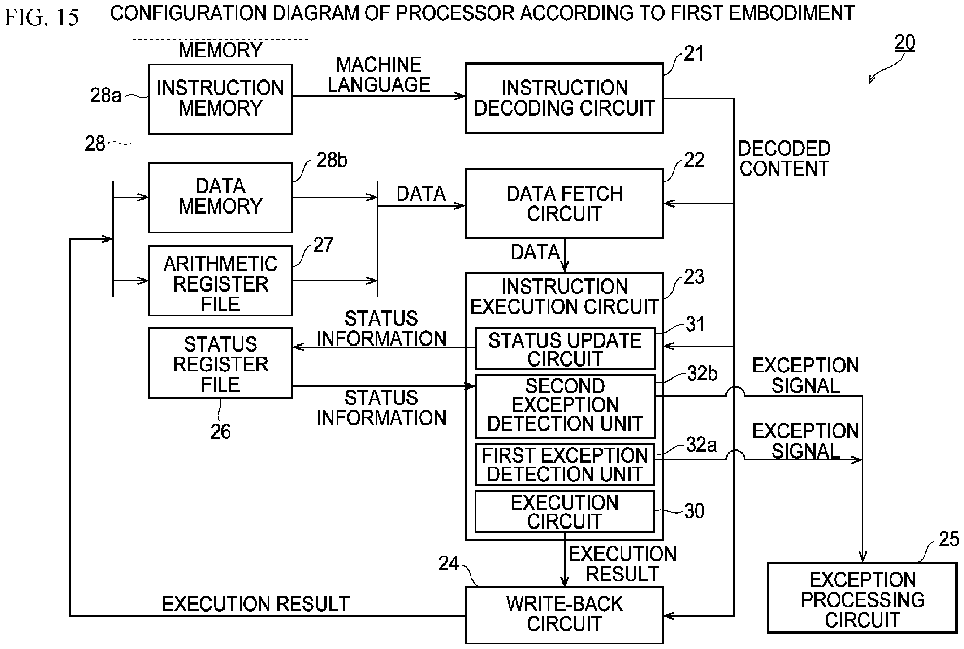

FIG. 15 is a configuration diagram of a processor according to a first embodiment. As illustrated in FIG. 15, a processor 20 includes an instruction decoding circuit 21, a data fetch circuit 22, an instruction execution circuit 23, a write-back circuit 24, an exception processing circuit 25, a status register file 26, and an arithmetic register file 27.

Further, a memory 28 having an instruction memory 28a and a data memory 28b is provided outside the processor 20. Among these, the instruction memory 28a is a memory that stores an instruction sequence of the machine language executed by the processor 20. And the data memory 28b is a memory that stores data used during the execution of the instruction.

The arithmetic register file 27 hardware including the general-purpose registers xn (n = 0,1,2, ..., 31) and the vector registers vn (n = 0,1,2, ..., 31) illustrated in FIGs. 1 and 2.

Further, the status register file 26 is hardware including a plurality of registers storing status information indicating a status of each of the general-purpose register xn (n = 0,1,2, ..., 31) and the vector register vn (n = 0,1,2, ..., 31).

On the other hand, the instruction execution circuit 23 is a circuit that executes an instruction stored in the instruction memory 28a, and includes an execution circuit 30, a status update circuit 31, a first exception detection unit 32a, and a second exception detection unit 32b. The instruction is executed in this processor 20 as follows.

First, the instruction decoding circuit 21 reads the instruction of the machine language at an address specified by a program counter (not illustrated) among addresses of the instruction memory 28a.

Then, the instruction decoding circuit 21 decodes the instruction and outputs the decoded contents to each of the data fetch circuit 22, the instruction execution circuit 23, and the write-back circuit 24. The decoding contents include a type of the instruction, the respective indexes of the source register and the destination register, a data size of the element of the source register, and a data type of the source register.

For example, consider a case of decoding an instruction corresponding to "vfadd v2.s, v0.s, v1.s" of the assembly language. In that case, the instruction decoding circuit 21 identifies the type of the instruction as "vfadd" by decoding the machine language read from the instruction memory 28a. By decoding the machine language read from instruction memory 28a, the instruction decoding circuit 21 identifies the source registers of the vfadd instruction as "v0" and "v1" and the destination register as "v2".

Furthermore, based on a bit sequence of the read machine language, the instruction decoding circuit 21 identifies that the size of the element in the first source register "v0" is "s" and the size of the element in the second source register "v1" is "s".

Then, since the type "vfadd" of the instruction is an arithmetic targeting the floating point as described above, the instruction decoding circuit 21 identifies the data type of the source register as the floating point based on the type "vfadd" of the instruction. Here, when the type of the instruction is "add", the instruction decoding circuit 21 identifies the data type of the source register as a signed integer.

Next, the data fetch circuit 22 reads data from any one of the arithmetic register file 27 and the data memory 28b based on the decoded contents, and outputs it to the instruction execution circuit 23.

For example, in the above-mentioned example of "vfadd v2.s, v0.s, v1.s", a register is specified in each of the first and second operands. Therefore, in this case, the data fetch circuit 22 reads the data in each of the vector registers v0 and v1 included in the arithmetic register file 27 and outputs the data to the instruction execution circuit 23.

When the machine language decoded by the instruction decoding circuit 21 is "load x0, address 1", the data fetch circuit 22 reads the data at "address 1" among the addresses in the data memory 28b. The data fetch circuit 22 then outputs the read data to the instruction execution circuit 23.

Subsequently, each of the first exception detection unit 32a and the second exception detection unit 32b in the instruction execution circuit 23 detects whether an exception is generated by executing the instruction.

Among these, the second exception detection unit 32b is a circuit that detects the exception caused by the description error of the assembly language. In the present embodiment, the second exception detection unit 32b detects the exception based on the status information stored in the status register file 26 and the decoded contents output by the instruction decoding circuit 21 as described later. The details of the detection method and the status information will be described later.

On the other hand, the first exception detection unit 32a is a circuit that detects the exception unrelated to the description error of the assembly language. Such exceptions include an exception when an unimplemented instruction is executed and an exception when division by zero is executed.

Here, if the first exception detection unit 32a or the second exception detection unit 32b detects the exception, these exception detection circuits generate an exception signal and output it to the exception processing circuit 25. The exception processing circuit 25 is a circuit that performs processing according to the exception signal.

On the other hand, when neither the first exception detection unit 32a nor the second exception detection unit 32b detects the exception, the status update circuit 31 updates the status information in the status register file 26.

At the same time, the execution circuit 30 executes the instruction, and the execution result is output to the write-back circuit 24. At this time, the execution circuit 30 identifies the type of the instruction included in the decoded contents output by the instruction decoding circuit 21, and performs the arithmetic according to the type of the instruction.

For example, in the above-mentioned example of "vfadd v2.s, v0.s, v1.s", the execution circuit 30 identifies the instruction type as "vfadd". Then, the execution circuit 30 adds the data of the respective vector registers v0 and v1 to each other, and outputs the value obtained by the addition to the write-back circuit 24.

Subsequently, the write-back circuit 24 writes back the execution result of the instruction to either the arithmetic register file 27 or the data memory 28b. The write-back circuit 24 determines which of these the execution result is written back according to the type of the instruction included in the decoded contents output by the instruction decoding circuit 21.

For example, consider the above-mentioned example of "vfadd v2.s, v0.s, v1.s". In this example, "Vfadd" is an instruction that writes back the execution result to the destination register. Therefore, the write-back circuit 24 writes back a value obtained by adding the data of the vector register v0 and the vector register v1 to the vector register v2 in the arithmetic register file 27.

When an opcode decoded by the instruction decoding circuit 21 indicates a store instruction, the write-back circuit 24 writes the execution result back to the data memory 28b. This completes the execution of one instruction.

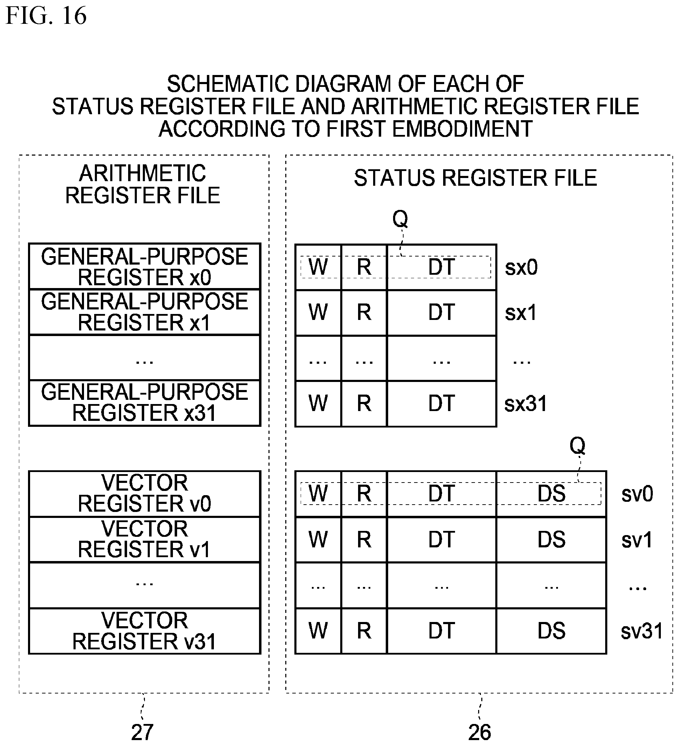

FIG. 16 is a schematic diagram of each of the status register file 26 and the arithmetic register file 27.

As illustrated in FIG. 16, the arithmetic register file 27 is a register file including general-purpose registers xn (n = 0,1,2, ..., 31) and vector registers vn (n = 0,1,2, ..., 31). The size of these registers is not particularly limited. In the present embodiment, the size of the general-purpose register xn (n = 0,1,2, ..., 31) is 64 bits, and the size of the vector register vn (n = 0,1,2, ..., 31) is 128 bits.

On the other hand, the status register file 26 is a hardware including status registers sxn (n=0,1,2,..., 31) corresponding to the general-purpose registers xn (n=0,1,2,..., 31), respectively. Further, the status register file 26 also includes status registers svn (n = 0,1,2, ..., 31) corresponding to the vector registers vn (n = 0,1,2, ..., 31).

Among these, the status registers sxn(n=0,1,2,..., 31) corresponding to the general-purpose registers xn(n=0,1,2,..., 31) are registers for storing status information Q of the general-purpose registers xn(n=0,1,2,..., 31). The status information Q is information indicating the status of the general-purpose register xn (n = 0,1,2, ..., 31), and includes a first flag W, a second flag R, and type information DT.

Among these, the first flag W is 1-bit data indicating whether the general-purpose register xn (n = 0,1,2, ..., 31) has been used as the destination register before the execution circuit 30 executes the instruction. For example, consider a case where the general-purpose register x0 has been used as the destination register. In this case, the first flag W of the status information Q stored in the status register sx0 is "1". If the general-purpose register x0 has not been used as the destination register yet, the first flag W is "0".

The second flag R is 1-bit data indicating whether the general-purpose register xn (n = 0,1,2, ..., 31) has been used as the source register before the instruction execution circuit 23 executes the instruction. For example, when the general-purpose register x0 has been used as the source register, the second flag R in the status register sx0 becomes "1", and if not, the second flag R becomes "0".

The type information DT is data indicating the data type of the data stored in the general-purpose register xn. There are four types of data types: signed integer, unsigned integer, floating point, and indefinite. The type information DT is 2-bit information that uniquely identifies each of these four types of data types.

On the other hand, the status register svn (n=0,1,2,..., 31) corresponding to the vector register vn is a register that stores the status information Q of the vector register vn (n=0,1,2,..., 31). This status information Q is information indicating the status of the vector register vn (n = 0,1,2, ..., 31), and includes size information DS in addition to the above-mentioned first flag W, the second flag R, and the type information DT.

The size information DS is information indicating the size of the element of the vector data stored in the vector register vn (n=0,1,2,..., 31). As described with reference to FIG. 2, the size of the element includes 6 types of "x (128 bits)", "d (double word)", "s (single word)", "h (half word)", "b (byte)" and indefinite. The size information DS is 3-bit information for uniquely identifying these five types of sizes.

The above-mentioned status information Q is updated by the status update circuit 31 (see FIG. 15) when the execution circuit 30 normally executes the instruction without detecting exceptions by both the exception detection units 32a and 32b. The status information Q is updated as follows, based on the index of each register and the type of the instruction which are included in the decoded contents.

For example, when the execution circuit 30 executes the instruction in which the source register is specified in the operand, the status update circuit 31 identifies the index of the source register from the decoded contents. Then, the status update circuit 31 sets "1" in the second flag R of the register having the identified index among the status registers sxn and svn (n = 0,1,2, ..., 31).

Further, when the execution circuit 30 executes the instruction in which the destination register is specified in the operand, the status update circuit 31 identified the index of the destination register from the decoded contents. Then, the status update circuit 31 sets "1" to the first flag W of the register having the identified index among the status registers sxn and svn (n = 0,1,2, ..., 31). Further, in this case, the status update circuit 31 sets the second flag R of the status register to "0". This will set the destination register to a state where it has not yet been used as the source register since data was written to it.

Further, when the execution circuit 30 executes the instruction in which the destination register is specified in the operand, the status update circuit 31 updates the type information DT of the destination register. For example, consider a case where the execution circuit 30 executes an instruction "add x2, x0, x1". In this case, the status update circuit 31 identifies the type of the instruction as "add" and the index of the destination register as "2" based on the decoded contents. This add instruction is a signed 64-bit integer addition instruction, and the signed integer is stored in the general-purpose register x2 of the destination register by the execution of the instruction. Therefore, in this case, the status update circuit 31 updates the status information Q so that the type information DT stored in the status register sx2 with an index "2" indicates the signed integer. Even when the vector register vn (n = 0,1,2, ..., 31) is specified in the destination register, the status update circuit 31 updates the status information Q in the same manner as the above.

In this way, when the execution circuit 30 executes an instruction to write data to the register, the status update circuit 31 updates the type information DT corresponding to the register so that the type information DT indicates the data type of the data as the arithmetic target by the instruction.

Further, the status update circuit 31 updates the size information DS of the destination register when the execution circuit 30 executes the instruction in which the vector register is specified as the destination register in the operand. For example, consider a case where the execution circuit 30 executes an instruction "vadd v3.s, v0.s, v1.s". In this case, the status update circuit 31 identifies the index and the data size of the destination register as "3" and single word "s", respectively, based on the decoded contents. Then, the status update circuit 31 updates the status information Q so that the size information DS stored in the status register sv3 with the index "3" indicates a single word.

In this way, when the execution circuit 30 executes the instruction to write data to the vector register, the status update circuit 31 updates the size information DS corresponding to the register so as to indicate the data size of the written data.

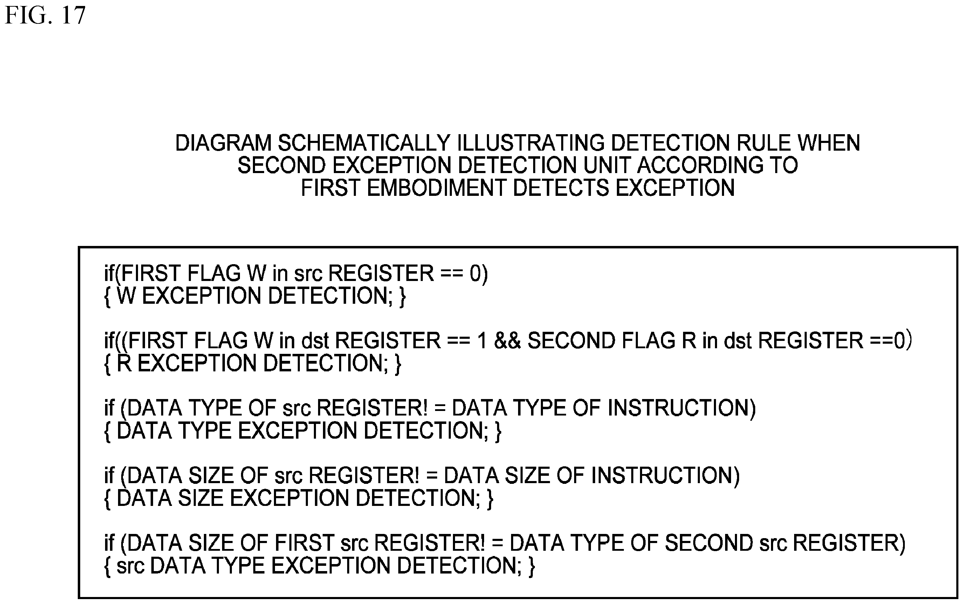

Next, the exception detected by the second exception detection unit 32b will be described. FIG. 17 is a diagram schematically illustrating a detection rule when the second exception detection unit detects the exception.

The types of exceptions detected by the second exception detection unit 32b include "W exception", "R exception", "data type exception", "data size exception", and "src data type exception".

Among these, the W exception is an exception that occurs when the source register of the instruction has not been used as the destination register in the past, and occurs when there is a description error in the third example of FIG. 14.

The W exception can be detected by using the first flag W described above. For example, if the first flag W of the source register is "0", it means that the source register has not been used as the destination register in the past. Therefore, the second exception detection unit 32b detects that the W exception has occurred when the first flag W is "0".

The R exception is an exception when a register to which the preceding instruction has written data is used as the destination register by the succeeding instruction, but all instructions between the preceding instruction and the succeeding instruction do not use the register as the source register. This R instruction occurs when there is a description error in the fourth example of FIG. 14.

The R exception can be detected by using the first flag W and the second flag R described above. For example, if the destination register of the instruction has been used as the destination register by another instruction in the past, the first flag W becomes "1". If the destination register has not been used as the source register in the succeeding instruction, the second flag R becomes "0". Therefore, the second exception detection unit 32b detects that the R exception has occurred when the first flag W is "1" and the second flag R is "0".

Then, the data type exception is an exception that occurs when the data type as the arithmetic target by the instruction does not match the data type of the data actually written in the source register, and occurs when there is a description error in the first example of FIG. 14.

The data type exception can be detected using the type information DT described above. For example, when the data type indicated by the type information DT does not match the data type as the arithmetic target by the instruction, the second exception detection unit 32b detects that the data type exception has occurred.

On the other hand, the data size exception is an exception that occurs due to the description error in the second example of FIG. 14. The data size exception occurs when the data size of the data written in the register by the preceding instruction is different from the data size of the source register specified in the succeeding instruction using the register as the source register.

This data size exception can be detected by using the size information DS described above. For example, when the data size specified in the source register of a certain instruction and the data size indicated by the size information DS corresponding to the source register do not match, the second exception detection unit 32b detects that the data size exception has occurred.

The src data type exception is an exception that occurs when there is a description error in the fifth example of FIG. 14. The src data type exception occurs when the data types of the two source registers do not match in an instruction that assumes that the data types of the two source registers are the same.

The src data type exception can also be detected using the type information DT described above. For example, in an instruction that assumes that the data types of the two source registers are the same, the second exception detection unit 32b detects the src data type exception when the data types of the type information DT of the respective source registers do not match each other.

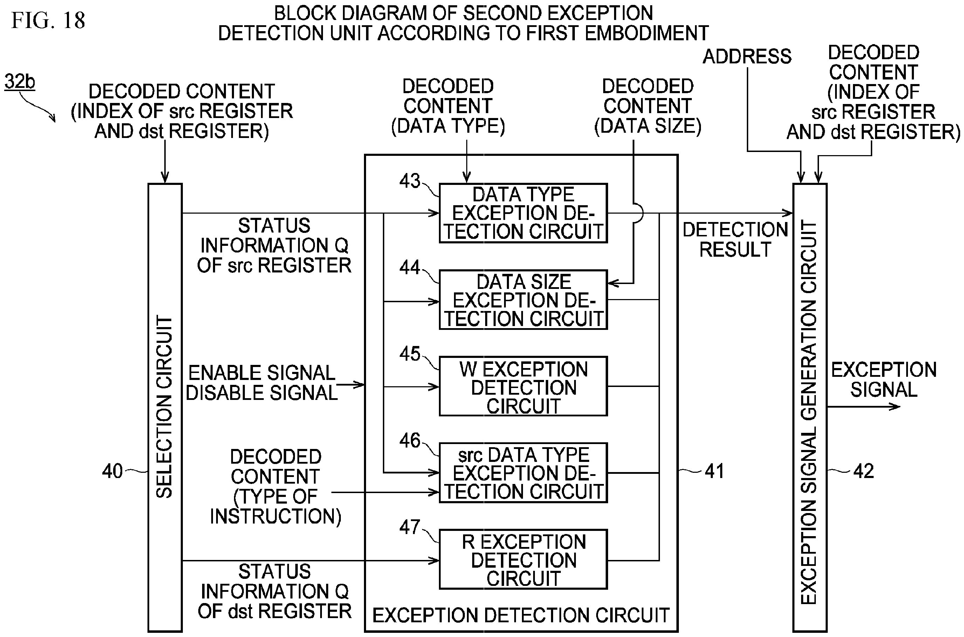

FIG. 18 is a block diagram of the second exception detection unit 32b. As illustrated in FIG. 18, the second exception detection unit 32b includes a selection circuit 40, an exception detection circuit 41, and an exception signal generation circuit 42.

Among these, the selection circuit 40 acquires the indexes of the source register and the destination register from the decoding contents output by the instruction decoding circuit 21. Then, the selection circuit 40 selects the registers corresponding to the acquired indexes from the general-purpose registers xn (n = 0,1,2, ..., 31) and the vector registers vn (n = 0,1,2, ..., 31).

And, the exception detection circuit 41 is a circuit that detects various exceptions. In this example, the exception detection circuit 41 includes a data type exception detection circuit 43, a data size exception detection circuit 44, a W exception detection circuit 45, a src data type exception detection circuit 46, and an R exception detection circuit 47.

Among these, the data type exception detection circuit 43 is a circuit that detects the data type exception. In order to detect the data type exception, the data type exception detection circuit 43 acquires the data type expected to be stored in the source register from the decoding contents output by the instruction decoding circuit 21. Further, the data type exception detection circuit 43 acquires the status information Q corresponding to the source register via the selection circuit 40.

Then, the data type exception detection circuit 43 determines whether the data type indicated by the type information DT of the status information Q matches the data type of the source register acquired from the instruction decoding circuit 21. When it is determined that they do not match, the data type exception detection circuit 43 outputs a detection result that the data type exception has been detected to the exception signal generation circuit 42.

The data size exception detection circuit 44 is a circuit that detects the data size exception. In order to detect the data size exception, the data size exception detection circuit 44 acquires the data size of the element of the vector data expected to be stored in the source register based on the decoding content output by the instruction decoding circuit 21. Further, the data size exception detection circuit 44 acquires the status information Q corresponding to the source register via the selection circuit 40.

Then, the data size exception detection circuit 44 determines whether the size indicated by the size information DS of the status information Q matches the size of the source register acquired from the instruction decoding circuit 21. When it is determined that they do not match, the data size exception detection circuit 44 outputs a detection result that the data size exception has been detected to the exception signal generation circuit 42.

Further, the W exception detection circuit 45 is a circuit that detects the W exception. In order to detect the W exception, the W exception detection circuit 45 acquires the status information Q corresponding to the source register of the instruction via the selection circuit 40.

Then, the W exception detection circuit 45 outputs a detection result that the W exception has been detected to the exception signal generation circuit 42 when the first flag W in the status information Q is "0".

Further, the src data type exception detection circuit 46 acquires the type of the instruction included in the decoded contents from the instruction decoding circuit 21. Then, the src data type exception detection circuit 46 determines whether the instruction assumes that the data types stored in the two source registers are the same, based on the type of the instruction.

At this time, when it is determined that the data types are the same, the src data type exception detection circuit 46 acquires the status information Q corresponding to each of the two source registers of the instruction via the selection circuit 40.

Further, the src data type exception detection circuit 46 determines whether the type information DT in the status information Q matches each other in the two source registers. Then, when both type information DT do not match, the src data type exception detection circuit 46 outputs a detection result that the src data type exception has been detected to the exception signal generation circuit 42.

The R exception detection circuit 47 is a circuit that detects the R exception. In order to detect the R exception, the R exception detection circuit 47 acquires the status information Q corresponding to the source register of the instruction and the status information Q corresponding to the destination register of the instruction via the selection circuit 40. Then, the R exception detection circuit 47 identifies the first flag W of the status information Q corresponding to the destination register and the second flag R of the status information Q corresponding to the source register. Further, the R exception detection circuit 47 outputs a detection result that the R exception has been detected to the exception signal generation circuit 42 when the first flag W is "1" and the second flag R is "0".

The exception detection circuit 41 does not detect the exception when it receives a disable signal described later from the execution circuit 30. Further, when an enable signal described later is received from the execution circuit 30, the exception detection circuit 41 detects the exception as described above.

The exception signal generation circuit 42 outputs the exception signal according to the detection result of the exception detection circuit 41. The exception signal includes a type of the exception, an address of the instruction, and an index of the register.

Among these, the types of exceptions include "data type exception", "data size exception", "W exception", "src data type exception", and "R exception". For example, when the data type exception detection circuit 43 outputs a detection result that the exception has been detected, the exception signal includes "data type exception" as the type of the exception.

The address of the instruction is an address of the instruction in which the exception occurred. For example, the exception signal generation circuit 42 acquires the address held by the instruction decoding circuit 21, so that the exception signal generation circuit 42 can include the address of the instruction in the exception signal.

The index of the register is an index of the register specified in the operand of the instruction in which the exception occurred. For example, the exception signal generation circuit 42 acquires the indexes of the source register and the destination register from the decoding contents output by the instruction decoding circuit 21, so that it can include the indexes in the exception signal.

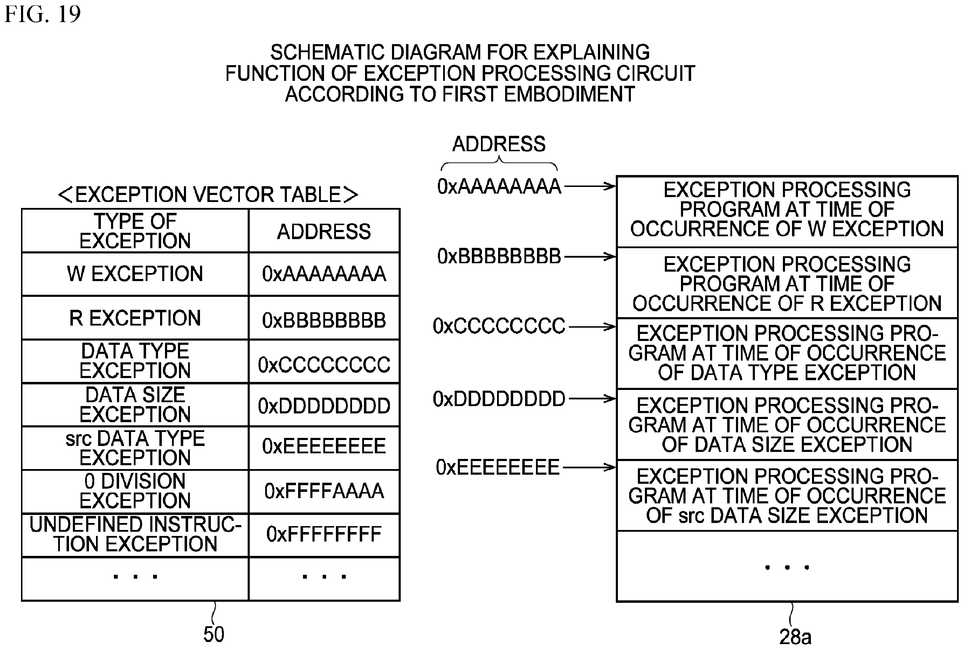

Next, the function of the exception processing circuit 25 which is an output destination of the exception signal will be described. FIG. 19 is a schematic diagram for explaining the function of the exception processing circuit 25.

Upon receiving the exception signal, the exception processing circuit 25 instructs each of the instruction decoding circuit 21, the data fetch circuit 22, the instruction execution circuit 23, and the write-back circuit 24 to stop the execution of the instruction currently being executed.

Then, the exception processing circuit 25 refers to an exception vector table 50 stored in the memory 28, and identifies a jump destination address corresponding to the type of the exception included in the received exception signal. In the example of FIG. 19, the address of the instruction memory 28a of the jump destination of the W exception is set to "0xAAAAAAAA", and the jump destination address of the R exception is set to "0xBBBBBBBB". The instruction memory 28a at these addresses stores in advance an exception processing program to be executed according to the type of the exception.

After that, the exception processing circuit 25 notifies the instruction decoding circuit 21 of the identified jump destination address. Then, the instruction decoding circuit 21 fetches the instruction at the notified address. Thereby, the instruction execution circuit 23 executes the exception processing program according to the type of the exception.

According to the processor 20 described above, the exception detection circuit 41 detects the exception according to the detection rule in FIG. 17 using the status information Q stored in the status registers sxn and svn (n=0,1,2,..., 31). Thereby, when the assembly has the description error, the exception detection circuit 41 detects the exception, and the developer can notice that the assembly program has the description error based on the exception. As a result, the developer can easily debug the assembly program, and the efficiency of program development can be improved.

Moreover, since the processor 20 detects the exception caused by the description error in this way, the time for wastefully executing a program having the description error by the processor 20 can be reduced, and the wasteful consumption of hardware resources such as the processor 20 and the memory 28 can be improved.

Further, the status information Q includes the first flag W, the second flag R, the type information DT, and the size information DS. By applying this information to the detection rule of FIG. 17, the exception detection circuit 41 can detect "R exception", "W exception", "data type exception", "data size exception", and "src data type exception". Therefore, depending on which of these exceptions is detected, the developer can identify a specific type of the description error in the assembly.

By the way, a subroutine call or a context switch by the OS (Operating System) may occur during the execution of the program. In this case, it is necessary to save the data in each of the general-purpose register xn and the vector register vn to the data memory 28b in order to prevent data of the registers from being overwritten by the called subroutine or another context. Then, when returning to the processing of the original routine, the data saved in the data memory 28b is restored to each of the general-purpose register xn and the vector register vn so that the program can be restarted from a position where the processing was interrupted.

In the present embodiment, it is preferable to also save and restore the status information Q stored in the status register sxn, which is used in association with the general-purpose register xn. For the same reason, it is preferable to save and restore the status information Q for the status register svn.

Therefore, next, instructions that can save and restore the status information Q stored in the respective status registers sxn(n=0,1,2,..., 31) and svn(n=0,1,2,..., 31) will be described.

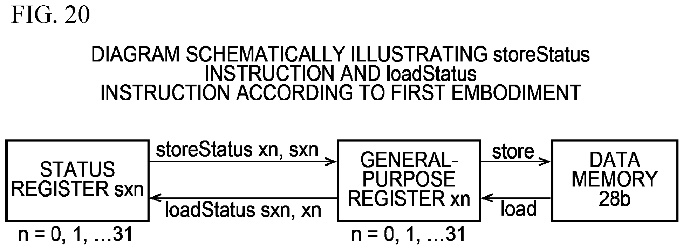

FIG. 20 is a diagram schematically illustrating a storeStatus instruction and a loadStatus instruction according to the present embodiment.

The storeStatus instruction is an example of the first store instruction, and an instruction that saves the status information Q stored in the status register sxn (n = 0,1,2, ..., 31) to the general-purpose register xn (n = 0,1,1). Here, one of the general-purpose registers xn (n = 0,1,2, ..., 31) is specified as the destination register in a first operand of the storeStatus instruction. Then, one of the status registers sxn (n = 0,1,2, ..., 31) is specified as the source register in a second operand of the storeStatus instruction.

The execution circuit 30 executes this storeStatus instruction, so that the status information Q included in the status register sxn (n = 0,1,2, ..., 31) is stored in the general-purpose register xn (n = 0,1,2, ..., 31).

Here, the indexes of the source register and the destination register do not have to be the same, and the status information Q may be moved between the registers having different indexes.

In order to store the status information Q stored in one of the general-purpose registers xn (n=0,1,2,..., 31) in the data memory 28b by the storeStatus instruction, the store instruction may be used to store the data in the general-purpose register xn (n=0,1,2,..., 31) into the data memory.

The execution circuit 30 executes the storeStatus instruction and the store instruction in this way, so that the status information Q of the status register sxn (n = 0,1,2, ..., 31) can be saved to the data memory 28b.

On the other hand, the loadStatus instruction is an example of a first load instruction, and an instruction that writes the status information Q stored in the general-purpose register xn (n = 0,1,2, ..., 31) to the status register sxn (n = 0,1,2, ..., 31).

Here, one of the status registers sxn (n = 0,1,2, ..., 31) is specified as the destination register in the first operand of the loadStatus instruction. Then, one of the general-purpose registers xn (n = 0,1,2, ..., 31) is specified as the source register in the second operand of the loadStatus instruction.

The execution circuit 30 (see FIG. 15) executes this loadStatus instruction, so that the status information Q stored in the general-purpose register xn (n = 0,1,2, ..., 31) is written to the status register sxn (n = 0,1,2, ..., 31).

As with the storeStatus instruction, also in the loadStatus instruction, the indexes of the source register and the destination register do not have to be the same, and the status information Q may be moved between the registers having different indexes.

Here, in order to store the status information Q saved in the data memory 28b into one of the general-purpose registers xn (n = 0,1,2, ..., 31), the load instruction for writing the data in the data memory 28b to the general-purpose register may be used.

The execution circuit 30 (see FIG. 15) executes the storeStatus instruction and loadStatus instruction as described above, so that the status information Q can be saved and restored between the status register sxn (n = 0,1,2, ..., 31) and the data memory 28b.

In this example, the status register sxn (n = 0,1,2, ..., 31) is specified in each operand of the storeStatus instruction and the loadStatus instruction. Alternatively, the status register svn (n = 0,1,2,..., 31) may be specified. Similarly, the vector register vn (n=0,1,2,..., 31) may be used in place of the general-purpose register xn (n=0,1,2,..., 31) specified in the operands of each of the storeStatus and loadStatus instructions.

By the way, in the example in FIG. 20, the saving and the restoration of the status information Q between the data memory 28b and the status register sxn (n=0,1,2,..., 31) was performed via the general-purpose register xn (n=0,1,2,..., 31).

Instead of saving and restoring the status information Q via the general-purpose register xn (n=0,1,2,..., 31) in this way, the status information Q may be saved and restored directly between the status register sxn (n=0,1,2,..., 31) and the data memory 28b by using the following instruction.

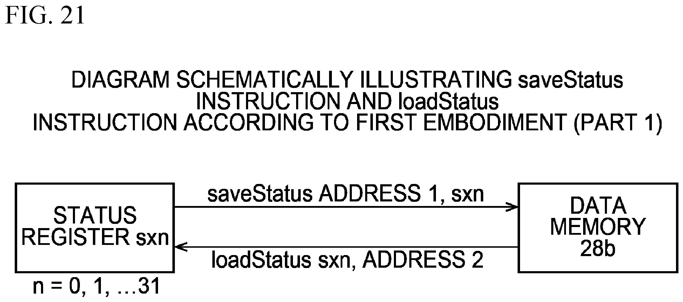

FIG. 21 is a diagram schematically illustrating the storeStatus instruction and the loadStatus instruction according to the first embodiment (part 1).

The saveSatus instruction is an example of a second store instruction, and is an instruction that stores the status information Q stored in the status register sxn (n = 0,1,2, ..., 31) into the data memory 28b.

Here, the address is specified in the first operand of the saveStatus instruction and the status register sxn (n=0,1,2,..., 31) is specified in the second operand thereof. The execution circuit 30 executes this saveStatus instruction, so that the status information Q in the status register sxn (n=0,1,2,..., 31) of the second operand is stored in the data memory 28b at the address of the first operand.

The status information Q stored in the data memory 28b can be stored in the status register sxn (n=0,1,2,..., 31) by using the loadStatus instruction.

However, in order to distinguish it from the loadStatus instruction that transfers the data between registers as illustrated in FIG. 20, the loadStatus instruction is described here in a format different from that of FIG. 20. In the example of FIG. 21, the status register sxn (n = 0,1,2, ..., 31) is specified in the first operand of the loadStatus instruction, and the address is specified in the second operand. The execution circuit 30 executes the loadStatus instruction in this format, so that the status information Q of the data memory 28b at the address of the second operand is written to the status register sxn (n=0,1,2,..., 31) in the first operand. The loadStatus instruction that adopts this format is an example of a second load instruction.

When the execution circuit 30 executes the saveStatus and loadStatus instructions in this way, the status information Q can be saved and restored without through the general-purpose register xn (n=0,1,2,..., 31), thus speeding up an execution speed of the program.

In the examples of FIGs. 20 and 21, only one register is used for saving and restoring the status information Q. However, it may be convenient to save and restore the status information in all registers at once, as follows.

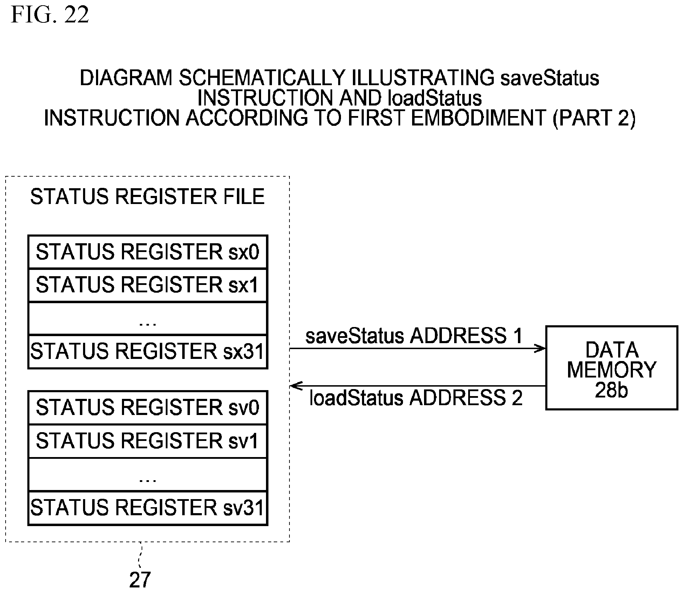

FIG. 22 is a diagram schematically illustrating the storeStatus instruction and the loadStatus instruction according to the first embodiment (part 2).

Unlike the format of the saveStatus instruction that takes two operands in FIG. 21, in this example, the developer writes the saveStatus instruction to take only one operand. The execution circuit 30 executes this saveStatus instruction, so that all status information Q stored in all status registers sxn and svn (n=0, 1, ...31) are stored in the data memory 28b at the address of the operand at once. This saveStatus instruction is an example of a third store instruction.

On the other hand, the loadStatus instruction is also described so as to take only one operand that specifies an address, unlike the format that takes the two operands as illustrated in FIG. 21. The execution circuit 30 executes this loadStatus instruction, so that all status information Q in the data memory 28b at the specified address is written to the corresponding status registers sxn and svn (n=0, 1, ...31) at once, respectively. This loadStatus instruction is an example of a third load instruction.

There is no particular limitation on which of the instructions in FIG.s 20 to 22 is used to save and restore the status information Q. However, in the case of context switches, it is preferable for the developer to decide which instruction to use based on the ABI (Application Binary Interface). The ABI is a convention that defines for each processor which registers are to be saved and restored under the responsibility of a calling side (caller) of the subroutine and which registers are to be saved and restored under the responsibility of a called side (callee).

For example, if the processor 20 conforms to the ARMv8-A architecture, the callee side is defined to save and restore the data in each of the general-purpose registers x19 to x28 and the vector registers v8 to v15. According to this convention, the status information Q stored in the status registers sx19 to sx28 and sv8 to sv15 corresponding to these registers are also saved and restored in conjunction with the saving and the restoration of the data. In this case, if the instruction is used to save and restore between all status registers and data memory 28b as illustrated in FIG. 22, it is necessary to process even the data of the register that does not need to be saved or restored, which reduces the execution speed of the program. Therefore, in the case of subroutine calls, it is preferable to use instructions to save and restore for each status register sxn and svn (n=0, 1, ...31) to improve the execution speed of the program as illustrated in FIGs. 20 and 21.

On the other hand, in the case of the context switches of OS, the saving and the restoration are performed for data in all general-purpose registers x0 to x31 and all vector registers v0 to v31. Therefore, in the case of the context switches, it is preferable to use instructions to save and restore between all status registers and the data memory 28b to reduce the code size of the program, as illustrated in FIG. 22.

By the way, in the processor 20, the exception signal generation circuit 42 outputs the exception signal for the description error in the source code of the assembly language written by the developer himself as described above. In some cases, the exception signal may not be necessary.

For example, the source code of the assembly language output by the compiler, rather than the source code of the assembly language written manually by the developer, may include a meaningless instruction due to insufficient compiler optimization. If the exception detection circuit 41 detects the exception to the meaningless instruction, the exception will be detected even when the purpose is not to detect errors originating from manual operations, which is troublesome because of over-detection of exceptions.

Therefore, in the present embodiment, the function of the exception detection circuit 41 is suppressed as follows.

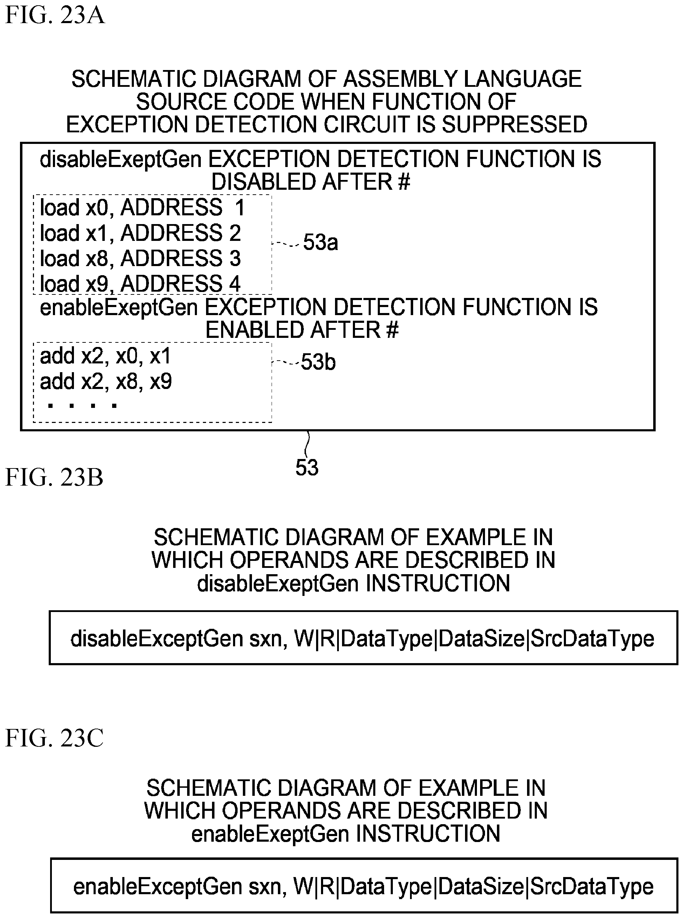

FIG. 23A is a schematic diagram of a source code of the assembly language when the function of the exception detection circuit 41 is suppressed.

In this source code 53, the developer writes the disableExeptGen instruction before the instruction sequence 53a in which he does not want to detect the exception. Then, the developer describes the enableExeptGen instruction after the instruction sequence 53a. The disableExeptGen instruction is an example of a disable instruction, and the enableExeptGen instruction is an example of an enable instruction.

When the execution circuit 30 executes the disableExeptGen instruction, the execution circuit 30 notifies the exception detection circuit 41 (see FIG. 18) of the disable signal. The disable signal is a signal that disables the function of the exception detection circuit 41 that detects the exception. Therefore, the exception detection circuit 41 that has received the disable signal does not detect the exception in the instruction sequence 53a. As a result, even if the instruction sequence 53a includes the description error that causes the exception, the exception signal generation circuit 42 does not generate the exception signal.

Further, when the execution of the instruction sequence 53a is completed and the execution circuit 30 executes the enableExeptGen instruction, the execution circuit 30 notifies the exception detection circuit 41 of the enable signal. The enable signal is a signal that enables the function of the exception detection circuit 41 that detects the exception. Therefore, the exception detection circuit 41 that receives an enable notification detects the exception in the succeeding instruction of the enableExeptGen instruction. Thereby, when the exception occurs in the instruction sequence 53b following the enableExeptGen instruction, the exception signal generation circuit 42 generates the exception signal.

By using the disableExeptGen and enableExeptGen instructions in this way, it is possible to suppress the occurrence of the exception signal or to resume the occurrence of the exception signal during the execution of instruction sequence 53a.

In addition, the operands may be written in each of the disableExeptGen and enableExeptGen instructions as follows.

FIG. 23B is a schematic diagram of an example in which the operands are described in a disableExeptGen instruction.

In this example, the developer describes one of a plurality of status registers sxn, svn (n = 0,1,2, ..., 31) in the first operand of the disableExeptGen instruction. Then, the developer describes an identifier that identifies each of the plurality of types of the exception in the second operand. Here, the identifier of the W exception is "W", the identifier of the R exception is "R", the identifier of the data type exception is "DataType", the identifier of the data size exception is "DataSize", and the identifier of the src data type exception is "SrcDataType".

When the execution circuit 30 executes the disableExeptGen instruction of this format, the function of the exception detection circuit 41 that detects the exception of the second operand using the status information Q in the status registers sxn and svn of the first operand is disabled. For example, if "disableExeptGen sx0, W|R" is described, the function of detecting the W exception and the R exception using the status information Q stored in the status register sx0 is disabled.

On the other hand, FIG. 23C is a schematic diagram of an example in which the operands are described in an enableExeptGen instruction.

In this example, the developer describes one of the plurality of status registers sxn and svn (n=0, 1, ...31) in the first operand of the enableExeptGen instruction. Then, the developer describes an identifier that identifies each of the plurality of types of the exception in the second operand.

When the execution circuit 30 executes the enableExeptGen instruction in this format, the function of the exception detection circuit 41 that detects the exception of the second operand by using the status information Q in the status registers sxn and svn (n = 0, 1, ... 31) of the first operand is enabled. For example, when "enableExeptGen sx0, W" is described, the function of determining whether to generate the W exception by using the status information Q stored in the status register sx0 is enabled.

By describing the operands in each of the disableExeptGen instruction and the enableExeptGen instruction in this way, the type of the exception to be detected can be selected. Furthermore, the status register that stores the status information Q used to detect the exception can be specified, which improves the convenience of the developer.

### (SECOND EMBODIMENT)

In the present embodiment, a simulation program that simulates the operation of the processor 20 described in the first embodiment will be described.

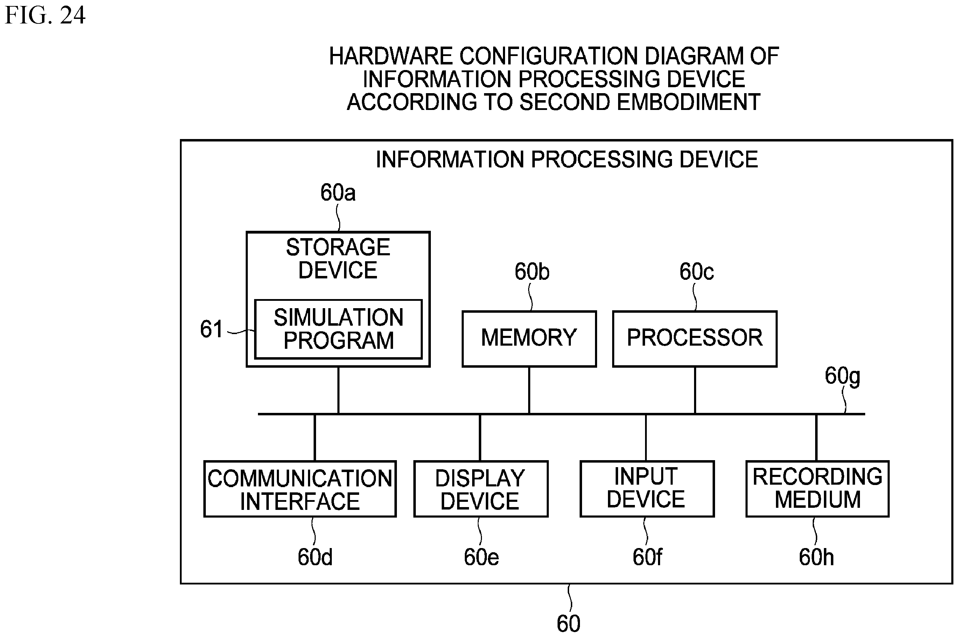

FIG. 24 is a hardware configuration diagram of an information processing device that executes a simulation program.

An information processing device 60 is a computer such as a PC (Personal Computer), and includes a storage device 60a, a memory 60b, a processor 60c, a communication interface 60d, a display device 60e, and an input device 60f. These elements are connected to each other by a bus 60g.

Among these, the storage device 60a is a non-volatile storage such as an HDD or an SSD (Solid State Drive), and stores a simulation program 61 according to the present embodiment.

Here, the simulation program 61 may be recorded on a computer-readable recording medium 60h, and the processor 60c may read the simulation program 61 in the recording medium 60h.

Examples of such a recording medium 60h include physically portable recording media such as a CD-ROM (Compact Disc-Read Only Memory), a DVD (Digital Versatile Disc), and a USB (Universal Serial Bus) memory. Further, a semiconductor memory such as a flash memory, or a hard disk drive may be used as the recording medium 60h. The recording medium 60h is not a temporary medium such as a carrier wave having no physical form.

Further, the simulation program 61 may be stored in a device connected to a public line, an Internet, a LAN (Local Area Network), or the like, and the processor 60c may read and execute the simulation program 61.

Meanwhile, the memory 60b is hardware that temporarily stores data, such as a DRAM, and the simulation program 61 is deployed on the memory 60b.

The processor 60c is hardware such as a CPU (Central Processing Unit) or a GPU (Graphical Processing Unit) that controls each element of the information processing device 60 and executes the simulation program 61 in cooperation with the memory 60b.

Further, the communication interface 60d is an interface for connecting the information processing device 60 to the network such as the LAN.

The display device 60e is hardware such as a liquid crystal display device, and displays various information to the developer. Also, the input device 60f is hardware such as a keyboard and a mouse. For example, the developer outputs various instructions to the information processing device 60 by operating the input device 60f.

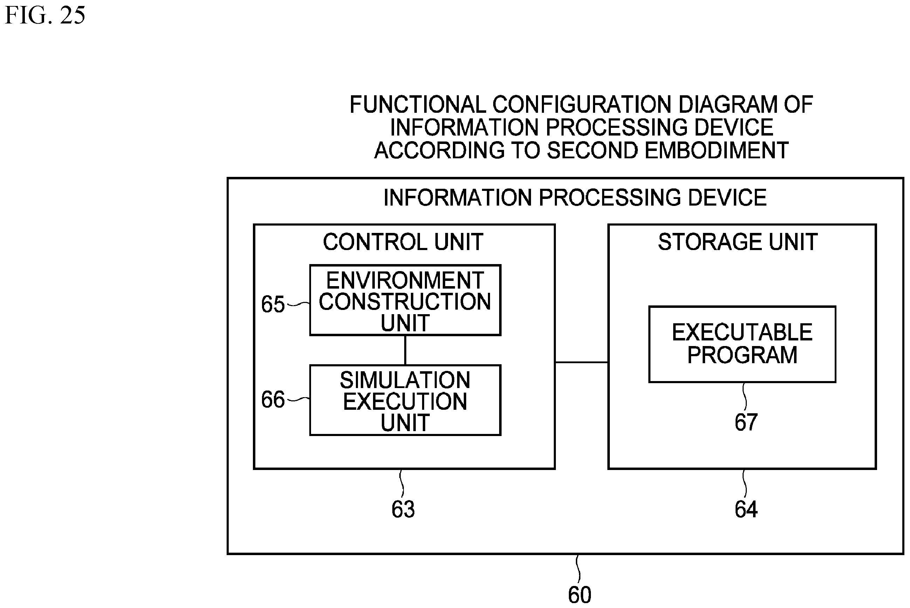

FIG. 25 is a functional configuration diagram of the information processing device 60 when the information processing device 60 executes the simulation program 61.

As illustrated in FIG. 25, the information processing device 60 includes a control unit 63 and a storage unit 64.

Among these, the control unit 63 is a processing unit realized by the processor 60c and the memory 60b executing the simulation program 61. The control unit 63 has an environment construction unit 65 and a simulation execution unit 66.

The environment construction unit 65 is a processing unit that generates a pseudo processor simulating the processor 20. Further, the simulation execution unit 66 is a processing unit that receives an instruction from the developer and executes the simulation with the pseudo processor generated by the environment construction unit 65.

On the other hand, the storage unit 64 is realized by the storage device 60a and the memory 60b, and stores an executable program 67 of the machine language executed by the processor 20 to be simulated (see FIG. 15). The executable program 67 is a program of the machine language obtained by assembling the source code of the assembly language manually written by the developer.

The processor 60c in the information processing device 60 does not have to be the same as the processor 20 to be simulated, and may be a processor that executes an instruction set different from that of the processor 20. Thereby, the operation of the processor 20 can be simulated even when the processor 20 to be simulated is not at hand, and the development efficiency of the executable program executed by the processor 20 is improved.

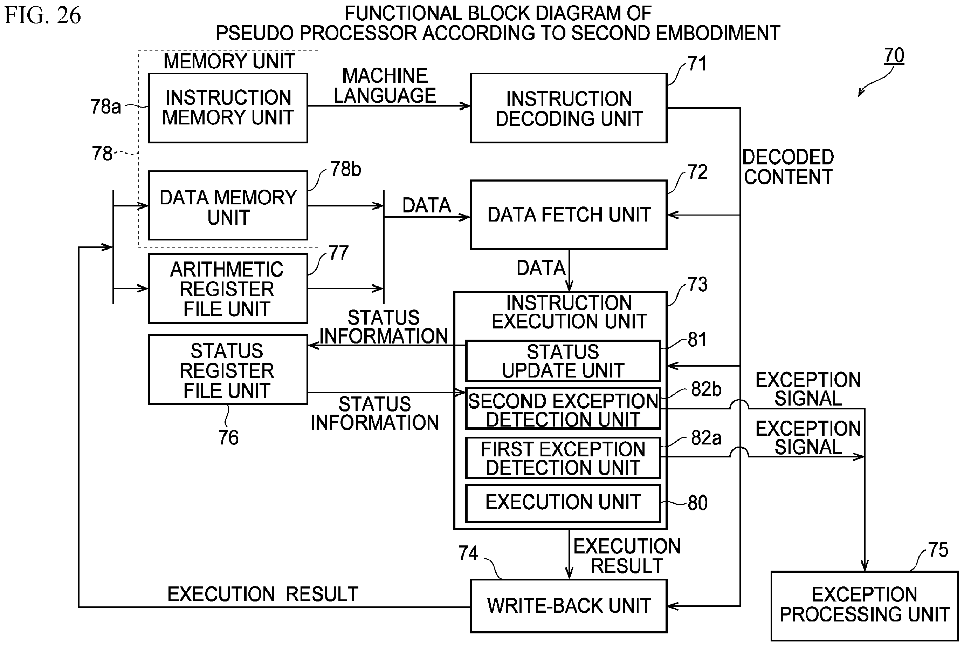

FIG. 26 is a functional block diagram of a pseudo processor 70 generated by the environment construction unit 65.

The pseudo processor 70 includes an instruction decoding unit 71, a data fetch unit 72, an instruction execution unit 73, a write-back unit 74, an exception processing unit 75, a status register file unit 76, and an arithmetic register file unit 77. Further, the pseudo processor 70 has a memory unit 78 including an instruction memory unit 78a and a data memory unit 78b.

Each of these units realizes the functions of each unit of the processor 20 according to the first embodiment by software, and is realized by executing the simulation program 61 in cooperation with the memory 60b and the processor 60c.

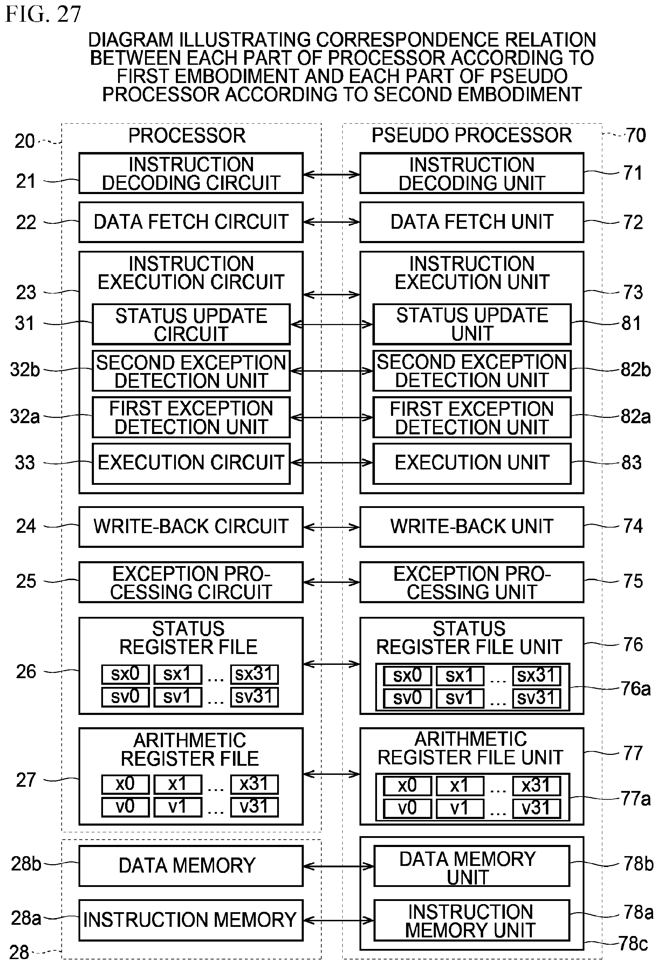

FIG. 27 is a diagram illustrating a correspondence relationship between each unit of the processor 20 according to the first embodiment and each unit of the pseudo processor 70 according to the present embodiment.

In FIG. 27, elements having the same function are indicated by arrows. For example, the instruction decoding unit 71 is a functional block that realizes the instruction decoding circuit 21 by software, and has the same function as the instruction decoding circuit 21.

Further, each unit other than the instruction decoding unit 71 has the same function as the corresponding element in the processor 20. Since the function has been described in the first embodiment, the description thereof will be omitted below.

A specific method for realizing each unit of the pseudo processor 70 by software is not particularly limited. For example, the arithmetic register file unit 77 is realized in a first storage area 77a secured in the memory 60b. The general-purpose register xn (n = 0,1,2, ..., 31) and the vector register vn (n = 0,1,2, ..., 31) of the arithmetic register file unit 77 are realized by the array elements stored in the first storage area 77a, and the indexes of the array elements become the indexes of the respective registers.

Similarly, the status register file unit 76 is realized in a second storage area 76a secured in the memory 60b. The status registers sxn and svn (n = 0,1,2, ..., 31) of the status register file unit 76 are realized by the array elements stored in the second storage area 76a, and the indexes of the array elements become the indexes of the respective status registers.

Further, the memory 28 can be simulated by a third storage area 78c secured in the memory 60b.

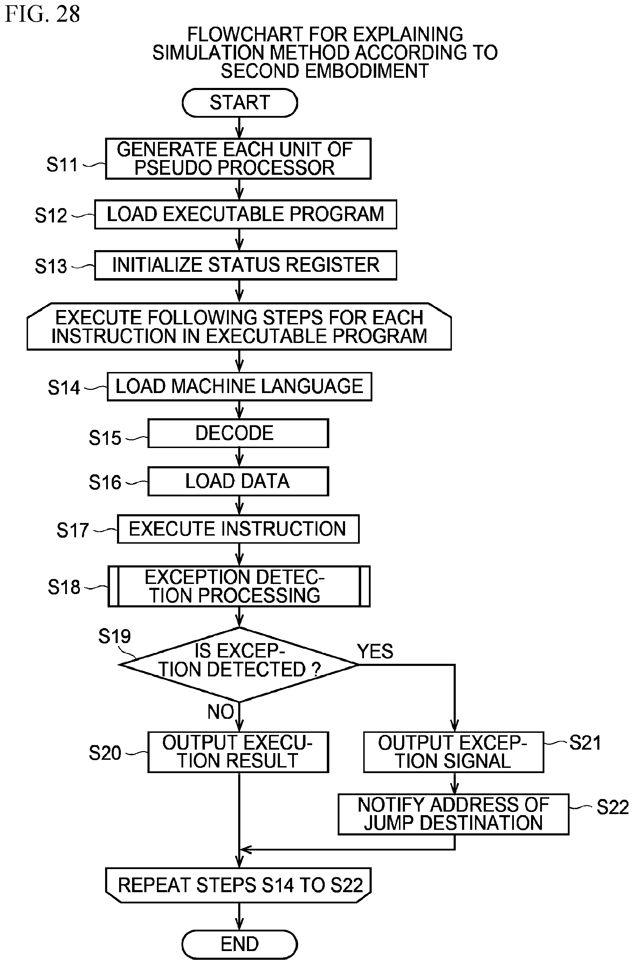

Next, a simulation method according to the present embodiment will be described. FIG. 28 is a flowchart for explaining the simulation method according to the present embodiment.

First, the environment construction unit 65 generates each unit of the pseudo processor 70 (step S11). For example, the environment construction unit 65 secures, in the memory 60b, the first storage area 77a that simulates the general-purpose register xn (n = 0,1,2, ..., 31) and the vector register vn (n = 0,1,2, ..., 31), and the second storage area 76a that simulates the status registers sxn, svn (n = 0,1,2, ..., 31). Further, in order to simulate the memory 28, the environment construction unit 65 secures the third storage area 78c in the memory 60b.

Further, the environment construction unit 65 loads the executable program 67 and stores it in the instruction memory unit 78a (step S12).

Next, the environment construction unit 65 initializes the status register file unit 76 (step S13). For example, the environment construction unit 65 initializes the arrays that simulate the status registers sxn, svn (n = 0,1,2, ..., 31) in the status register file unit 76. For example, each of the W flag and the R flag is set to 0, and each of the data type DT and the data size DS is set to a bit string representing indefiniteness.

Next, the instruction decoding unit 71 reads the instruction of the machine language stored in the instruction memory unit 78a (step S14).

Then, the instruction decoding unit 71 decodes the instruction and outputs the decoded contents to each of the data fetch unit 72, the instruction execution unit 73, and the write-back unit 74 (step S15). The decoding contents include the type of the instruction, the respective indexes of the source register and the destination register, the data size of the element of the source register, the data type of the source register, and the like.

Next, the data fetch unit 72 reads data from any one of the arithmetic register file unit 77 and the data memory unit 78b based on the decoded contents, and outputs the data to the instruction execution unit 73 (step S16).

Next, the execution unit 83 executes the instruction (step S17). Then, the first exception detection unit 82a of the instruction execution unit 73 detects an exception unrelated to the description error of the assembly language (step S18). Such exceptions include the exception when the unimplemented instruction is executed and the exception when division by zero is executed.

Further, in step S18, the second exception detection unit 82b of the instruction execution unit 73 detects the exception caused by the description error of the assembly language. For example, the second exception detection unit 82b detects the exception based on the status information Q in the status register file unit 76 and the decoded contents output by the instruction decoding unit 71. The details of the exception detection processing performed by the second exception detection unit 82b will be described later.

Next, each of the first exception detection unit 82a and the second exception detection unit 82b determines whether the exception has been detected based on the result of the exception detection processing (step S19).

Here, when it is determined that neither the first exception detection unit 82a nor the second exception detection unit 82b has detected the exception (step S19: negation), the execution unit 83 outputs the execution result of the instruction to the write-back unit 74 (step S20).

On the other hand, when it is determined that the first exception detection unit 82a has detected the exception (step S19: affirmative), the first exception detection unit 82a generates the exception signal and outputs it to the exception processing unit 75 (step S20). Also when the second exception detection unit 82b determines that the exception has been detected (step S19: affirmative), the second exception detection unit 82b generates the exception signal and outputs it to the exception processing unit 75 (step S20).

Then, the exception processing unit 75 that has received the exception signal identifies the jump destination address from the exception vector table 50 (see FIG. 19), and notifies the instruction decoding unit 71 of the identified jump destination address (step S21).

After that, steps S14 to S22 are repeated for each instruction of the executable program 67. Then, when S14 to S22 are completed for all the instructions of the executable program 67, the simulation method according to the present embodiment is completed.

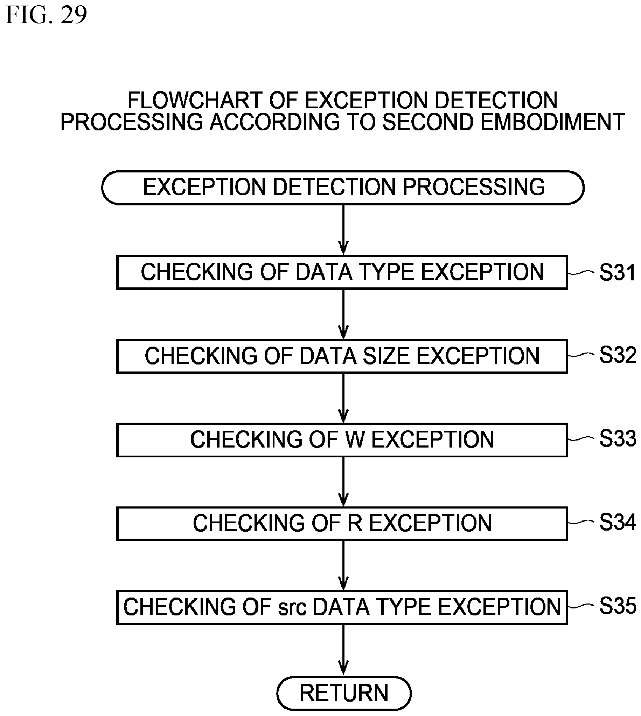

Next, the exception detection processing in step S18 will be described. FIG. 29 is a flowchart of an exception detection processing in step S18. First, the second exception detection unit 82b checks whether there is a data type exception (step S31). For example, the second exception detection unit 82b reads the status information Q of the source register of the instruction executed in step S17 from the status register file unit 76. Then, the second exception detection unit 82b detects the data type exception when the data type indicated by the type information DT of the status information Q does not match the data type as the arithmetic target by the instruction.

Next, the second exception detection unit 82b checks whether there is a data size exception using the status information Q read in step S31 (step S32). For example, the second exception detection unit 82b detects the data size exception when the data size indicated by the size information DS of the status information Q does not match and the data size expected in the source register in the instruction executed in step S17.

Next, the second exception detection unit 82b checks whether there is a W exception (step S33). The check is performed using the status information Q read in step S31. For example, the second exception detection unit 82b detects the W exception when the first flag W in the status information Q is "0".

Subsequently, the second exception detection unit 82b checks whether there is a R exception based on the first flag W and the second flag R of the status information Q (step S34). As an example, the second exception detection unit 82b detects the R exception when the first flag W is "1" and the second flag R is "0".

Next, the second exception detection unit 82b checks whether there is a src data type exception (step S35). For example, the second exception detection unit 82b determines whether the instruction executed in step S17 is an instruction on the premise that the data types of the two source registers are the same. Here, when it is determined that the instruction executed in step S17 is the instruction on the premise that the data types of the two source registers are the same, the second exception detection unit 82b reads the status information Q of each source register of the instruction from the status register file unit 76. Then, the exception detection unit 82 detects the src data type exception when the data sizes indicated by the respective type information DT of these status information Q do not match each other. This completes the exception detection processing in step S18.

According to the present embodiment described above, the information processing device 60 can check whether the executable program 67 has the description error without actually executing the instruction of the executable program 67 in the processor 20 according to the first embodiment.

Further, since the information processing device 60 can check for the description error in this way, the time to wastefully execute the program with the description error on the processor 20 can be reduced, and the wasteful consumption of hardware resources such as the processor 20 and the memory 28 can be improved.

Moreover, in the exception detection processing of step S18, the exception is detected by using the status information Q as in the first embodiment. Therefore, it is possible to detect each of the data type exception, the data size exception, the W exception, the R exception, and the src data type exception caused by the errors when the developer manually describes the assembly. Then, the developer can debug based on this exception, and the development efficiency of the program of the assembly language can be improved. The present embodiment is not limited to the above.

For example, the execution unit 83 may execute the loadStatus instruction, the storeStatus instruction, and the saveStatus instruction described with reference to FIGs. 20 to 22 of the first embodiment. This makes it possible to save or restore the data in the status registers sxn, svn (n = 0,1,2, ..., 31) simulated in the second storage area 76a (see FIG. 27), and simulate the subroutine calls, and the context switches of the OS.

Furthermore, the developer may describe the disableExceptGen instruction and the enableExceptGen instruction in FIGs. 23A to 23C of the first embodiment in the source code of the assembly language to disable or enable the function of the exception detection unit 82 to detect the exception.

### (THIRD EMBODIMENT)

In the first embodiment, when the processor 20 executes the executable program, the processor 20 detects the exception caused by the description error of the assembly language.

On the other hand, in the present embodiment, when there is the description error of the assembly language, the assembler program that generates the executable program of the machine language from the assembly language outputs an error.

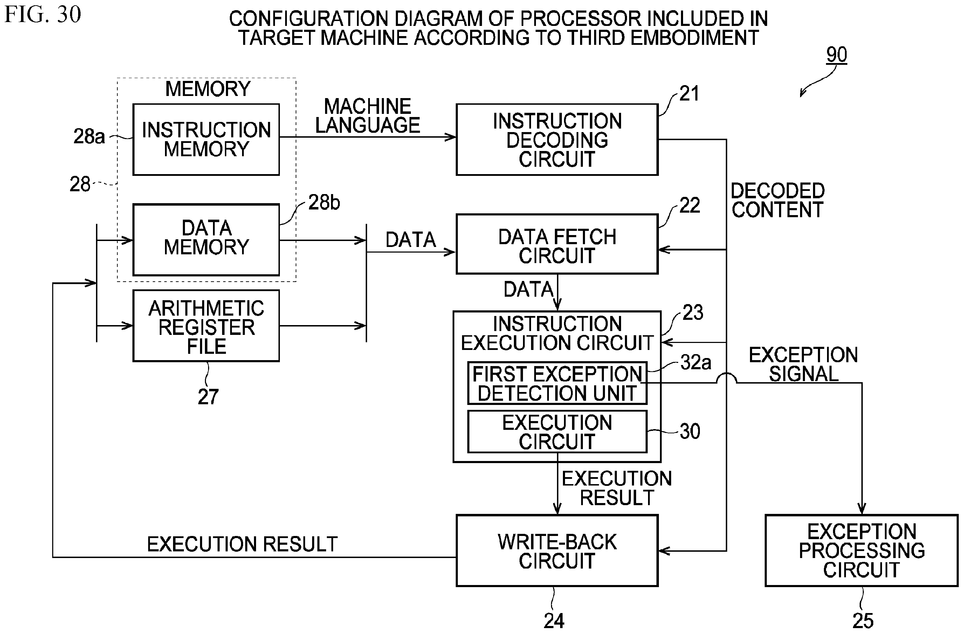

FIG. 30 is a configuration diagram of a processor 90 included in a target machine that executes the executable program in the present embodiment.

In FIG. 30, the same elements as described in FIG. 15 of the first embodiment are designated by the same reference numerals as those in FIG. 15, and the description thereof will be omitted below.

In the present embodiment, the processor 90 does not detect the exception by using the status information Q stored in the status register file 26 (see FIG. 15), unlike the first embodiment. Therefore, the processor 90 has a hardware configuration in which the status register file 26, the status update circuit 31, and the second exception detection unit 32b are omitted from the processor 20 according to the first embodiment. The operation of each part other than these circuits is the same as that of the first embodiment.

The executable program of the machine language executed by the processor 90 is generated by the assembler program according to the present embodiment as follows.

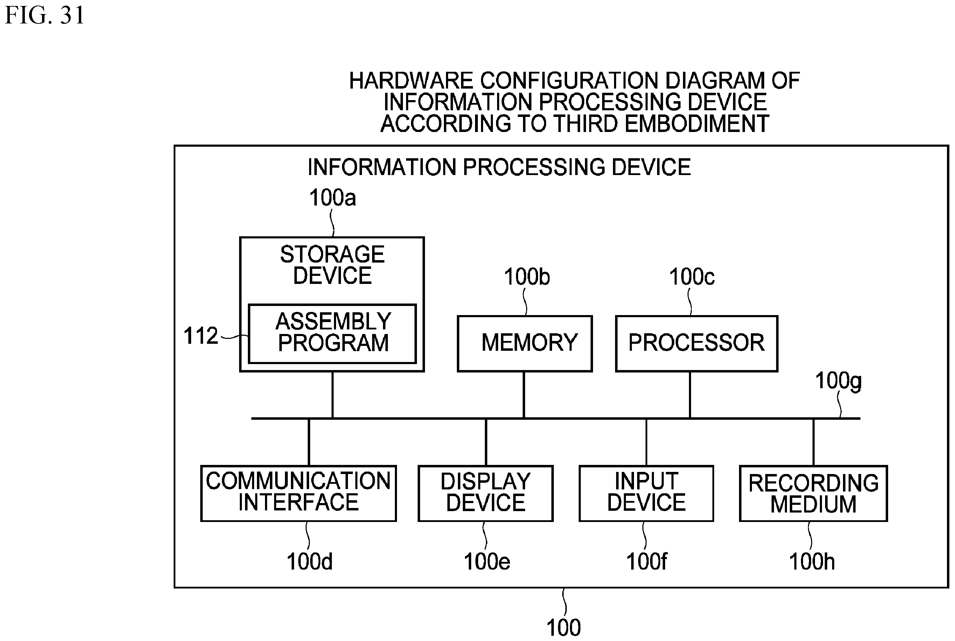

FIG. 31 is a hardware configuration diagram of an information processing device that executes the assembler program according to the third embodiment.

An information processing device 100 is a computer such as a PC (Personal Computer), and includes a storage device 100a, a memory 100b, a processor 100c, a communication interface 100d, a display device 100e, and an input device 100f. These elements are connected to each other by a bus 100g.

The storage device 100a is a non-volatile storage such as an HDD or an SSD (Solid State Drive), and stores an assembler program 112 according to the present embodiment.

Here, the assembler program 112 may be recorded on a computer-readable recording medium 100h, and the processor 100c may read the assembler program 112 in the recording medium 100h.

Examples of such a recording medium 100h include physically portable recording media such as a CD-ROM (Compact Disc-Read Only Memory), a DVD (Digital Versatile Disc), and a USB (Universal Serial Bus) memory. Further, a semiconductor memory such as a flash memory, or a hard disk drive may be used as the recording medium 100h. The recording medium 100h is not a temporary medium such as a carrier wave having no physical form.

Further, the assembler program 112 may be stored in a device connected to a public line, an Internet, a LAN (Local Area Network), or the like, and the processor 100c may read and execute the assembler program 112.

Meanwhile, the memory 100b is hardware that temporarily stores data, such as a DRAM, and the assembler program 112 is deployed on the memory 100b.

The processor 100c is hardware such as a CPU (Central Processing Unit) or a GPU (Graphical Processing Unit) that controls each element of the information processing device 100 and executes the assembler program 112 in cooperation with the memory 100b.

Further, the communication interface 100d is an interface for connecting the information processing device 100 to the network such as the LAN.

The display device 100e is hardware such as a liquid crystal display device, and displays various information to the developer. Also, the input device 100f is hardware such as a keyboard and a mouse. For example, the developer outputs various instructions to the information processing device 100 by operating the input device 100f.

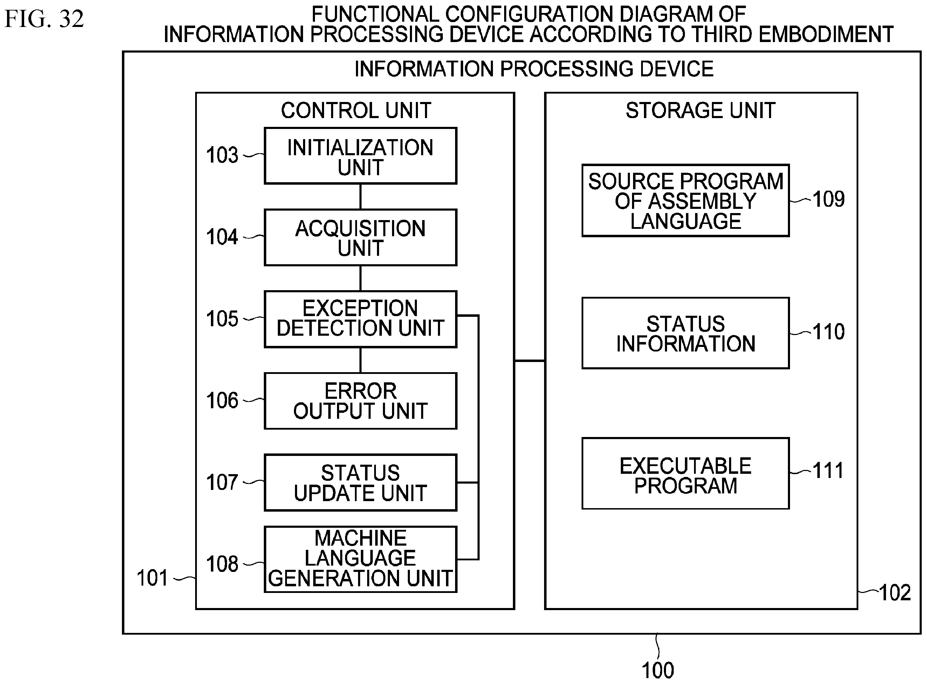

FIG. 32 is a functional configuration diagram of the information processing device 100 when the information processing device 100 executes the assembler program 112.

As illustrated in FIG. 32, the information processing device 100 includes a control unit 101 and a storage unit 102.

Among these, the storage unit 102 is realized by the storage device 100a and the memory 100b, and stores a source program 109 of the assembly language which is the target of assembly. The storage unit 102 also stores the status information 110 used for determining whether there is the description error in the source program 109 of the assembly language. The details of the status information 110 will be described later.

Further, the storage unit 102 also stores an executable program 111 of the machine language obtained by assembling the source program 109 of the assembly language.

On the other hand, the control unit 101 has an initialization unit 103, an acquisition unit 104, an exception detection unit 105, an error output unit 106, a status update unit 107, and a machine language generation unit 108.

Among these, the initialization unit 103 is a processing unit that initializes the status information 110 before assembling. Further, the acquisition unit 104 is a processing unit that acquires the source program 109 of the assembly language to be assembled from the storage unit 102.

The exception detection unit 105 is a processing unit that detects the exception in the instruction described in the source program 109 based on the status information 110. For example, when the acquisition unit 104 acquires a code of the assembly language including the instruction in which the general-purpose register xn (n=0,1,2,..., 31) and the vector register vn (n=0,1,2,..., 31) are specified in the operands, the exception detection unit 105 detects the exception in the instruction.

The error output unit 106 is a processing unit that outputs an error when the exception detection unit 105 detects the exception.

On the other hand, the status update unit 107 is a processing unit that updates the contents of the status information 110 when the exception detection unit 105 does not detect the exception. The machine language generation unit 108 is a processing unit that assembles the code of the assembly language to generate the machine language, and writes the executable program 111 including the machine language into the storage unit 102 when the exception detection unit 105 does not detect the exception.

Next, the status information 110 will be described. The status information 110 is information indicating the status of each of the general-purpose register xn (n = 0,1,2, ..., 31) and the vector register vn (n = 0,1,2, ..., 31) provided in the arithmetic register file 27 (see FIG. 30). A method of realizing the status information 110 is not particularly limited, but in the present embodiment, the status information 110 is realized by the arrays.

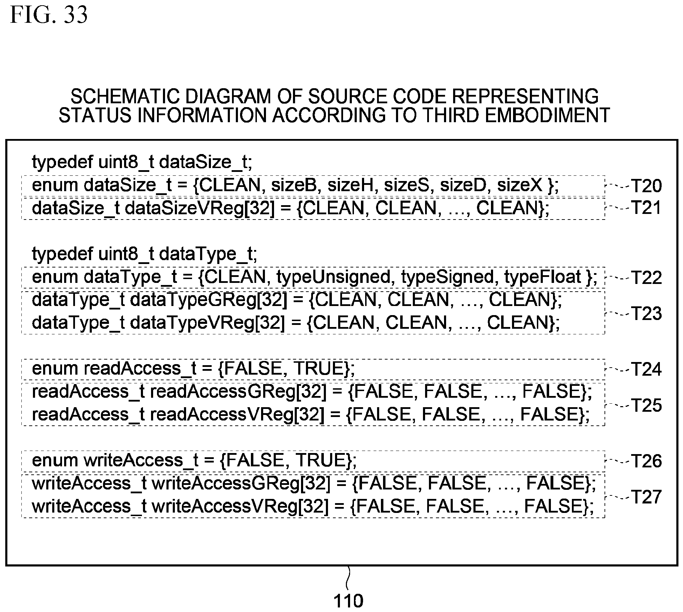

FIG. 33 is a schematic diagram of a C++ source code representing the status information according to the present embodiment.

In this status information 110, a code T20 is a code that declares a member variable of an enumeration type "dataSize_t" indicating the data size of each of the general-purpose register xn (n = 0,1,2, ..., 31) and the vector register vn (n = 0,1,2, ..., 31). The member variables include "sizeB" indicating a byte, "sizeH" indicating a halfword, "sizeS" indicating a single word, "sized" indicating a doubleword, and "sizeX" indicating 128 bits.

In the code T20, "CLEAN" indicating that no data is stored in the general-purpose register xn (n=0,1,2,..., 31) and the vector register vn (n=0,1,2,..., 31) and the data size is indefinite is declared as a member variable of the enumeration type "dataSize_t".

A code T21 is a code that declares an array for storing the data size of the element of the vector data stored in the vector register vn (n = 0, 1,... 31). Here, the array "dataSizeVReg" is declared as an array for the vector register vn (n = 0,1,2, ..., 31).

Each element of this array "dataSizeVReg" is an example of type information indicating the data size of the element of the vector data stored in the corresponding vector register.

Further, in the present embodiment, it is assumed that the index of the array element represents the index of the register. For example, dataSizeVReg [0], dataSizeVReg [1],... dataSizeVReg [31] indicate the data sizes of the vector registers v0, v1,... v31, respectively.

In this example, all elements of each array "dataSizeVReg" should be initialized to "CLEAN" in the code T21.

On the other hand, a code T22 is a code that declares a member variable of an enumeration type "datatype" indicating the data type of each of the general-purpose register xn (n = 0, 1,... 31) and the vector register vn (n = 0, 1,... 31). The member variables include "typeUnsigned" indicating the unsigned integer, "typeSigned" indicating the signed integer, and "typeFloat" indicating the floating point.

In the code T22, "CLEAN" indicating that no data is stored in the general-purpose register xn (n=0,1,2,..., 31) and the vector register vn (n=0,1,2,..., 31) and the data type is indefinite is also declared as a member variable of the enumeration type "dataType_t".

A code T23 is a code that declares an array for storing the data type of each of the general-purpose register xn (n = 0, 1,... 31) and the vector register vn (n = 0, 1,... 31). In the present embodiment, an array "dataTypeGReg" is declared as an array for the general-purpose register xn, and an array "dataTypeVReg" is declared as an array for the vector register.

Each element of these arrays "dataTypeGReg" and "dataTypeVReg" is an example of the type information indicating the data type of the data stored in the corresponding register.

Further, as in the example of the data size, it is assumed that, also in the code T23, the index of the array element represents the index of the register. For example, dataTypeGReg[0], dataTypeGReg [1],...dataTypeGReg [31] indicate the data sizes of the general-purpose registers x0, x1,...x31, respectively, and dataTypeVReg[0], dataTypeVReg [1],...dataTypeVReg [31] indicate the data sizes of the vector registers v0, v1,...v31, respectively.

In this example, all elements of the arrays "dataTypeGReg" and "dataTypeVReg" should be initialized to "CLEAN" in the code T23.

The code T24 is a code that declares a member variable of an enumeration type "readAccess_t" indicating whether each of the general-purpose register xn (n = 0, 1,... 31) and the vector register vn (n = 0, 1,... 31) has been used as the source register. The member variables include "FALSE" indicating that the source register has not been used, and "TRUE" indicating that the source register has been used.

A code T25 is a code that declares the arrays storing the member variables of the enumeration "readAccess_t". Here, an array "readAccessGReg" is declared as an array for the general-purpose register xn (n = 0, 1,... 31), and an array "readAccessVReg" is declared as an array for the vector register vn (n = 0, 1,... 31).

Each element of the arrays "readAccessGReg" and "readAccessVReg" is an example of the second flag indicating whether the corresponding register has been used as the source register.

Further, it is assumed that the index of each element of these arrays "readAccessGReg" and "readAccessVReg" is equal to the index of the register. For example, readAccessGReg[0], readAccessGReg[1],...readAccessGReg[31] correspond to the general-purpose registers x0, x1,...x31, respectively, and readAccessVReg[0], readAccessVReg[1],...readAccessVReg[31] correspond to vector registers v0, v1,...v31, respectively.

On the other hand, a code T26 is a code that declares the member variable of the enumeration type "writeAccess_t" indicating whether each of the general-purpose register xn (n = 0, 1,... 31) and the vector register vn (n = 0, 1,... 31) has been used as the destination register. The member variables include "FALSE" indicating that the register has not been used as the destination register and "TRUE" indicating that the register has been used as the destination register.

A code T27 is a code that declares the arrays for storing the member variables of the enumeration "writeAccess t". Here, an array "writeAccessGReg" is declared as an array for the general-purpose register xn (n = 0, 1, ... 31), and the array "writeAccessVReg" is declared as an array for the vector register vn (n = 0, 1, ... 31).

Each element of the arrays "writeAccessGReg" and "writeAccessVReg" is an example of the first flag indicating whether the corresponding register has been used as the destination register.

Further, it is assumed that the index of each element of these arrays "writeAccessGReg" and "writeAccessVReg" is equal to the index of the register. For example, writeAccessGReg[0], writeAccessGReg[1],...writeAccessGReg[31] correspond to the general-purpose registers x0, x1,...x31, respectively, and writeAccessVReg[0], writeAccessVReg[1],...writeAccessVReg[31] correspond to vector registers v0, v1,...v31, respectively.

In this way, the status information 110 is realized here by the arrays "dataSizeVReg", "dataTypeGReg", "dataTypeVReg", "readAccessGReg", "readAccessVReg", "writeAccessVReg", and "writeAccessVReg". The elements of these arrays are updated by the status update unit 107 when the exception detection unit 105 does not detect the exception.

For example, when there is no exception for the instruction for which the source register is specified in the operand, the status update unit 107 stores "TRUE" in the element of "readAccessGReg" or "readAccessVReg" corresponding to the source register.

Then, the status update unit 107 updates the element of each array even when there is no exception for the instruction for which the destination register is specified in the operand. In this case, the status update unit 107 stores "TRUE" in the element of the array "writeAccessGReg" or "writeAccessVReg" corresponding to a destination register. Further, the status update unit 107 stores "FALSE" in the element of the array "readAccessGReg" or "readAccessVReg" corresponding to the destination register. This will set the destination register to a state where it has not yet been used as the source register since the data was written.

Further, when the instruction to write data to the register exists in the source program 109 of the assembly language, the status update unit 107 updates the array "dataTypeGReg" or "dataTypeVReg" corresponding to the register. For example, consider a case where the code "add x2, x0, x1" is described in the source program 109. The add instruction is a signed 64-bit integer addition instruction. Therefore, in this case, the status update unit 107 stores "typeSigned" in the "dataTypeGReg [2]" corresponding to the general-purpose register x2. In this way, the status update unit 107 stores the data type as the arithmetic target by the instruction among "typeUnsigned", "typeSigned", and "typeFloat" in the element of the array "dataTypeGReg" or "dataTypeVReg".

Similarly, when the instruction to write data to the vector register exists in the source program 109 of the assembly language, the status update unit 107 updates the array "dataSizeVReg" corresponding to the vector register. For example, consider a case where "vadd v3.s, v0.s, v1.s" is described in the source program 109. In this case, the single word "s" is specified as the size of the data to be written to the vector register v3 which is the destination register. Therefore, in this case, the status update unit 107 stores "sizeS" in the "dataSizeVReg [3]" corresponding to the vector register v3. In this way, the status update unit 107 stores the data size specified in the destination register among "sizeB", "sizeH", "sizeS", "sized", and "sizeX" in the element of the array "dataSizeVReg".

Next, the detection rule when the exception detection unit 105 detects the exception will be described.

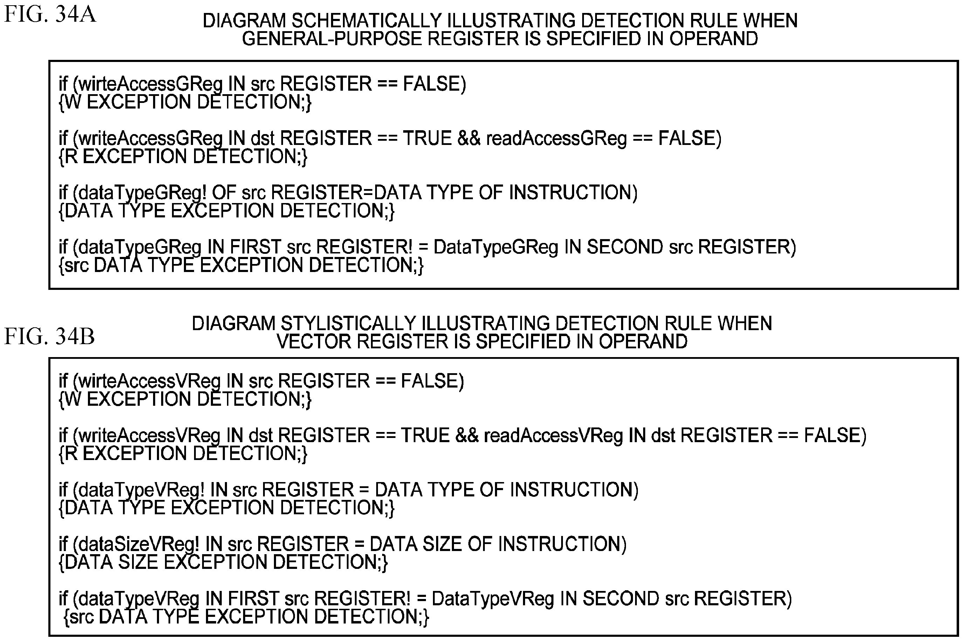

FIG. 34A is a diagram schematically illustrating the detection rule when the general-purpose register is specified in the operand.

As illustrated in FIG. 34A, the exceptions to be detected by the exception detection unit 105 when the general-purpose register is specified in the operand include "W exception", "R exception", "data type exception", and "src data type exception" explained in FIG. 17 of the first embodiment.

Among these, the W exception is an exception that occurs when the source register of an instruction is not used as the destination register in the preceding instruction of the instruction, and can be detected by using the array "writeAccessGReg".

For example, consider a case where the source register of an instruction is the general-purpose register x0. If "writeAccessGReg [0]" corresponding to the general-purpose register x0 is "FALSE", it means that the general-purpose register x0 has not been used as the destination register in the past. Therefore, the exception detection unit 105 detects the W exception when "writeAccessGReg [0]" is "FALSE".

Further, the R exception is an exception when the succeeding instruction uses the register to which the data was written by the preceding instruction as the destination register, and all the instructions between the preceding instruction and the succeeding instruction do not use the register as the source register. The R exception can be detected using the array "writeAccessGReg" and the array "readAccessGReg".

For example, consider a case where the destination register of an instruction is the general-purpose register x0. If the general-purpose register x0 has been used as the destination register by another instruction in the past, "writeAccessGReg [0]" becomes "TRUE". If the general-purpose register x0 is not used as the source register in the succeeding instruction, "readAccessGReg [0]" becomes "FALSE". Therefore, the exception detection unit 105 detects the R exception when "writeAccessGReg [0]" is "TRUE" and "readAccessGReg [0]" is "FALSE".

Further, the data type exception is an exception that occurs when the data type as the arithmetic target by the instruction does not match the data type of the actual data written in the source register.

The data type exception can be detected using the array "dataTypeGReg". For example, consider a case where the code of the assembly language acquired by the acquisition unit 104 is "fadd x2, x0, x1". In this case, the exception detection unit 105 identifies that the instruction type is fadd from the description of "fadd" in the code of the assembly language, and the data type of the data which is the arithmetic target by this instruction is "typeFloat". Further, the exception detection unit 105 identifies that the source register of this instruction is the general-purpose register x0 based on the description of "x0" in the second operand of the above code.

On the other hand, it is assumed that "typeUnsigned" is stored in "dataTypeGReg[0]" which is the element of the array "dataTypeGReg" corresponding to the general-purpose register x0. In this case, "dataTypeGReg[0]" and "typeFloat" do not match. The exception detection unit 105 detects a data type error when "dataTypeGReg[0]" does not match "typeFloat" in this way.

In this example, the exception detection unit 105 detects a data type exception for the second operand "x0", but the exception detection unit 105 can also detect a data type exception for the third operand "x1" in the same manner.

The src data type exception is an exception that occurs when the data types of the two source registers of the instruction do not match.

The src data type exceptions can be detected using the array "dataTypeGReg" .

For example, consider a case where the code of the assembly language acquired by the acquisition unit 104 is "multiply x2, x0, x1". In this case, the exception detection unit 105 identifies that the type of the instruction is "multiply" from the description of "multiply" in the code of the assembly language. Then, the exception detection unit 105 compares the data types of the data stored in the general-purpose registers x0 and x1 based on the fact that the identified multiple instruction is an instruction on the premise that the data types of the two source registers are the same.

Here, it is assumed that the data type stored in the general-purpose register x0 is the unsigned integer and "dataTypeGReg [0]" is "typeUnsigned". On the other hand, it is assumed that the data type stored in the general-purpose register x1 is the floating point and "dataTypeGReg [1]" is "typeFloat". In this case, "dataTypeGReg [0]" and "dataTypeGReg [1]" do not match. The exception detection unit 105 detects the src data type exception when "dataTypeGReg [0]" and "dataTypeGReg [1]" do not match in this way.

On the other hand, FIG. 34B is a diagram schematically illustrating the detection rule when the vector register vn (n = 0,1,2 ... 31) is specified in the operand.

Also in the case of the vector register, "W exception", "R exception", "data type exception", and "src data type exception" can be detected by the same detection rule as in the case of the general-purpose register of FIG. 34A.

Furthermore, there is also a detection rule for detecting "data size exception" in the case of the vector register.

The data size exception is an exception that occurs when the data size of the data written in the register by the preceding instruction is different from the data size of the source register specified in the succeeding instruction using the register as the source register. The data size exception can be detected using the array "dataSizeVReg".

For example, consider a case where the code of the assembly language acquired by the acquisition unit 104 is "vadd v2.s, v0.s, v1.s". In this case, the exception detection unit 105 identifies that the data size specified in the source register of this vadd instruction is "sizeS" based on the description of "v0.s" in the second operand. Further, the exception detection unit 105 also identifies that the source register of this vadd instruction is the vector register v0 based on the description of "v0.s" in the second operand.

On the other hand, it is assumed that "size B" is stored in "dataSizeVReg [0]" which is an element of the array "dataSizeVReg" corresponding to the vector register v0. In this case, "dataSizeVReg [0]" does not match "sizeS". The exception detection unit 105 detects the data size exception when "dataSizeVReg [0]" does not match "sizeS" in this way.

In this example, the exception detection unit 105 detects the data size exception for the second operand "v0.s" of "vadd v2.s, v0.s, v1.s", but can also detect the data size exception for the third operand "v1.s" in the same way.

According to the information processing device 100 described above, the exception detection unit 105 detects the exception at the time of assembly according to the detection rules of FIGs. 34A and 34B by using the status information 110. Thereby, when the source program 109 of the assembly language has the description error, the exception detection unit 105 detects the exception, and the developer can notice that the source program 109 had the description error based on the exception. As a result, the developer can easily debug the source program 109, and the efficiency of program development can be improved.

Further, the status information 110 defines the arrays for detecting "W exception", "data type exception", "data size exception", and "src data type exception". Therefore, the exception detection unit 105 can identify which of the above exceptions has occurred, based on the status information 110. Then, the developer can identify a specific description error in the source program 109 depending on which of these exceptions is detected.

By the way, when the exception detection unit 105 detects the exception in this way, it is possible to find the description error in the source program 109 of the assembly language. However, in some cases, it may be convenient to disable the function of the exception detection unit 105 to detect the exception.

For example, as described in the first embodiment, the source program 109 may include meaningless code of the assembly language due to insufficient optimization of the compiler. When the exception detection unit 105 detects the exception for such a code, the exception is detected even when the purpose is not to detect errors originating from manual work, which is troublesome.

Therefore, in the present embodiment, the function of the exception detection unit 105 is suppressed as follows.

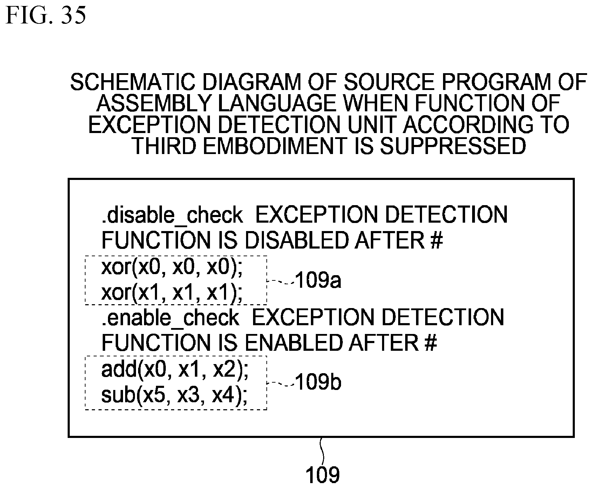

FIG. 35 is a schematic diagram of the source program 109 of the assembly language when the function of the exception detection unit 105 is suppressed.

In this source program 109, the developer describes ".disable_check" which is a directive of the assembly language before an instruction sequence 109a where he/she does not want to detect the exception. The ".disable_check" is a directive that disables the process of detecting the exception by the exception detection unit 105.

Then, the developer describes the directive ".enable_check" after the instruction sequence 109a. The ".enable_check" is a directive that enables the process of detecting the exception by the exception detection unit 105.

When the acquisition unit 104 acquires the directive ".disable_check", the exception detection unit 105 does not perform the process of detecting the exception for the succeeding instruction of the directive. Therefore, even if the instruction sequence 109a includes the description error that causes the exception, the machine language generation unit 108 compiles the instruction sequence 109a to generate the machine language.

Further, when the compilation of the instruction sequence 109a is completed and the acquisition unit 104 acquires the directive ".enable_check", the exception detection unit 105 resumes the process of detecting the exception. Therefore, in the example of FIG. 35, the exception in an instruction sequence 109b is detected by the exception detection unit 105.

By using the directives ".disable_check" or ".enable_check" in this way, the exception detection unit 105 can disable the process of detecting the exception or can enable the process of detecting the exception.

Instead of using the directives of the assembly language in this way, the function of detecting the exception may be suppressed by using a command line argument when the developer gives an assembly instruction to the information processing device 100.

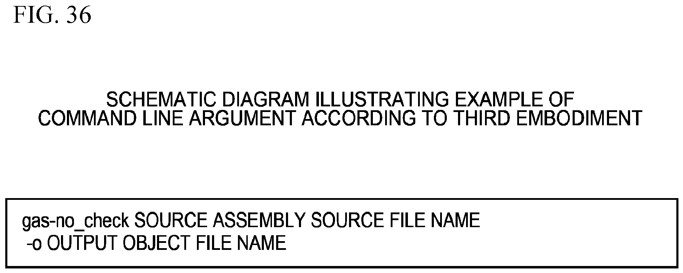

FIG. 36 is a schematic diagram illustrating an example of the command line argument. In FIG. 36, "-no_check" is given to an argument of a command "gas" instructing the information processing device 100 to generate the executable program 111 (see FIG. 32) of the machine language from the source program 109 of the assembly language. The command line argument "-no_check" is an argument that disables the function of the exception detection unit 105 to detect the exception when the information processing device 100 assembles the source program 109. Thereby, it is possible to prevent an unnecessary exception from being detected during assembly, and improve the convenience of the program development.

Next, a process executed by the assembler program 112 according to the present embodiment will be described.

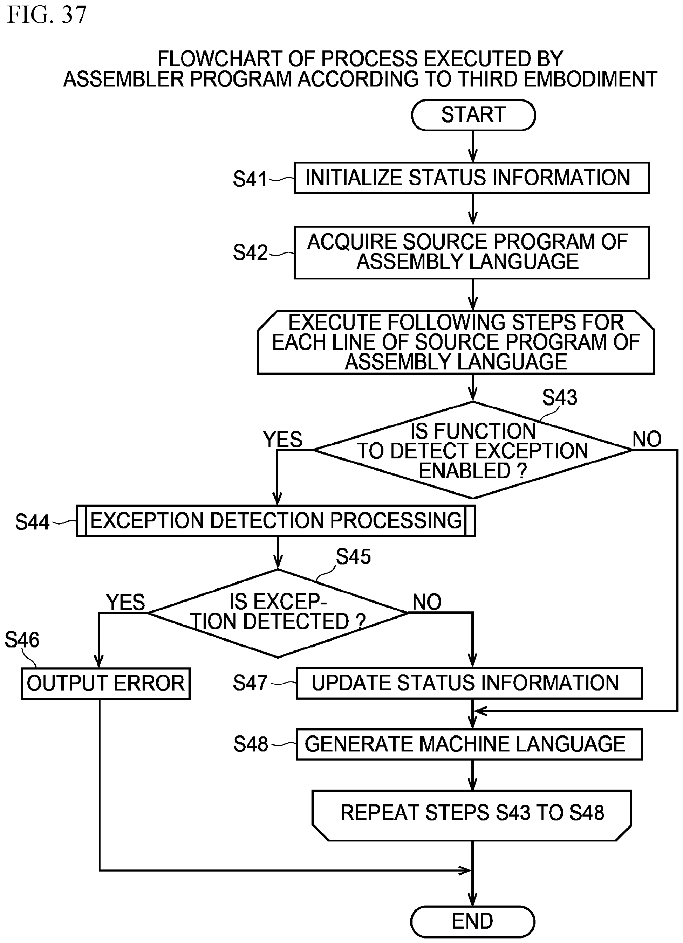

FIG. 37 is a flowchart of a process executed by the assembler program 112 according to the present embodiment.

First, the initialization unit 103 initializes the status information 110 (step S41). For example, the initialization unit 103 stores "CLEAN" in all the elements of the arrays "dataSizeVReg", "dataTypeGReg", and "dataTypeVReg". Further, the initialization unit 103 stores "FALSE" in all the elements of the arrays "readAccessGReg", "readAccessVReg", "writeAccessGReg", and "writeAccessVReg".

Next, the acquisition unit 104 acquires the source program 109 of the assembly language from the storage unit 102 (step S42).

Next, the exception detection unit 105 determines whether the function for detecting the exception is enabled (step S43). As an example, the exception detection unit 105 determines that the function for detecting the exception is not enabled when the acquisition unit 104 reads the directive ".disable_check". Further, the exception detection unit 105 determines that the function for detecting the exception is not enabled even when "-no_check" is included in the command line argument.

On the other hand, the exception detection unit 105 determines that the function for detecting the exception is enabled when the acquisition unit 104 reads the directive ".enable_check" or when the command line argument does not include "-no_check".

Here, if it is determined that the function for detecting the exception is not enabled (step S43: negation), the process proceeds to step S48.

In step S48, the machine language generation unit 108 converts the code acquired by the acquisition unit 104 into the machine language. Then, the machine language generation unit 108 generates the executable program 111 including the machine language, and writes it out to the storage unit 102.

On the other hand, if it is determined that the function for detecting the exception is enabled (step S43: affirmative), the process proceeds to step S44.

In step S44, the exception detection unit 105 performs the exception detection processing. The exception detection processing will be described later.

Then, the exception detection unit 105 determines whether the exception has been detected (step S45).

Here, if it is determined that the exception has been detected (step S45: affirmative), the process proceeds to step S46.

In step S46, the error output unit 106 outputs the error and ends the process. An error output method is not particularly limited. For example, the error output unit 106 outputs the type of the exception that is a cause of the error to a standard output.

On the other hand, if it is determined that no exception has been detected (step S45: negation), the process proceeds to step S47, and the status update unit 107 updates the status information 110.

Next, the process proceeds to step S48 described above, and the machine language generation unit 108 generates the executable program 111 of the machine language and writes it out to the storage unit 102.

After that, steps S43 to S48 are repeated for the number of lines of code described in the source program 109 of the assembly language, and the process is completed.

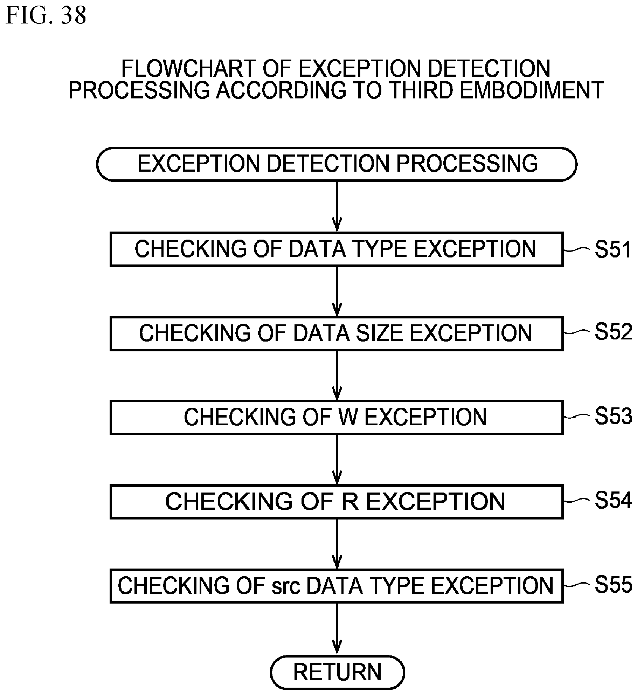

Next, the exception detection processing in step S44 will be described. FIG. 38 is a flowchart of the exception detection processing in step S44. First, the exception detection unit 105 checks whether there is a data type exception (step S51). For example, the exception detection unit 105 identifies the type of the instruction from the code of the assembly language acquired by the acquisition unit 104, so that it identifies the data type as the arithmetic target by this instruction. Further, the exception detection unit 105 identifies the source register of this instruction based on the code of the assembly language.

Then, the exception detection unit 105 identifies an element corresponding to this source register among the elements of the arrays "dataTypeGReg" and "dataTypeVReg". Then, the exception detection unit 105 determines whether the data type indicated by the identified element matches the data type as the arithmetic target by the instruction, and detects the data type exception if they do not match each other.

Next, the exception detection unit 105 checks whether there is a data size exception (step S52). For example, the exception detection unit 105 identifies the source register of the instruction included in the code based on the code of the assembly language acquired by the acquisition unit 104. Further, the exception detection unit 105 determines whether the data size indicated by the element corresponding to this source register in each element of the array "dataSizeVReg" matches the data size specified in the source register of the instruction. Then, when both data sizes do not match each other, the exception detection unit 105 detects the data size exception.

Next, the exception detection unit 105 checks whether there is a W exception (step S53). As an example, the exception detection unit 105 identifies the source register of the instruction included in the code based on the code of the assembly language acquired by the acquisition unit 104. Then, the exception detection unit 105 detects the W exception when the element corresponding to the identified source register among the elements of the arrays "writeAccessGReg" and "writeAccessVReg" is "FALSE".

Subsequently, the exception detection unit 105 checks whether there is an R exception (step S54). For example, the exception detection unit 105 identifies the destination register of the instruction included in the code based on the code of the assembly language acquired by the acquisition unit 104.

When the identified destination register is the general-purpose register, the exception detection unit 105 identifies the respective elements of the array "writeAccessGReg" and the array "readAccessGReg" corresponding to the destination register. Further, the exception detection unit 105 detects the R exception when the element of the identified array "writeAccessGReg" is "TRUE" and the element of the identified array "readAccessGReg" is "FALSE".

Even when the destination register is the vector register, the exception detection unit 105 detects the R exception by using the respective elements of the array "writeAccessVReg" and the array "readAccessVReg".

Next, the exception detection unit 105 checks whether there is a src data type exception (step S55).

For example, the exception detection unit 105 identifies the type of the instruction from the code of the assembly language acquired by the acquisition unit 104, and determines whether the instruction is an instruction on the premise that the data types of the two source registers are the same. Then, when it is determined that the instruction is the instruction on the premise that the data types of the two source registers are the same, the exception detection unit 105 identifies two source registers based on the acquired code.

When the two identified source registers are the general-purpose registers, the exception detection unit 105 determines whether the elements of the array "dataTypeGReg" corresponding to each of these source registers are the same. Then, if it is determined that they are not the same, the exception detection unit 105 detects the src data type exception. Even when the source register is the vector register, the exception detection unit 105 detects the src data type exception by using "dataSizeVReg". This completes the exception detection processing.

According to the above-described embodiment, when the source program 109 of the assembly language is assembled, the exception detection unit 105 detects the exception based on the status information 110 (FIG. 33). Therefore, the description error of the source program 109 can be early detected before the executable program 111 obtained by the assembly is executed by the processor 90 (see FIG. 30), and the efficiency of the program development can be improved.

Further, since the description error can be detected before the execution of the executable program 111, the time to wastefully execute the executable program with the description error on the processor 90 can be reduced, and the wasteful consumption of hardware resources such as the processor 90 and the memory 28 can be improved.

Moreover, the status information 111 used in the exception detection processing in step S44 includes various arrays for detecting "R exception", "W exception", "data type exception", "data size exception", and "src data type exception". By applying the elements of the array to the detection rules of FIGs. 34A and 34B, the exception detection unit 105 can detect the above-mentioned various exceptions. Therefore, the developer can identify a specific description error in the source program 109 of the assembly language depending on what kind of exception is detected.

### (FOURTH EMBODIMENT)

Each of the "W exception", "R exception", "data type exception", "data size exception", and "src data type exception" described in the first to third embodiments can also occur in the program using JIT (Just In Time) compiler technology.

The JIT compiler technology is a technology that generates a suitable instruction sequence of the machine language according to the parameters, the processing contents, and the status of the processor to be determined at the time of execution. The instruction sequence of the machine language generated using the JIT compiler technology is faster in processing speed than an executable program composed of the general-purpose processable instruction sequence of the machine language generated by an AOT (Ahead Of Time) type compiler.

Therefore, the JIT compiler technology will be explained first by comparing it with the AOT compiler technology.

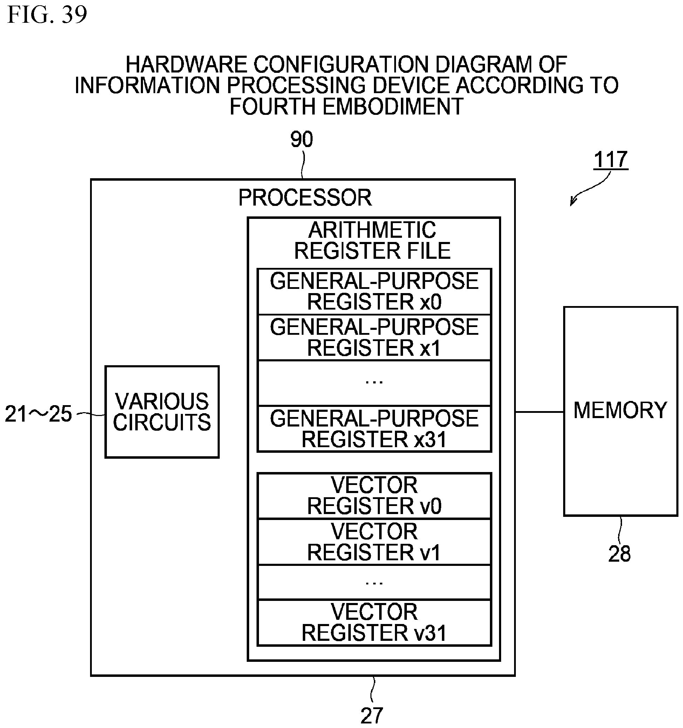

FIG. 39 is a hardware configuration diagram of the information processing device that executes the executable program generated by the AOT compiler technology or the JIT compiler technology.

This information processing device 117 is a computer for HPC use, a computer such as a PC (Personal Computer), and has the processor 90 and the memory 28 having the same structure as those as illustrated in FIG. 30.

Among these, the processor 90 is hardware including various circuits 21 to 25 and the arithmetic register file 27 as illustrated in FIG. 30. Further, the memory 28 is a volatile memory such as a DRAM in which an executable program is developed. The executable program can be generated by compiling the source code using the AOT compiler technology as follows. In addition, when the JIT compiler technology is used, the instruction sequence of the machine language is dynamically generated during the execution of the executable program.

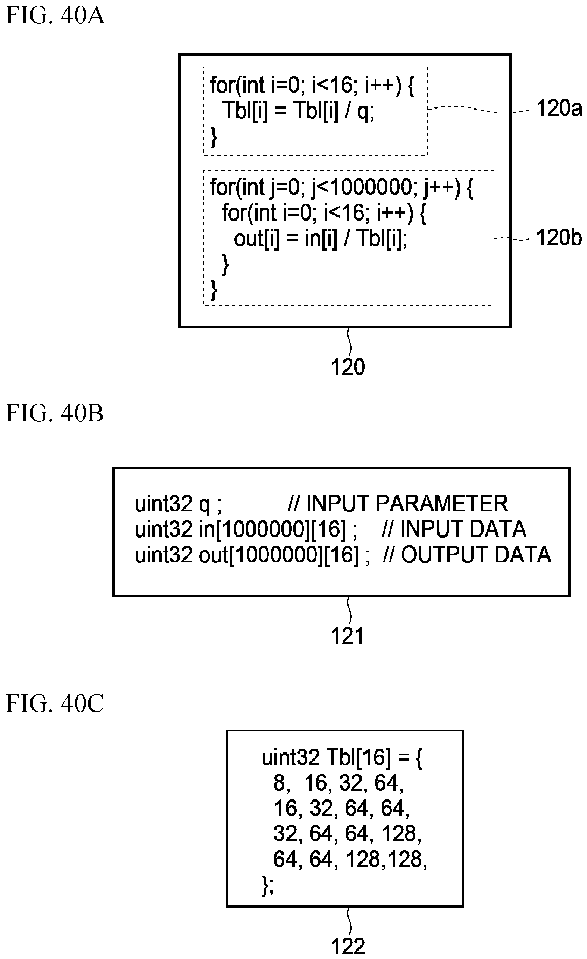

FIG. 40A is a schematic diagram illustrating an example of a C++ pseudo source code 120 premised on compiling with the AOT compiler technology.

In AOT compiler technology, the developer describes the source code according to the syntax of C language or C ++, and a compiler such as GCC (GNU Compiler Collection) compiles the source code into the instruction sequence of the machine language.

In the example of FIG. 40A, each element of an array "Tbl" is divided by a parameter "q" in a process 120a. Then, in a process 120b, the element of an array "in" is divided by the element of the array "Tbl", and a division result is stored in an array "out".

FIG. 40B is a schematic diagram illustrating an example of a C++ pseudo source code 121 in which the parameter "q" and the arrays "in" and "out" are declared.

The parameter "q" is a divisor in the above-mentioned process 120a, and is also referred to as an input parameter below. Further, the array "in" and the array "out" are input data and output data in the process 120b, respectively. The data stored in these arrays "in" and "out" is not particularly limited. Here, the array "in" and the array "out" are declared as a two-dimensional array that stores 1,000,000 images composed of 16 pixel data.

FIG. 40C is a schematic diagram illustrating an example of a C++ pseudo source code 122 in which an initial value of the array "Tbl" is declared.

The array "Tbl" is an array that stores values of a quantization table that quantizes the pixel data. Here, the array "Tbl" is declared as an array having 16 elements corresponding to each of the arrays "in" and "out". Then, it is assumed that the initial value of each element of the array "Tbl" is a power of 2.

The source codes 120 to 122 of FIGs. 40A to 40C are all described by the developer according to the syntax of C language or C++, and are converted into the assembly programs by the compiler.

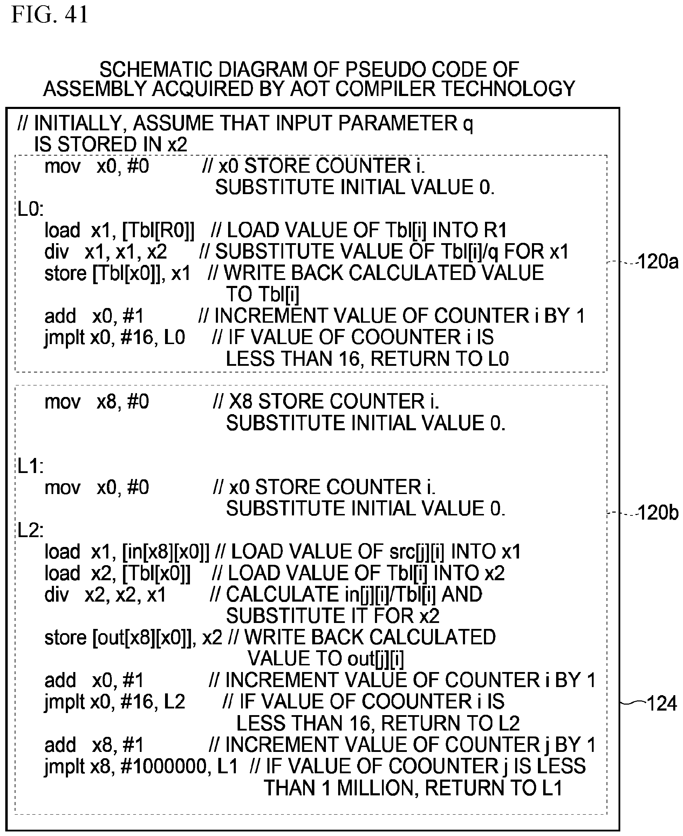

FIG. 41 is a schematic diagram of a pseudo code of an assembly program 124 acquired by compiling the source code 120 with the AOT compiler technology.

In the assembly program 124, a plurality of instructions included in the instruction set of the processor 90 are generated in correspondence with the respective processes 120a and 120b.

For example, the process 120a is realized by 6 instructions from a mov instruction to a jmplt instruction, and the process 120b is realized by 10 instructions from a mov instruction to a jmplt instruction. Here, it is assumed that the input parameter "q" is first stored in the general-purpose register x2.

Here, consider an instruction "div x2, x2, x1" in the process 120b. This instruction is an instruction corresponding to "in [i]/Tbl [i]" in the process 10b of the source code 120. A divisor "Tbl[i]" is divided by the input parameter "q" in the process 120a of the source code 120. The above-mentioned instruction "div x2, x2, x1" is an instruction that gives a correct division result regardless of the value of the input parameter "q". Therefore, the assembly program 124 is a general-purpose code that gives the correct result for any input parameter "q".

However, an instruction that performs division, such as a div instruction, is an instruction that has a larger number of execution cycles than other instructions. Therefore, the div instruction an instruction that has a large throughput from the start of execution until the result is obtained, which causes a decrease in processing performance. Depending on the type of processor, the number of execution cycles of a numerical arithmetic instruction other than the div instruction is 1 to 5, whereas the number of execution cycles of the div instruction may be about 80. Furthermore, since the number of loops in a for loop is enormous in deep learning, image processing and the like, the div instruction inside the for loop further reduces the throughput.

The assembler translates such an assembly program 124 into the instruction sequence of the machine language, thereby generating the executable program composed of the machine language. Depending on the type of compiler, an assembly program for a processor with a virtual instruction set may be generated regardless of the type of processor, as in LLVM In this case, this assembly program may be converted into the instruction sequence of the machine language for individual processors, but the throughput decreases as described above when there is a division instruction such as a div instruction.

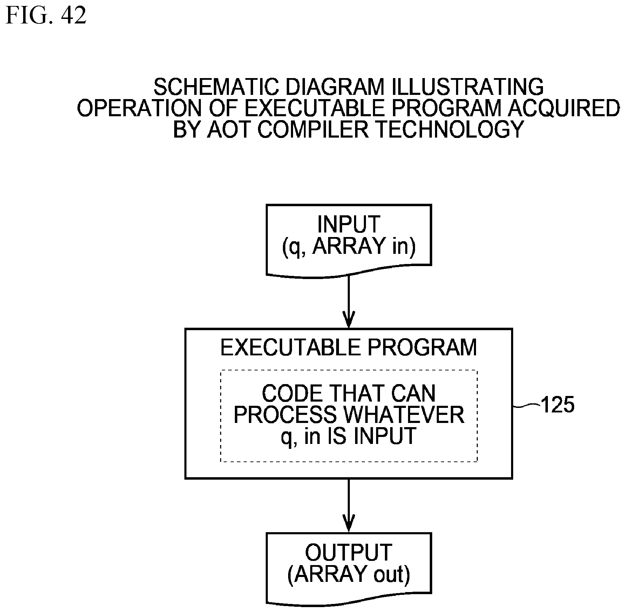

FIG. 42 is a schematic diagram illustrating the operation of the executable program acquired by the AOT compiler technology.

As illustrated in FIG. 42, an executable program 125 receives the input of each element of the array "in" and the input parameter "q" which are the input data. Then, regardless of the values of the input parameter "q" and the array "in" as described above, the executable program 125 performs processing according to the instruction sequence of the machine language obtained from the same assembly program 124 and stores the process result in each element of the array "out".

Next, a program on the premise that JIT compiler technology that can suppress the decrease in throughput will be described.

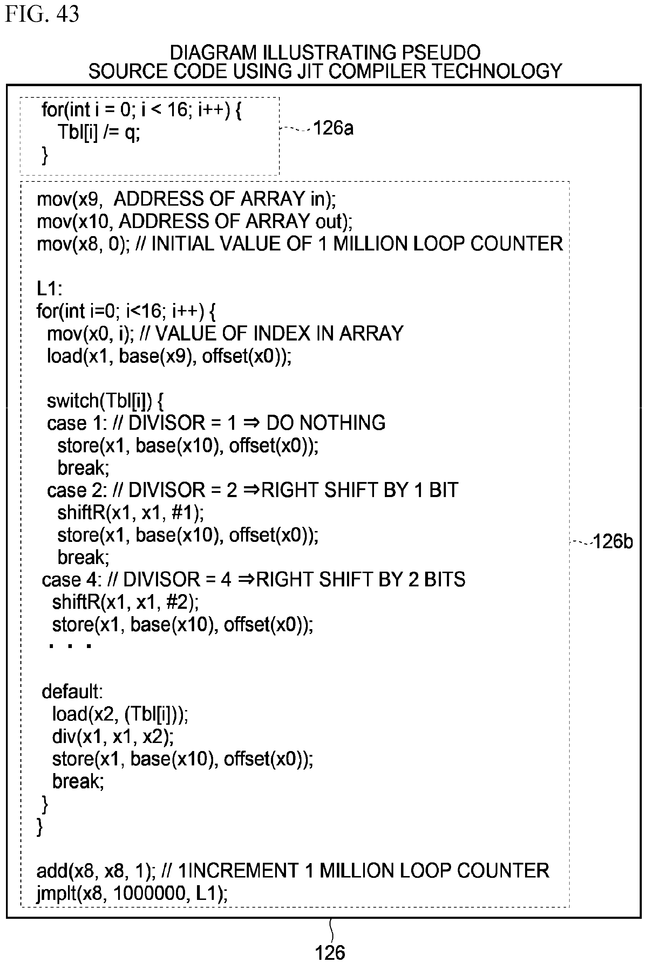

FIG. 43 is a schematic diagram illustrating an example of a C++ pseudo source code 126 using the JIT compiler technology.

The source code 126 is a code described by the developer so that the execution result is the same as the execution result of the source code 120 in FIG. 40A, and has a process 126a and a process 126b. Among these, the process 126a is a process of dividing each element of the array "Tbl" by the parameter "q", as in the process 120a of the source code 120. The process 126b is a process of generating an instruction sequence of the machine language that divides the elements of the array "in" by the element of the array "Tbl" and stores the result in the array "out".

In the process 126b, a function such as "mov (x0, i)" having the same function name as the mnemonic which is the name of the instruction is described by the developer. The function "mov (x0, i)" is, so to speak, a function corresponding to the assembly language "mov x0, #i", and is a function that writes the machine language representing the processing performed by "mov x0, #i" to the memory 28. Note that variables cannot be written in assembly language, and only fixed values can be specified in assembly language, such as "mov x0, #5" or "mov x0, #-128". When the JIT compiler technology is used, a variable i can be used as an immediate value. This is one of the advantages of the JIT compiler technology. In this way, a function whose name is the same as the mnemonic of the instruction and which writes the machine language indicating the processing performed by the instruction to the memory is hereinafter referred to as a mnemonic function.

The process 126b is a process of writing the instruction sequence of the machine language that executes in [i]/Tbl[i] for i = 0 to 15 to the memory 28. In this example, the developer describes a switch statement, so that an instruction sequence of the machine language is generated using a different mnemonic function depending on the value of the array element "Tbl[i]" which is a divisor.

For example, if the value of "Tbl[i]" is "1", the divisor for "in[i]" is "1", so there is no need to do anything for "in [i]". Therefore, in this case, the machine language that performs arithmetic on the value of general-purpose register x1 in which the value of "in[i]" is stored is not generated in "case 1", but the machine language that stores the value to out[i] is only written to the memory 28 as is.

On the other hand, when the value of "Tbl[i]" is "2", "shiftR (x1, x1, # 1)" corresponding to the generation of the machine language of the shiftR instruction is executed in "case 2". This mnemonic function is a function that writes to the memory 28 a machine language which represents a process of shifting the contents of the general-purpose register x1 to the right by one bit and writing the result to the register x1. Therefore, by executing "shiftR (x1, x1, # 1)", a machine language that performs a process equivalent to dividing "in [i]" stored in the general-purpose register x1 by 2 can be written to the memory 28.

If the value of "Tbl[i]" is "4", "shiftR (x1, x1, # 2)" is executed in "case 4". Thereby, a machine language that shifts the contents of the general-purpose register x1 to the right by 2 bits, and performs a process equivalent to dividing "in [i]" stored in the general-purpose register x1 by 4 can be written in the memory 28.

Thus, when the divisor "Tbl [i]" is a power of 2, the mnemonic function corresponding to the shiftR instruction is executed.

If the value of "Tbl[i]" is not a power of 2 such as "1", "2", or "4", "div(x1, x1, x2)" is executed in "default". This mnemonic function is a function corresponding to the div instruction, and is a function for writing, to the memory 28, a machine language that writes a value obtained by dividing the contents of the general-purpose register x1 by the contents of the general-purpose register x2 to the general-purpose register x1.

According to this source code 126, when the value of "Tbl[i]" is a power of 2 such as "1", "2", "4", a machine language which is equivalent to the shiftR instruction and has fewer execution cycles than the div instruction, or a machine language that does nothing is written in the memory 28. Then, only when the value of "Tbl[i]" is not a power of 2 such as "1", "2", and "4", the machine language equivalent to the div instruction is written to the memory.

In the JIT compiler technology, the execution speed of the program can be speeded up as compared with the AOT compiler technology by writing the optimum machine language to reduce the number of execution cycles according to the values of the parameters such as "Tbl[i]".

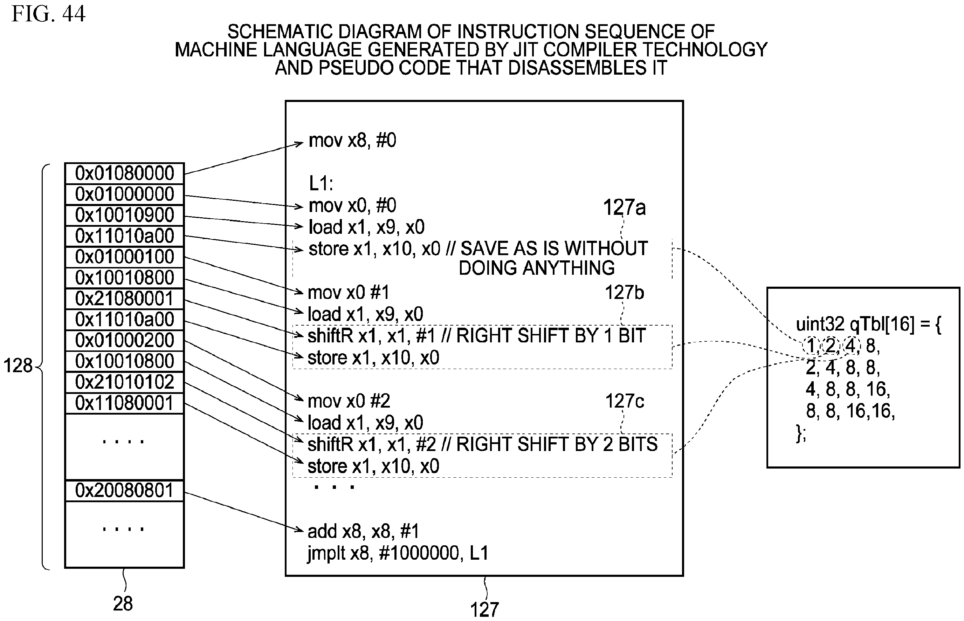

FIG. 44 is a schematic diagram illustrating what kind of instruction sequence of the machine language the process 126b has written in the memory 28 during the execution of the executable program acquired by compiling the source code 126. When the executable program is executed, "8" is given to the input parameter "q". Further, in FIG. 44, the pseudo code of an assembly program 127 that disassembles the instruction sequence of this machine language is also described.

As illustrated in FIG. 44, in the case of q = 8, each element of the array "Tbl" becomes "1", "2", and "4" in order from the beginning. Therefore, when the for loop of the process 126b is executed, a machine language 128 generated by each of the shiftR function and the store function corresponding to each case of i = 0 (case 1), i = 1 (case 2), and i = 2 (case 4) is arranged in the memory 28. The codes obtained by disassembling the machine language 128 are the codes 127a, 127b and 127c in the assembly program 127.

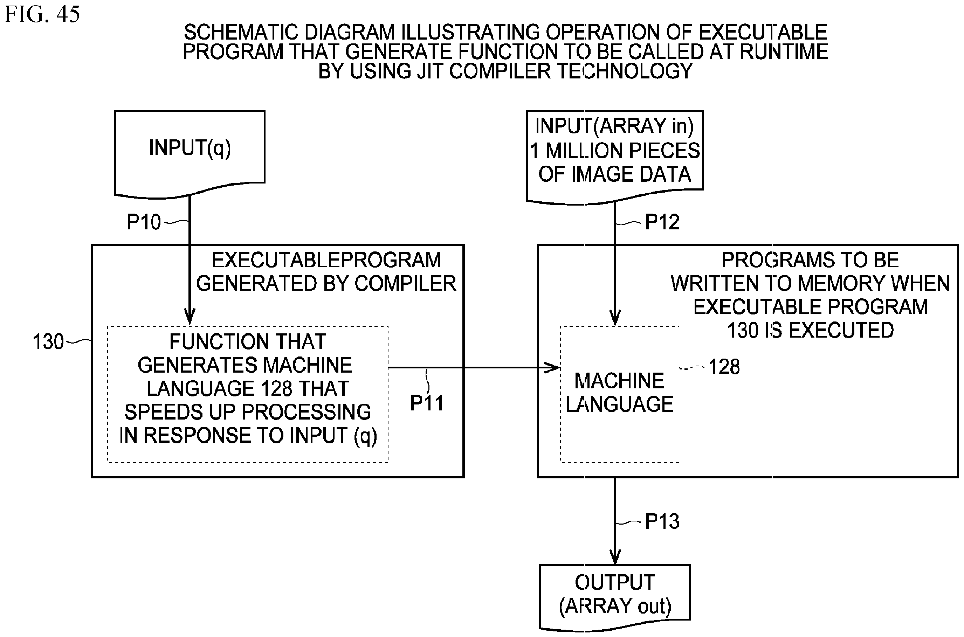

FIG. 45 is a schematic diagram illustrating the operation of the executable program in which the function to be called at the time of execution is generated at the time of execution by the JIT compiler technology. Here, the operation of an executable program 130 obtained by compiling the source code 126 using the JIT compiler technology will be described.

As illustrated in FIG. 45, the executable program 130 first receives the input of the input parameter "q" (step P10). Next, the executable program 130 generates the machine language 128 whose processing speed is increased according to the value of the input parameter "q" (step P11). In the above-mentioned example of FIG. 44, the machine language 128 suitable for the value of "Tbl[i]" is generated.

Subsequently, the executable program 130 receives the input of each element of the array "in" which is the input data (step P12), and stores the process result in each element of the array "out" (step P13).

At this time, since the machine language 128 does not include the div instruction having a slow throughput, it is possible to perform a process faster than the executable program corresponding to the assembly program 124. Moreover, by generating the appropriate machine language 128 according to the value of the input parameter "q" in this way, the JIT compiler technology can make the program execution speed faster than the AOT compiler technology.

By the way, when using such a JIT compiler technology, the developer describes the source code 126 as illustrated in FIG. 43 by himself/herself. In the source code 126, the code that calls the mnemonic function mov, the mnemonic function load, and the like is similar to the syntax of the assembly language. Therefore, when the source code for the application program such as the source code 126 is described, the description errors similar to those of the first to fifth examples illustrated in FIGs. 8 to 13 may occur. Such a description error will be described below.

### FIRST EXAMPLE

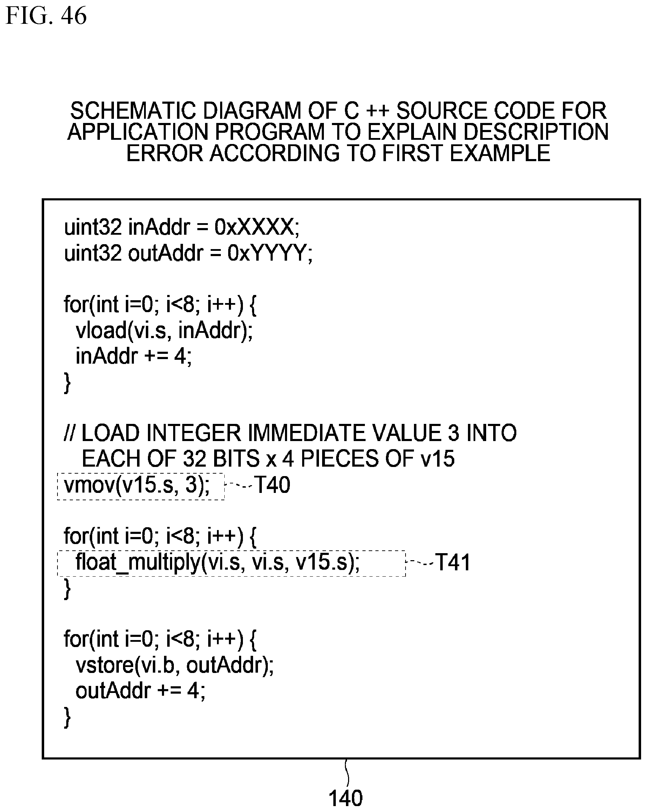

FIG. 46 is a schematic diagram of a C++ source code for the application program to explain the description error according to the first example.

In this source code 140, the mnemonic function vmov is called by a statement "vmov (v15.s, 3);" in a code T40. A first argument "v15.s" of the mnemonic function vmov is a format corresponding to v15.s of the assembly language. When this mnemonic function vmov is executed, a code that writes the instruction sequence of the machine language for executing the same process as the code "vmov v15.s, 3" of the assembly language to the memory 28 is executed. Further, this code "vmov v15.s, 3" is a code that writes, to the vector register v15, the vector data in which an immediate value "3" of an integer is stored in each of the four elements having the data size of the single word "s".

On the other hand, a statement "float_multiply (vi.s, vi.s, v15.s);" in a code T41 is a statement for calling a mnemonic function float multiply. When this mnemonic function float_multiply is executed, a code that writes the instruction sequence of the machine language for executing the same process as a code "float_multiply (vi.s, vi.s, v15.s);" of the assembly language to the memory 28 is executed. When "vi.s" or the like is described inside the for loop using the counter variable "i" in this way, it is assumed that the value "0", "1", "2", ... of the counter variable "i" is substituted for an "i" part of "vi". Further, this float multiply instruction is an instruction that multiplies the floating points stored in the vector registers specified in each of the second operand and the third operand by each other, and writes the result to the vector register of the first operand.

Since the data type as the arithmetic target by the float multiply instruction is a floating point in this way, the floating point must be written in the vector register v15 which is the source register of the float multiply instruction. However, in this example, this coding is incorrect because an integer is written to the vector register v15 in the code T40.

### . SECOND EXAMPLE

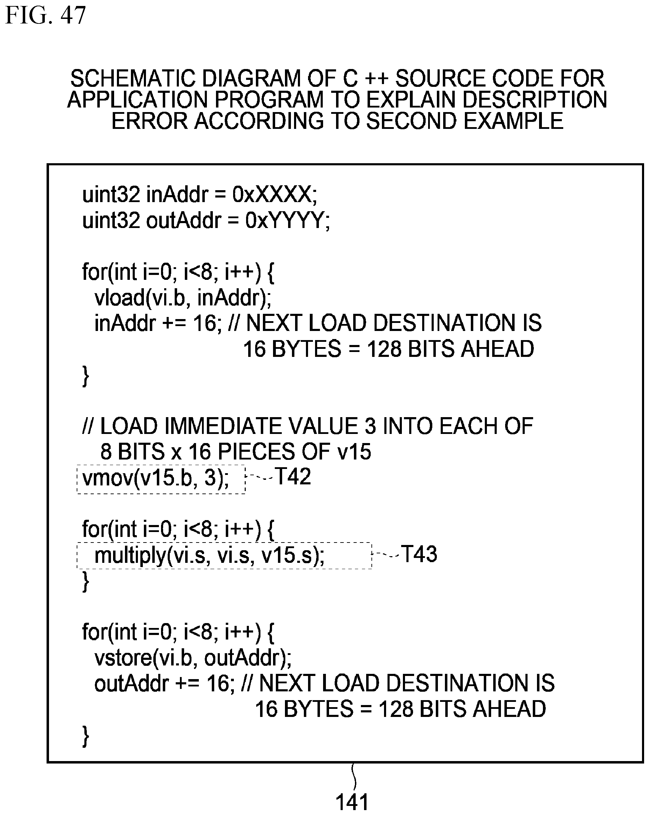

FIG. 47 is a schematic diagram of a C++ source code for the application program to explain the description error according to the second example.

In this source code 141, the mnemonic function vmov is called by a statement "vmov (v15.b, 3);" of the code T42. When this mnemonic function vmov is executed, a code that writes the instruction sequence of the machine language for executing the same process as a code "vmov v15.b, 3" of the assembly language to the memory 28 is executed. Further, this code "vmov v15.b, 3" is a code that writes, to the vector register v15, the vector data in which the immediate value "3" of the integer is stored in each of 16 elements having the data size of the byte "b".

On the other hand, in a code T43, a statement "multiply (vi.s, vi.s, v15.s);" for calling the mnemonic function multpily is executed. When this mnemonic function multiply is executed, a code that writes the instruction sequence of the machine language for executing the same process as a code "multiply vi.s, vi.s, v15.s" of the assembly language to the memory 28 is executed. This code "multiply vi.s, vi.s, v15.s" is a code that multiplies the elements having the data size of the single word "s" stored in each of the vector registers vi and v15 by each other, and writes the result to the corresponding element of the vector register vi. According to this, the developer intends to perform arithmetic between a plurality of pieces of data having the data size of the single word "s" in the code T43.

However, since the element having the data size of the byte "b" is written in the vector register v15 by the above-mentioned code T42, a result different from the developer's intention is obtained when the code T43 is executed.

Thus, the description in which the data size of the destination register of the preceding instruction is different from the data size of the source register of the succeeding instruction using the destination register as the source register is incorrect.

### • THIRD EXAMPLE

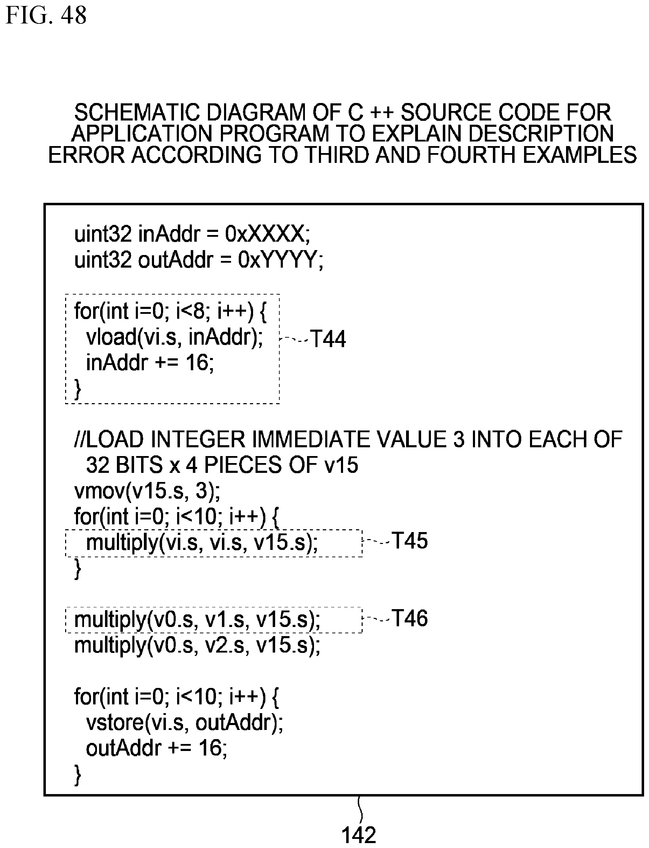

FIG. 48 is a schematic diagram of a C++ source code for the application program to explain the description error according to the third and the fourth examples.

In this source code 142, a statement "vload (vi.s, inAddr);" is executed for each of the values 0 to 7 of "i" in a code T44. This statement is for calling the mnemonic function vload corresponding to the vload instruction. When this mnemonic function vload is executed, a code that writes to the memory the instruction sequence of the machine language for executing the same process as the instruction "vload vi.s, inAddr" is executed. The instruction "vload vi.s, inAddr" is an instruction that writes data in the memory having an address of "inAddr" to each of the four elements of the vector register vi.

On the other hand, in a code T45, a statement "multiply (vi.s, vi.s, v15.s);" is executed for each of the values 0 to 9 of "i". However, vector registers v8 and v9, which are the second argument in a code T45 in the case of i=8 or i=9, do not have data written to them in the code T44 described above and are not used as the destination registers before the code T45. Therefore, it is unclear what kind of data is written in the vector registers v8 and v9, and the data in the vector registers v8 and v9 are indefinite.

Even if the code T45 is executed in such a state, the data written to the vector registers v8 and v9 of the destination register becomes also indefinite. Therefore, it is incorrect to specify a register that has never been used as the destination register as the source register.

### • FOURTH EXAMPLE

The description error according to the fourth example will be described with reference to the source code 142 of FIG. 48.

In a code T46 of the source code 142, a statement "multiply (v0.s, v1.s, v15.s);" that performs the process of generating a machine language equivalent to an instruction "multiply v0.s, v1.s, v15.s" is executed. This instruction is an instruction that multiplies respective elements of the vector registers v1 and v15 by each other and writes the result to the vector register v0.

The result of the code T45 is written in the vector register v0, but the contents of the vector register v0 are overwritten in the code T46 without using the result even once. In this case, the significance of the existence of the code T45 in which the arithmetic result is written in the vector register v0 becomes unclear, and it is suspected that the register is specified incorrectly in the code T45 or the code T46.

Therefore, it is incorrect to specify the register used as the destination register in this way as the destination register again without subsequently using it as the source register.

### • FIFTH EXAMPLE

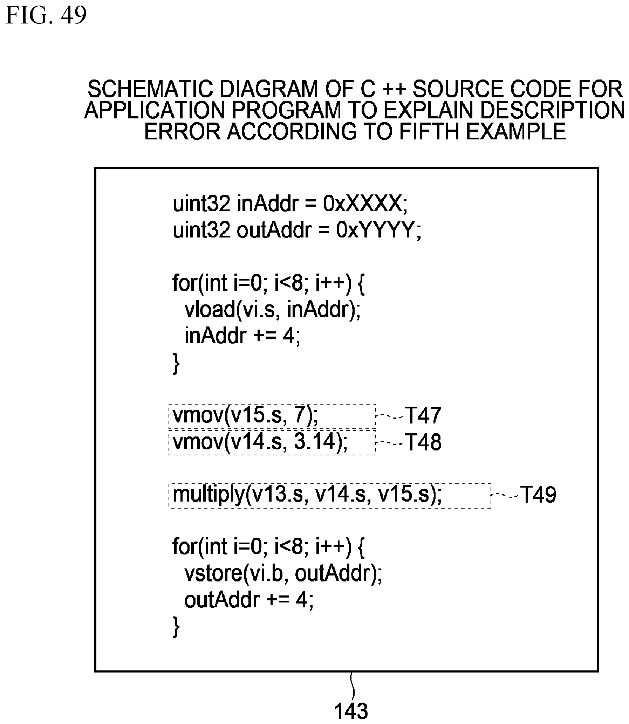

FIG. 49 is a schematic diagram of a C++ source code for the application program to explain the description error according to the fifth example.

In this source code 143, a statement "vmov (v15.s, 7);" for calling the mnemonic function vmov is executed in a code T47. When an integer is specified as the second argument in this way, the mnemonic function vmov becomes a function that generates a machine language that performs a process equivalent to the instruction "vmov v15.s, 7" that writes an immediate value "7" of an integer to each of the four elements of the vector register v15.

Further, in a code T48, the mnemonic function vmov in which "3.14" is specified as the second argument is executed. In this case, the mnemonic function vmov in the code T48 becomes a function that generates a machine language that performs a process equivalent to an instruction "vmov v14.s, 3.14" that writes "3.14" represented by the floating point to each of the four elements of the vector register v14.

On the other hand, in a code T49, the mnemonic function multiply which multiplies integers by each other is called. A multiply instruction corresponding to this mnemonic function multiply is an instruction on the premise that the data types of the two source operands are the same.

However, in this example, the data type written to the vector register v15 is an integer, whereas the data type written to the vector register v14 is a floating point, and they are not the same as each other.

Therefore, this difference in the data type of the data being written to the two source registers is also a coding error.

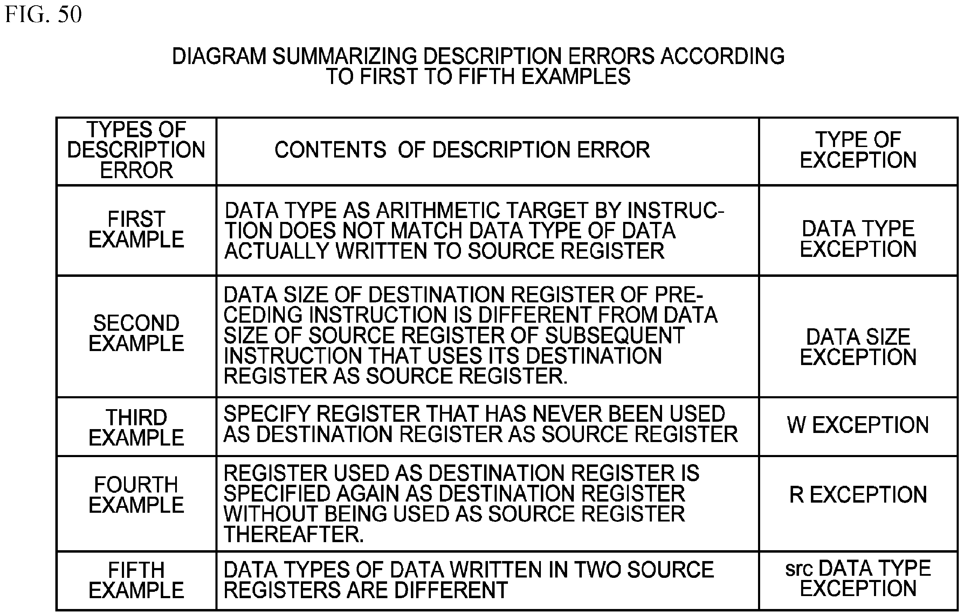

FIG. 50 is a diagram summarizing the description errors of the first to the fifth examples described above. As illustrated in FIG. 50, as in the first to third embodiments, exceptions corresponding to the first to fifth examples, respectively, are defined in the present embodiment as well. Among these, the "data type exception" and the "data size exception" correspond to the description errors in the first and second examples, respectively. The "W exception" and the "R exception" correspond to the description errors in the third and fourth examples, respectively. Then, the "src data type exception" corresponds to the description error in the fifth example.

Next, an information processing program that can detect these exceptions will be described. Also in this embodiment, as in the first to third embodiments, the status information that stores the status of each of the general-purpose register xn (n = 0, 1,... 31) and the vector register vn (n = 0, 1,... 31) is used.

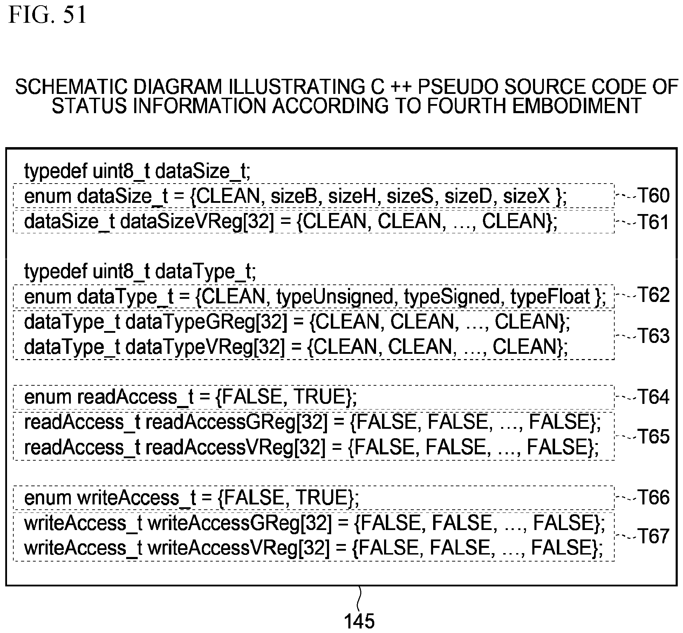

FIG. 51 is a schematic diagram illustrating a C++ pseudo source code representing the status information according to the present embodiment.

Codes T60 to T67 in this status information 145 are the same as the code T20 to T27 in status information 110 in FIG. 33, respectively, so only a brief description is given here.

As described with reference to FIG. 33, the code T61 is a code that declares an array "dataSizeVReg" storing the data size of the vector register vn (n = 0, 1, ... 31).

The code T63 is a code that declares the arrays "dataTypeGReg" and "dataTypeVReg" storing the data types of the general-purpose register xn (n = 0, 1, ... 31) and the vector register vn (n = 0, 1, ... 31), respectively.

Then, the code T65 is a code that declares arrays "readAccessGReg" and "readAccessVReg" indicating whether the general-purpose register xn (n = 0, 1, ... 31) and the vector register vn (n = 0, 1, ... 31) have been used as the source registers, respectively.

Further, the code T67 is a code that declares arrays "writeAccessGReg" and "writeAccessVReg" that indicate whether the general-purpose register xn and the vector register vn have been used as the destination registers, respectively.

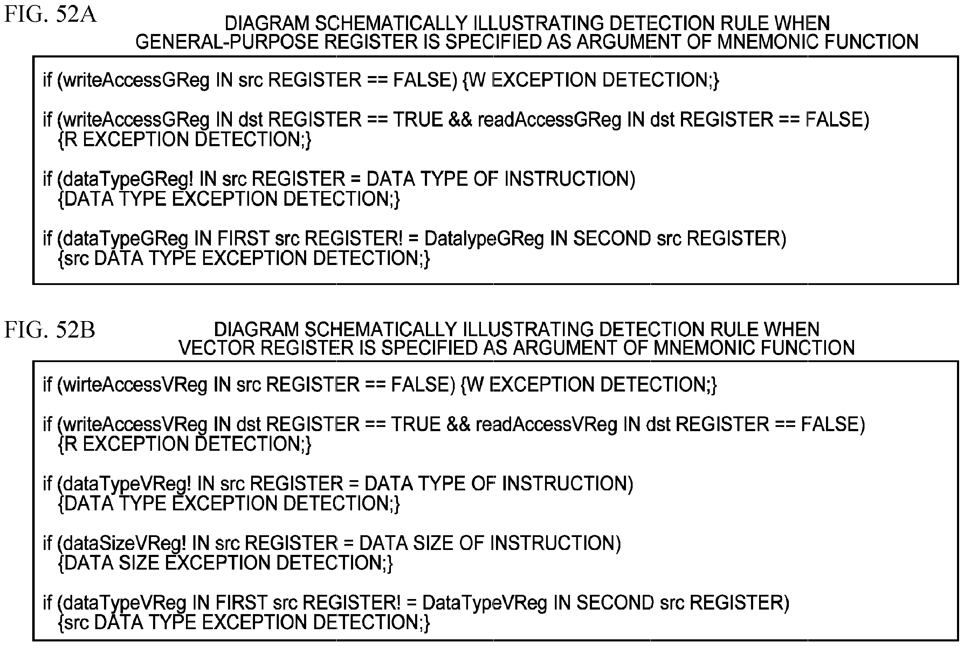

FIGs. 52A and 52B are schematic diagrams for explaining detection rules when the exception is detected using the status information of FIG. 51.

Among these, FIG. 52A is a diagram schematically illustrating the detection rule when the general-purpose register xn (n = 0, 1, ... 31) is specified as an argument of the mnemonic function. FIG. 52B is a diagram schematically illustrating the detection rule when the vector register vn (n = 0, 1, ... 31) is specified as an argument of the mnemonic function.

Since the detection rules in FIGs. 52A and 52B are the same as those in FIGs. 34A and 34B, only an outline thereof will be described here.

For example, as illustrated in FIG. 52A, the W exception occurs when the element of the array "writeAccessGReg" corresponding to the source register is "FALSE".

Further, the R exception is detected when the element of the array "writeAccessGReg" corresponding to the destination register is "TRUE" and the element of the array "readAccessGReg" corresponding to the destination register is "FALSE".

Further, the data type exception is detected when the element of the array "dataTypeGReg" corresponding to the source register is different from the data type as the arithmetic target by the instruction.

Then, the src data type exception is detected when the elements of the array "dataTypeGReg" corresponding to the first and second source registers are different from each other.

When the vector register is specified as the argument of the mnemonic function as illustrated in FIG. 52B, the "W exception", the "R exception", the "data type exception", and the "src data type exception" are detected as in the case of the general-purpose registers.

Furthermore, in the case of vector registers, the "data size exception" is also detected in addition to these exceptions. The "data size exception" is detected when the element of the array "dataSizeVReg" corresponding to the source register specified in the argument of the mnemonic function is different from the data size specified in the argument.

Next, the mnemonic function according to the present embodiment will be described. The mnemonic function according to the present embodiment is defined in an information processing program different from the program for application described by the developer. In the definition, various types are used as follows.

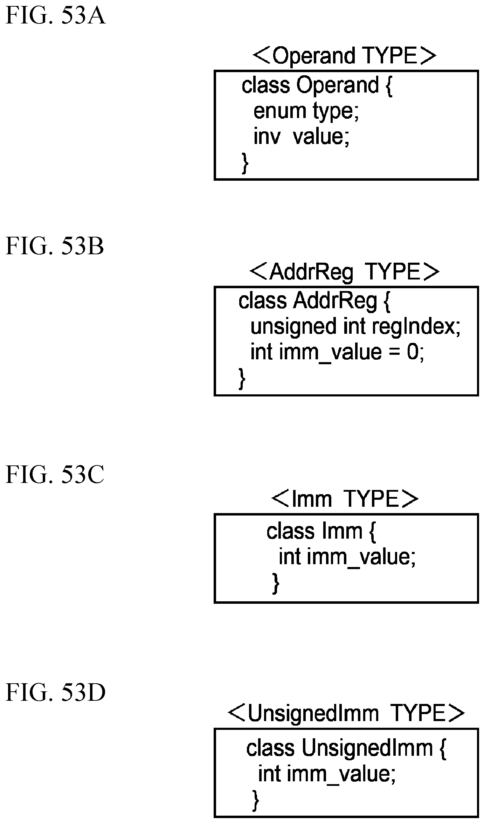

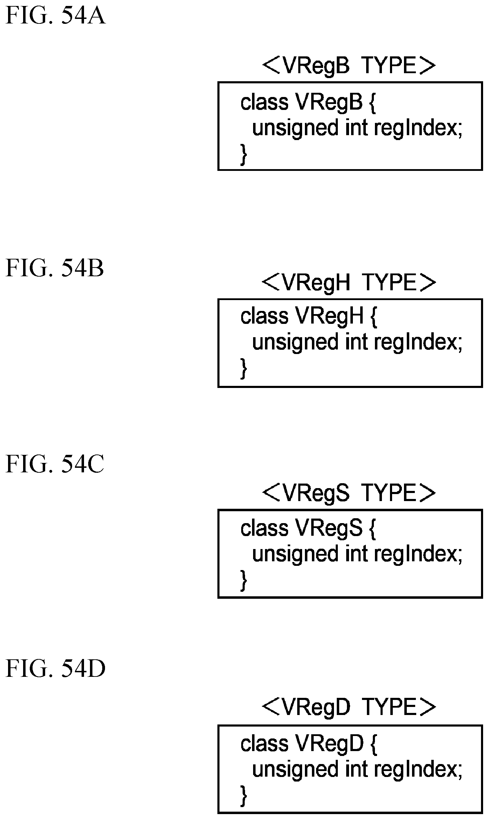

FIGs. 53A to 53D and FIGs. 54A to 54D are schematic diagrams of a C++ pseudo-source code that define various types used in the mnemonic function.

Among these, FIG. 53A is an example of a source code that defines an Operand type.

The operand type is a class having "type" and "value" as member variables. Among these, the "type" stores the types of operands such as registers and immediate values. Then, the "value" stores a numerical value such as an immediate value or an index of the register.

FIG. 53B is an example of a source code that defines an AddrReg type. The AddrReg type is a class indicating an address register. The member variables of the class are "regIndex" that stores an index of the register that holds a base value of the address, and "imm_value" that stores an immediate value that is an address offset value. An initial value of "imm_value" is 0.

FIG. 53C is an example of a source code that defines an Imm type. The Imm type is a class that indicates a signed integer immediate value. A member variable of the class is "imm_value" that stores the signed integer immediate value.

FIG. 53D is an example of a source code that defines an UnsignedImm type.

The UnsignedImm type is a class that indicates an unsigned integer immediate value. A member variable of the class is "imm_value" that stores the unsigned integer immediate value.

Further, FIGs. 54A to 54D are examples of source codes that define a VRegB type, a VRegH type, a VRegS type, and a VRegD type, respectively. These types are classes that indicate the data sizes of the elements of the vector data stored in the vector registers. For example, the VRegB type and the VRegH type correspond to the byte and the half word, respectively. And, the VRegS type and the VRegD type correspond to the single word and the double word, respectively. The member variables of these classes are all "regIndex", which are unsigned integers indicating the data size.

Next, the definition of the mnemonic functions according to the present embodiment will be described. The mnemonic functions are defined for all instructions in the instruction set. For example, if the instruction set includes the multiply instruction, the add instruction, the load instruction and the store instruction, the mnemonic function multiply, the mnemonic function add, the mnemonic function load and the mnemonic function store are defined for these. Some of these mnemonic functions will be described below.

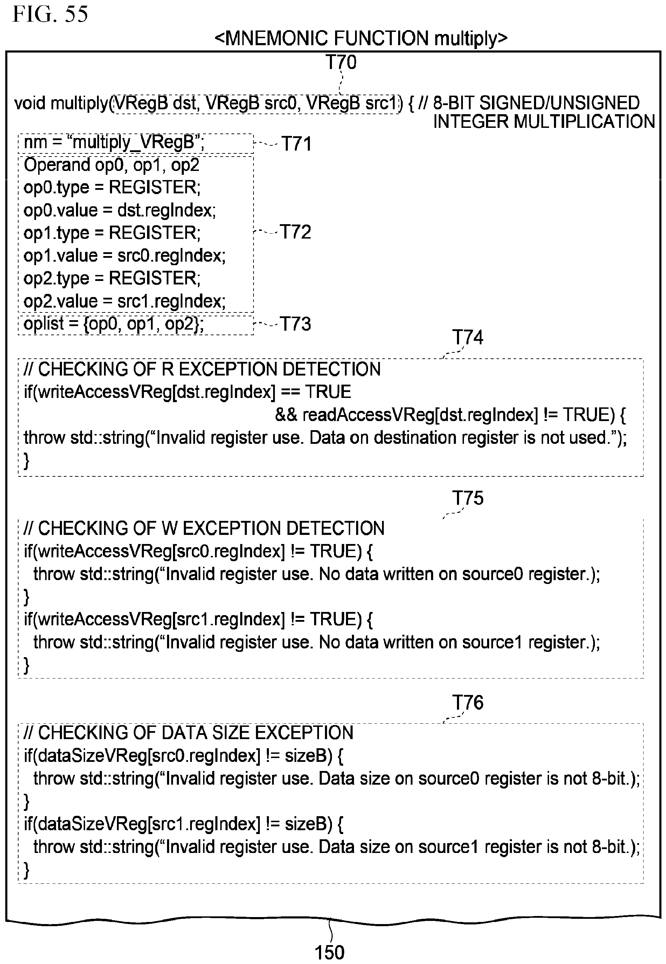

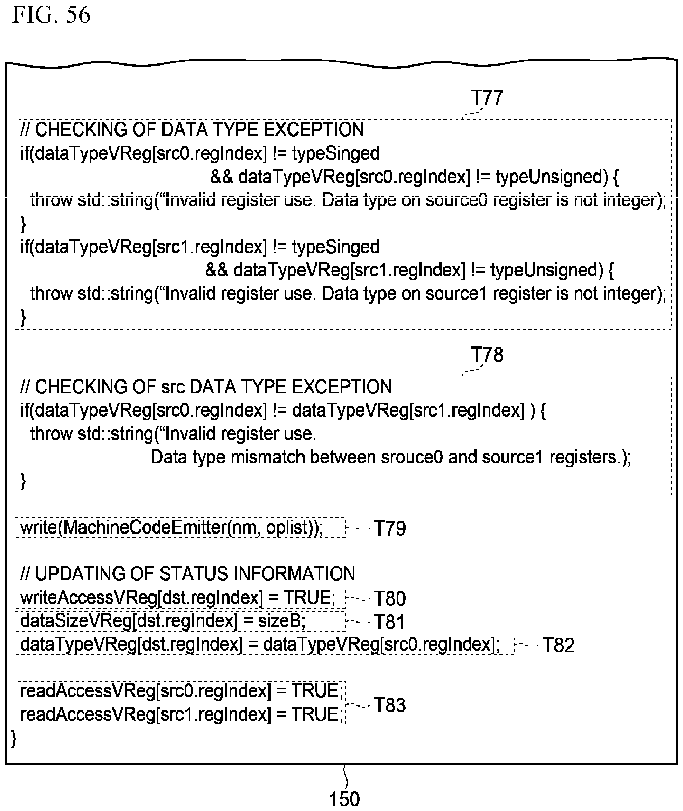

FIGs. 55 and 56 are schematic diagrams of a source file 150 in which a C++ source code that defines the mnemonic function multiply is described.

As illustrated in FIGS. 55 and 56, codes T70 to T83 are described in the source file 150 by the developer.

Among these, the code T70 is a code that declares the arguments "dst", "src0", and "src1" received by the mnemonic function multiply. Among these arguments, the "dst" indicates the destination register which is the first operand of the multiply instruction. Further, the "src0" and the "src1" indicate the source registers of the second operand and the third operand of the multiply instruction, respectively.

On the other hand, a statement "nm = "multiply_VRegB";" in the code T71 is a statement that substitutes the character string "multiply_VRegB" that identifies the instruction and the data size of its operand for a variable nm. Here, "multiply" in the character string "multiply_VRegB" uniquely identifies that the mnemonic function multiply corresponds to the multiply instruction. In addition, "VRegB" in the character string "multiply_VRegB" uniquely identifies that the data sizes of the source register and the destination register are the byte "b".

Further, the code T72 is a code that declares variables "op0", "op1", and "op2" of the Operand type and substitutes a predetermined value for each member variable. Here, it is assumed that the variables "op0", "op1", and "op2" correspond to "dst", "src0", and "src1", respectively.

In this case, the variable "op0" corresponds to the destination register. Therefore, "REGISTER" is substituted for the member variable "type" of the variable "op0", and "dst.regIndex" representing the index of the destination register is substituted for the member variable "value".

Similarly, the variable "op1" corresponds to the first source register, so "REGISTER" is substituted for its member variable "type", and "src0.regIndex" representing the index of the first source register is substituted for "value".

Further, the variable "op2" corresponds to the second source register, so "REGISTER" is substituted for its member variable "type", and "src1.regIndex" representing the index of the second source register is substituted for "value".

Then, the code T73 is a statement that substitutes the above variables "op0", "op1", and "op2" for an array "oplist".

On the other hand, the codes T74 to T78 are codes that detect the exceptions according to the detection rules of FIGs. 52A and 52B described above. For example, the code T74 and the code T75 are codes that detect "R exception" and "W exception", respectively. Further, the code T76 and the code T77 are codes that detect "data size exception" and "data type exception", respectively. And, the code T78 is a code that detects "src data type exception".

In these codes T74 to T78, statements that output the errors are also included if the exceptions are detected. For example, if the R exception is detected in the code T74, a character string "Invalid register use. Data on destination register is not used." is output to the standard output as an error.

Then, if no exception is detected in the above-mentioned codes T74 to T78, the codes T79 to T83 are executed.

Among these, the code T79 is a code that calls a MachineCodeEmitter function and writes a return value of the MachineCodeEmitter function to the memory 28 by the function write. The MachineCodeEmitter function is a function that receives the variable "nm" and the variable "oplist" as arguments and generates a machine language that represents a process performed by the instruction represented by the variable "nm" for the operand represented by the variable "oplist".

The MachineCodeEmitter function is a function that has been generated with the assembler program of the processor 90 and whose operation has been verified.

Then, the codes T80 to T83 are codes that update the status information 145.

Among these, the code T80 is a code that updates the element of the array "writeAccessVReg". In this example, since the destination register is used up by executing the multiply instruction, "TRUE" is stored in the element of the array "writeAccessVReg" corresponding to the destination register.

The code T81 is a code that updates the elements of the array "dataSizeVReg". In this example, in the code T70, the type of the first argument of the mnemonic function multiply is "VRegB" and the data size of the destination register of the multiply instruction is identified as the byte "b". Therefore, in the code T81, "sizeB" indicating the byte "b" is stored in the element of the array "dataSizeVReg" corresponding to the destination register.

And, the code T82 is a code that updates the element of the array "dataTypeVReg". In the multiply instruction, data having the same data type as the two source registers is written to the destination register. Therefore, in this example, the data type of the first source register is stored in the element of the array "dataTypeVReg" corresponding to the destination register.

The code T83 is a code that updates the elements of the array "readAccessVReg". When the mnemonic function multiply is executed, the two source registers indicated by the two arguments "src0" and "src1" specified in code T70 are used. Therefore, in the code T83, "TRUE" indicating that the source register has been used is stored in each element of the array "readAccessVReg" corresponding to these two source registers.

As described above, in this example, the codes T74 to T78 can detect "R exception", "W exception", "data size exception", "data type exception" and "src data type exception".

As mentioned above, the mnemonic functions are defined for all instructions in the instruction set. Next, an example of the source code of the mnemonic function other than the mnemonic function multiply will be described.

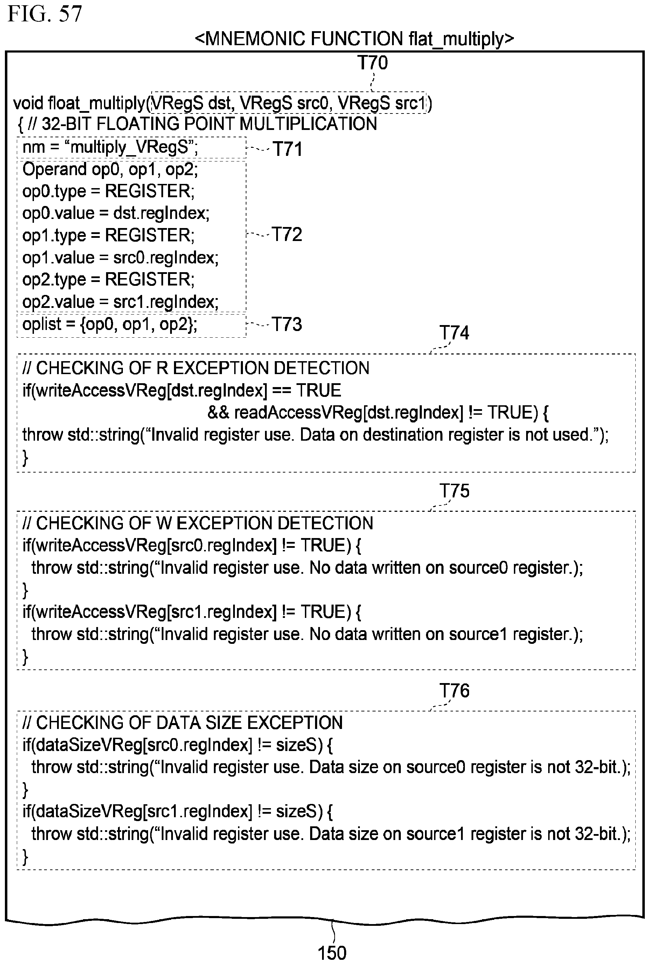

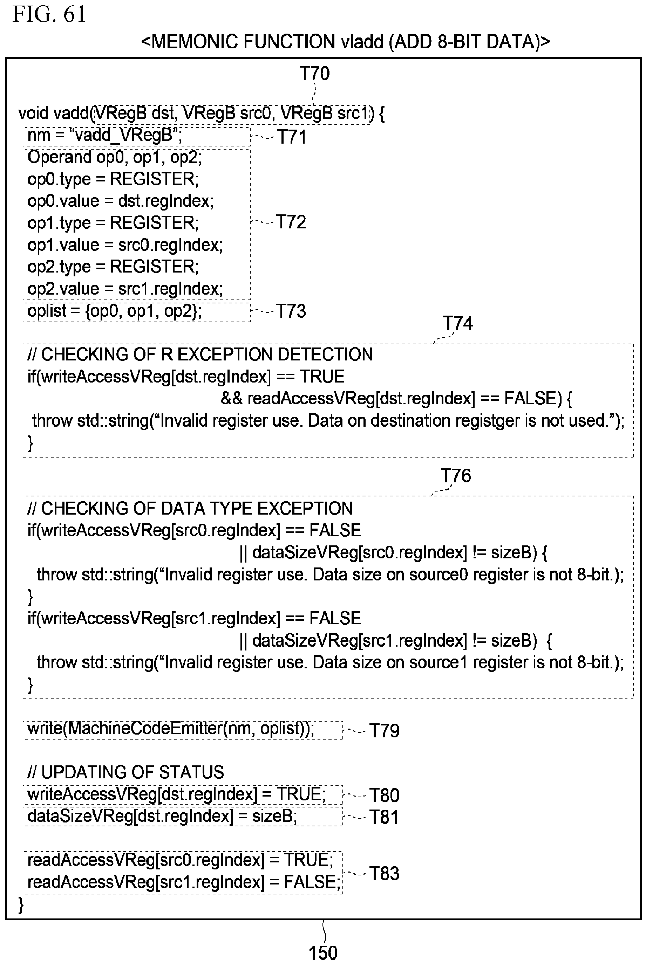

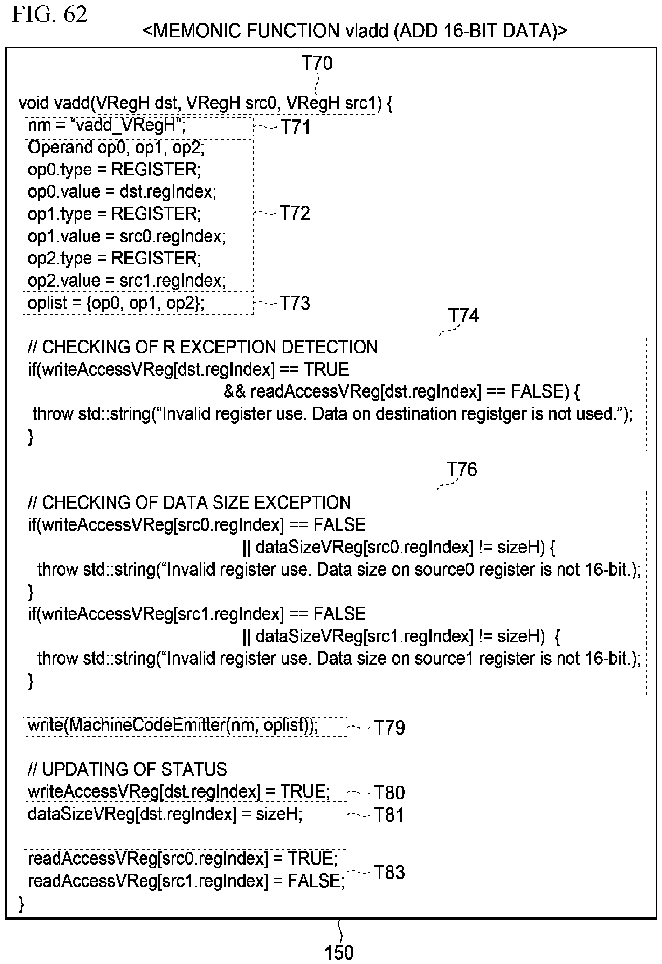

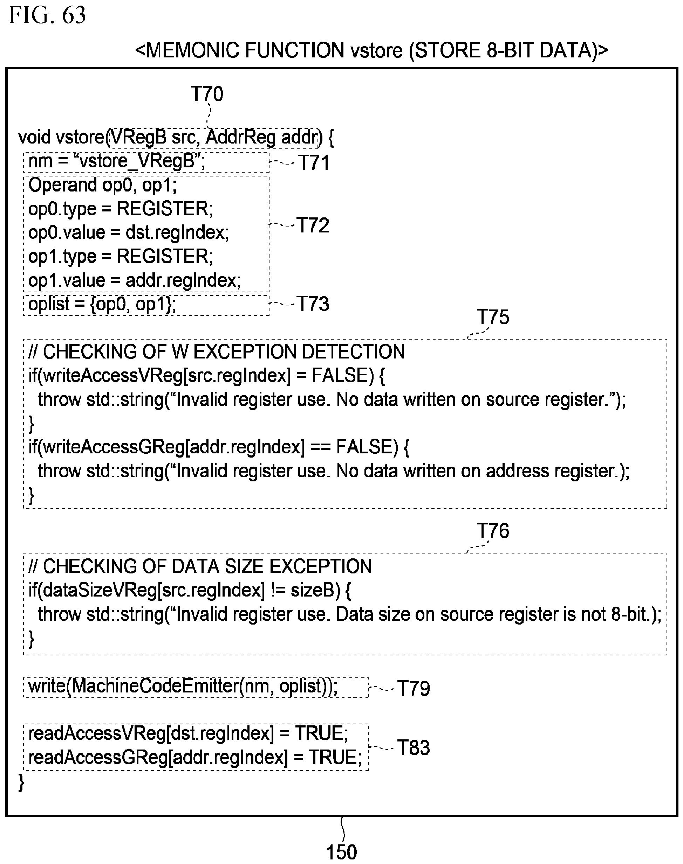

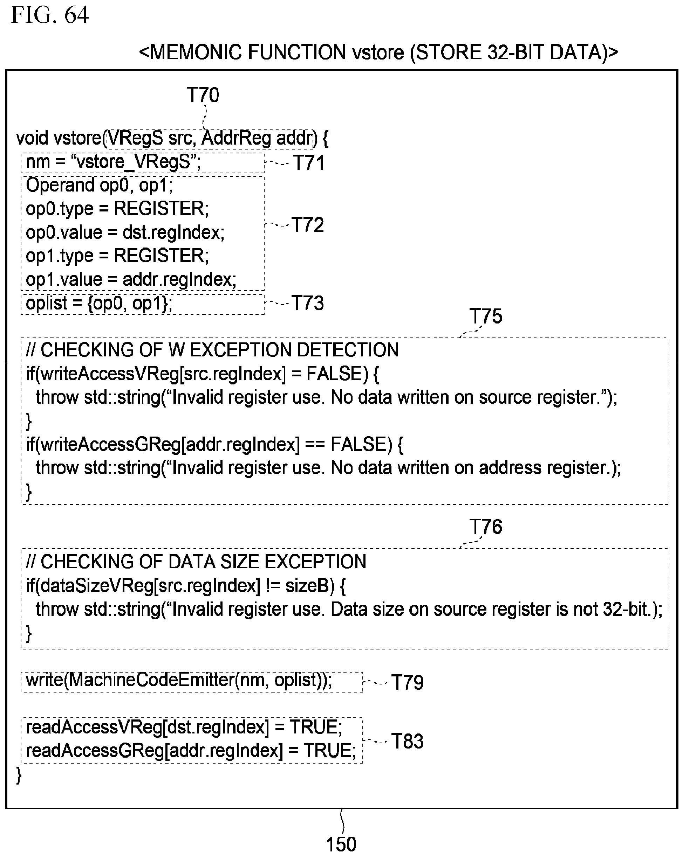

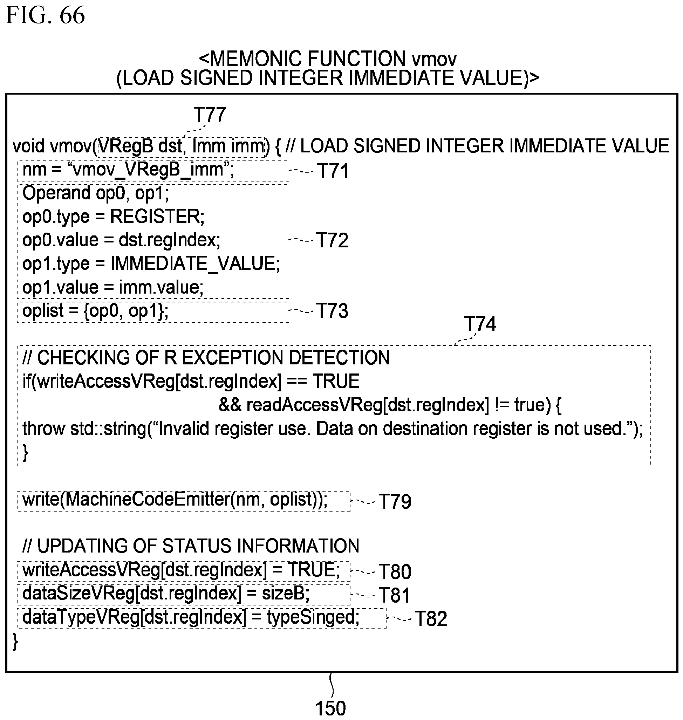

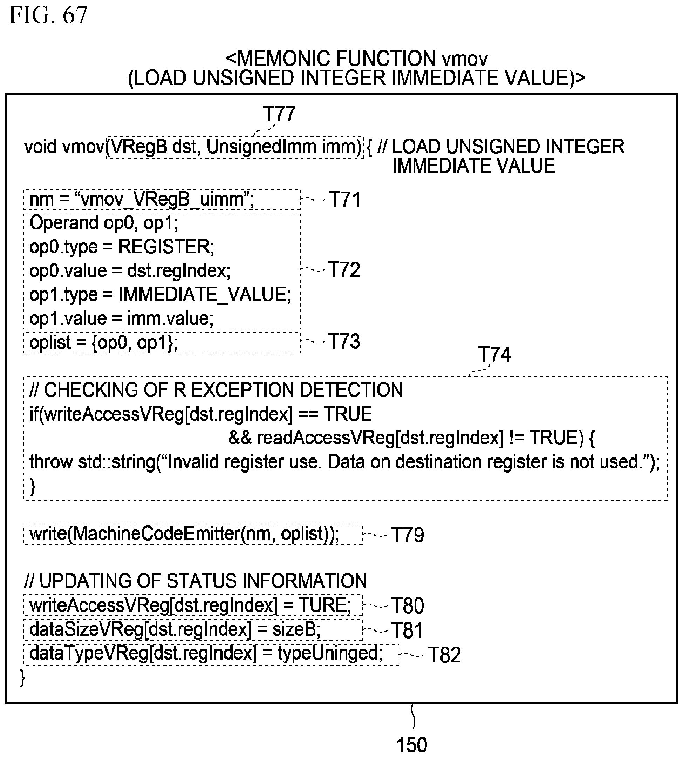

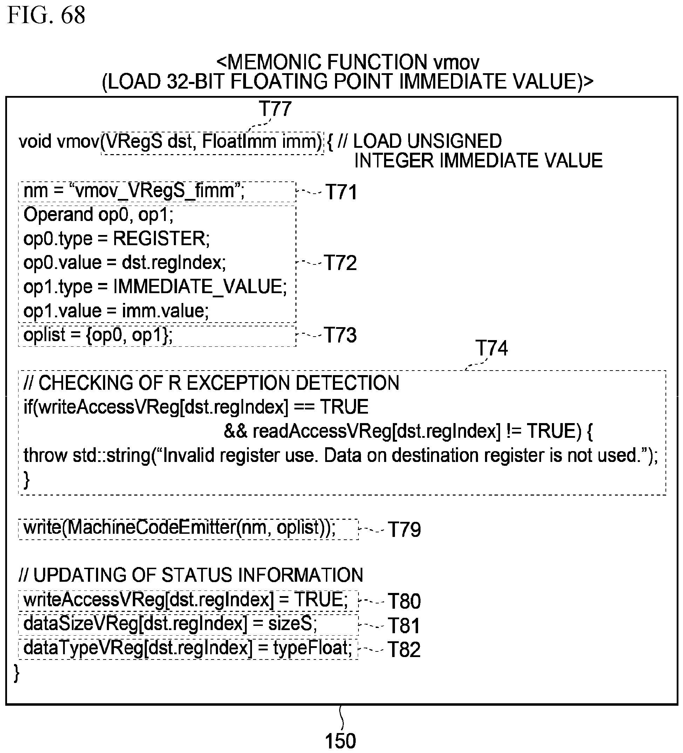

FIGs. 57 to 69 are schematic diagrams illustrating C++ pseudo source codes that define various mnemonic functions described in the above-mentioned source file 150.

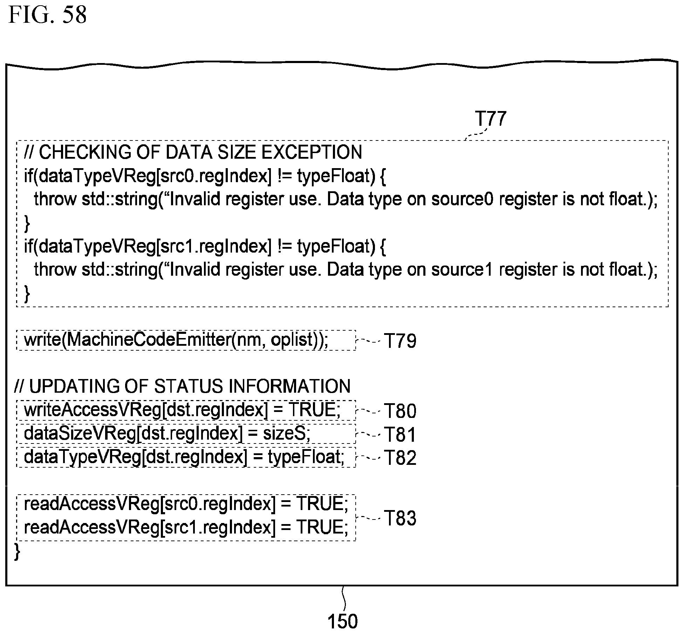

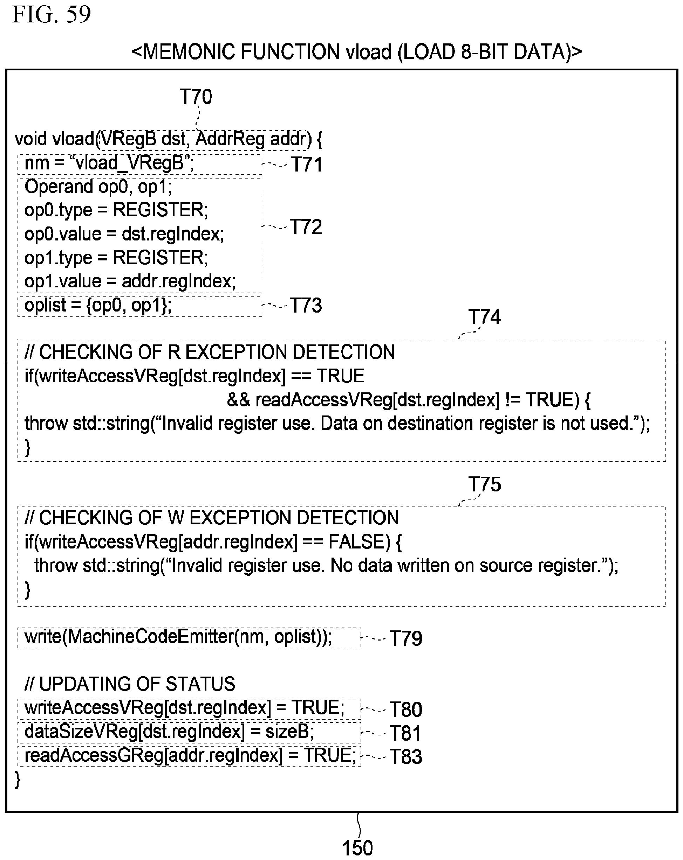

For example, FIGs. 57 and 58 are schematic diagrams of the source file 150 in which the C++ source code that defines the mnemonic function float_multiply is described. Further, FIGs. 59 to 69 are schematic diagrams of the source file 150 in which a source code that defines the mnemonic function corresponding to each of the vload instruction, the vadd instruction, the vstore instruction, the cvtssBtoH instruction , the vmov instruction and the cvtFloatSigned instruction is described.

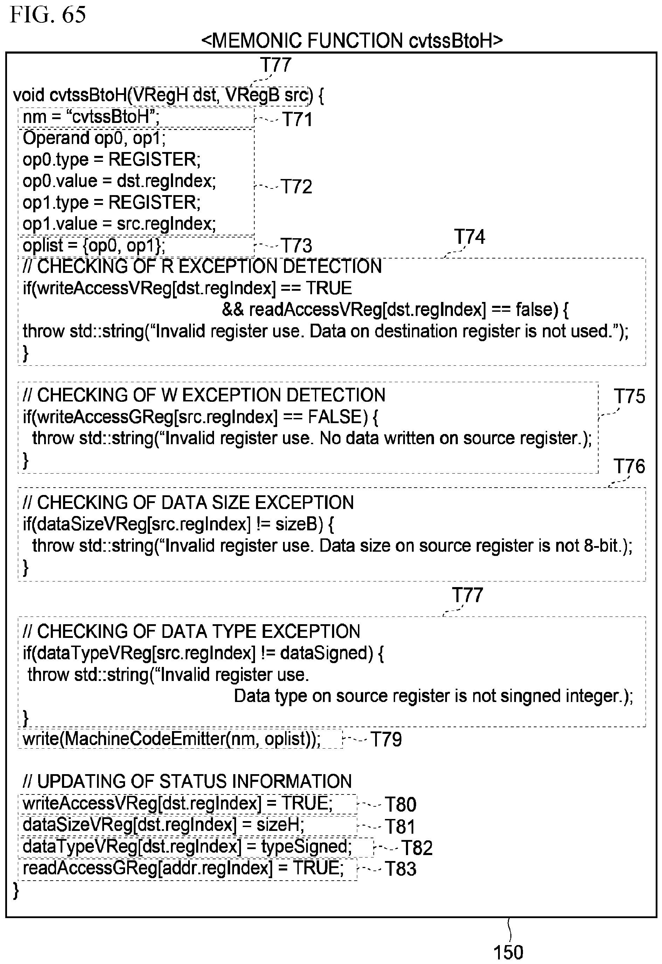

The mnemonic function cvtssBtoH in FIG. 65 is the mnemonic function corresponding to the cvtssBtoH instruction. The cvtssBtoH instruction is an instruction that converts 8 signed 8-bit data on a MSB (Most Significant Bit) side stored in the source register into signed 16-bit data, and stores the result in the destination register.

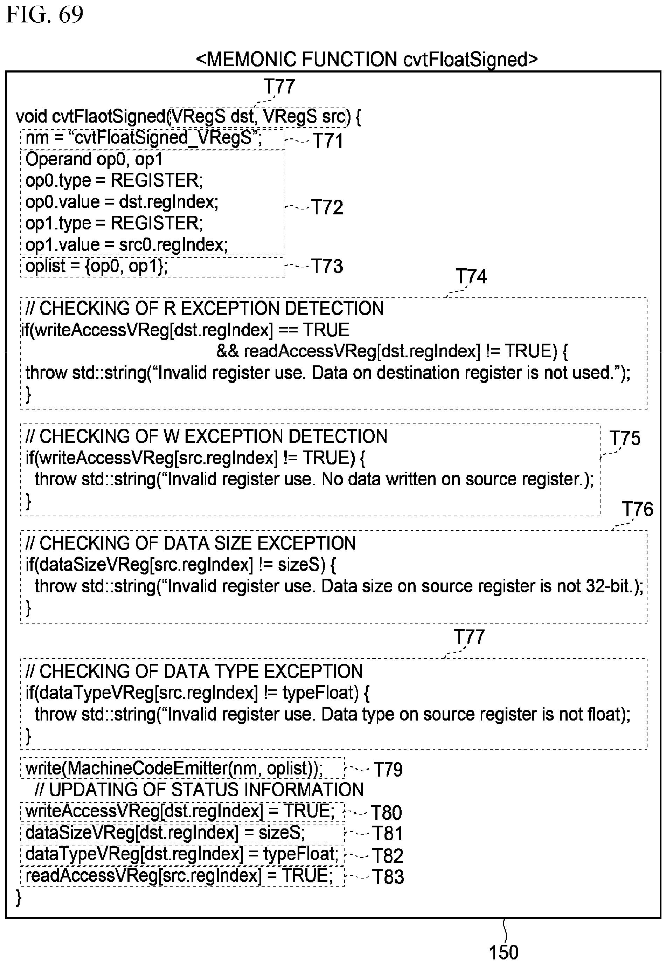

Then, the mnemonic function cvtFloatSigned in FIG. 69 is a mnemonic function corresponding to the cvtFloatSigned instruction. The cvtFloatSigned instruction is an instruction that converts a 32-bit floating-point stored in the source register into a 32-bit signed integer and stores the result in the destination register.

In each of FIG. 57 to 69, the codes of the same type as those described in FIGs. 55 and 56 are designated with the same marks, and the description thereof is omitted.

Although there are differences in the exceptions that occur depending on the instructions, also in the various mnemonic functions illustrated in FIGs. 57 to 69, the exceptions can be detected by the codes T74 to T78.

Depending on the type of mnemonic function, it may be convenient to disable the function to detect exceptions in this way. For example, there is a mnemonic function called xor (x0, x0, x0) that clears the general-purpose register x0 to 0 before the execution of the executable program. Since this function clears the general-purpose register x0 to 0 regardless of whether data is written to the source register, the general-purpose register x0 cannot be cleared to 0 unless the W exception is detected and executed.

In such a case, the function of the mnemonic function to detect the exception may be suppressed as follows.

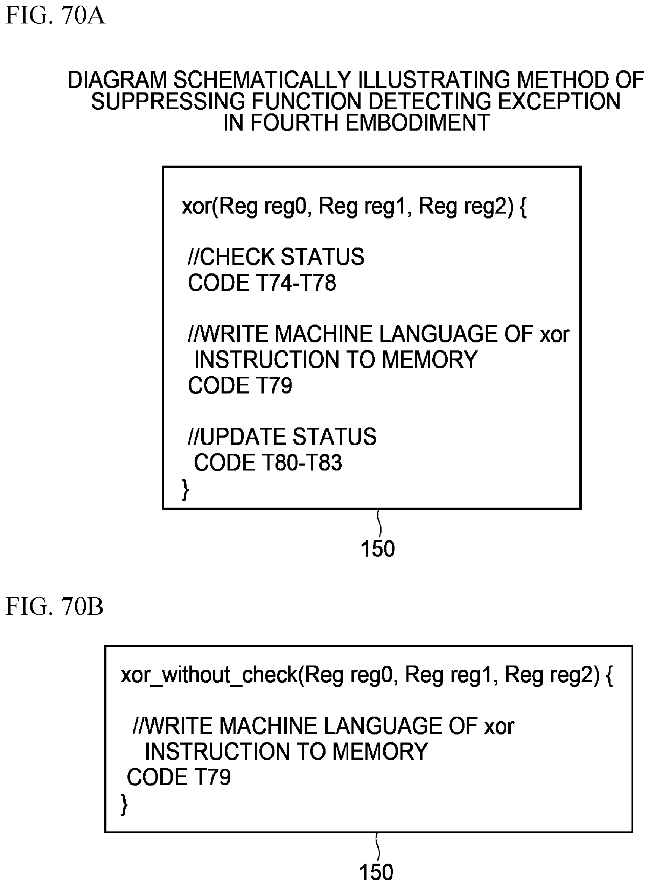

FIGs. 70A and 70B are diagrams schematically illustrating a method of suppressing the function detecting the exception.

In this example, the developer describes, in the source file 150, a mnemonic function xor with the function to detect exceptions as illustrated in FIG. 70A, and a mnemonic function xor_without_check without such a function as illustrated in FIG. 70B.

Among these, in the mnemonic function xor of FIG. 70A, the exceptions are checked by the above-mentioned codes T74 to T78, and the status information 145 is updated by the codes T80 to T83. On the other hand, in the mnemonic function xor_without_check of FIG. 70B, the codes T74 to T78 and T80 to T83 do not exist, and the exceptions are not checked and the status information 145 is not updated.

In both the mnemonic function xor and the mnemonic function xor_without_check, the code T79 that writes the machine language of the xor instruction to the memory 28 is described in the source file 150.

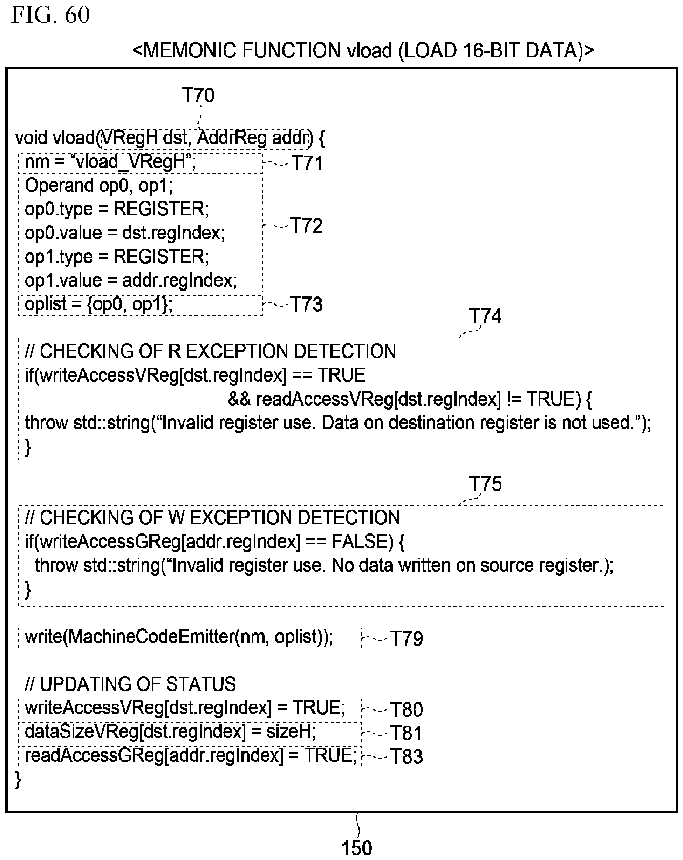

Then, when the developer wants to use the function of detecting the exception, the developer describes the code that calls the mnemonic function xor of FIG. 60A in the source file for the application program.

On the other hand, if the developer does not want to use the function of detecting the exception, the developer may write the code that calls the mnemonic function xor_without_check in FIG. 60B in the source file for the application program.

Instead of preparing two types of mnemonic functions in this way, it may be possible to suppress the function of detecting the exception with one mnemonic function.

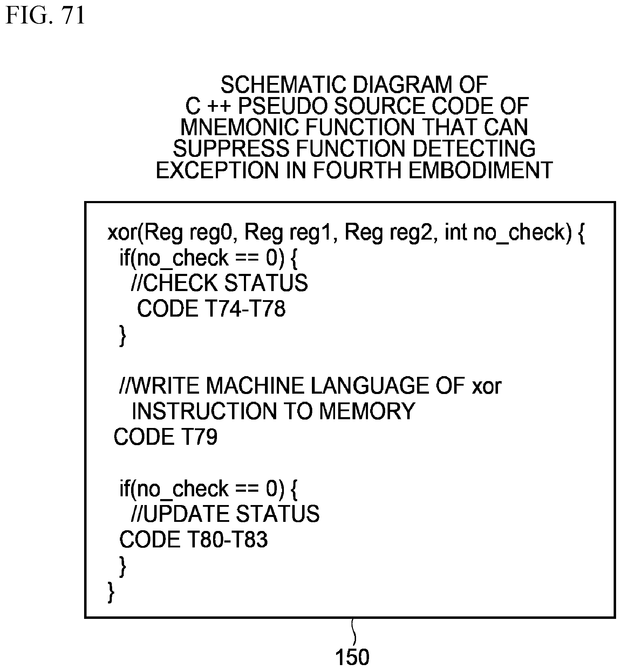

FIG. 71 is a schematic diagram of a C++ pseudo source code of the mnemonic function that can suppress the function detecting the exception in this way.

As illustrated in FIG. 71, in this example, an argument "no_check" to specify whether to enable the function of detecting the exception is added to the argument of the mnemonic function xor.

When the value of the argument "no_check" is "0", the exceptions are checked by the above-mentioned codes T74 to T78, and the status information 145 is updated by the codes T80 to T83. On the other hand, when the value of the argument "no_check" is other than "0", the exception is not checked and the status information is not updated.

This allows the developer to easily enable or disable the function of detecting the exception by specifying the value of the argument "no_check" when calling the mnemonic function xor in the source file for the application program.

In addition, the function of detecting the exception with global variables may be suppressed as follows.

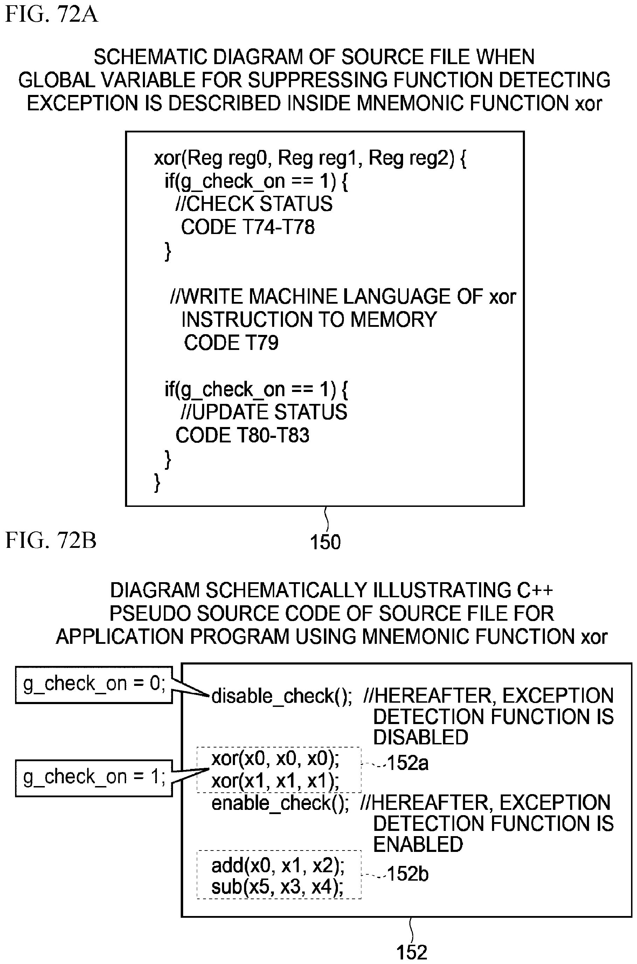

FIG. 72A is a schematic diagram of the source file 150 when a global variable "g_check_on" for suppressing the function detecting the exception is described inside the mnemonic function xor.

In this example, the developer describes, in the source file 150, an if statement for determining whether the value of the global variable "g_check_on" is "1". Further, the developer describes the codes T74 to T78 for checking the exception and the codes T80 to T83 for updating the status information 145 inside the if statement.

FIG. 72B is a diagram schematically illustrating a C++ pseudo source code of a source file 152 for the application program using the mnemonic function xor.

Here, it is assumed that the developer describes a code 152a that calls a plurality of mnemonic functions xor in the source file 152. And, it is assumed that the developer wants to disable the function of detecting the exceptions by these mnemonic functions xor. In this case, the developer describes a disable_check function at a position before the code 152a. The disable_check function is a function that sets the value of the global variable "g_check_on" to "0".

Thereby, the codes T74 to T78 in the mnemonic function xor (x0, x0, x0) and the mnemonic function xor (x1, x1, x1) of the code 152a are not executed, and these mnemonic functions can disable the function of detecting the exceptions.

Further, if the developer wants to enable the function of detecting the exceptions in a code 152b after the code 152a, the developer may describes an enable_check function at a position after the code 152a. The enable_check function is a function that sets the value of the global variable "g_check_on" to "1".

Thereby, the codes T74 to T78 in the mnemonic function xor (x0, x0, x0) and the mnemonic function xor (x1, x1, x1) of the code 152a are executed, and these mnemonic functions can enable the function of detecting the exceptions.

By using the disable _check function and the enable _check function in this way, it is possible to disable the process in which the mnemonic function detects the exceptions, or enable the process in which the mnemonic function detects the exceptions. The definitions of the disable_check function and the enable_check function may be described in the source file 150 by the developer, for example.

Next, the MachineCodeEmitter function in the code T79 of FIGs. 55 to 69 will be described.

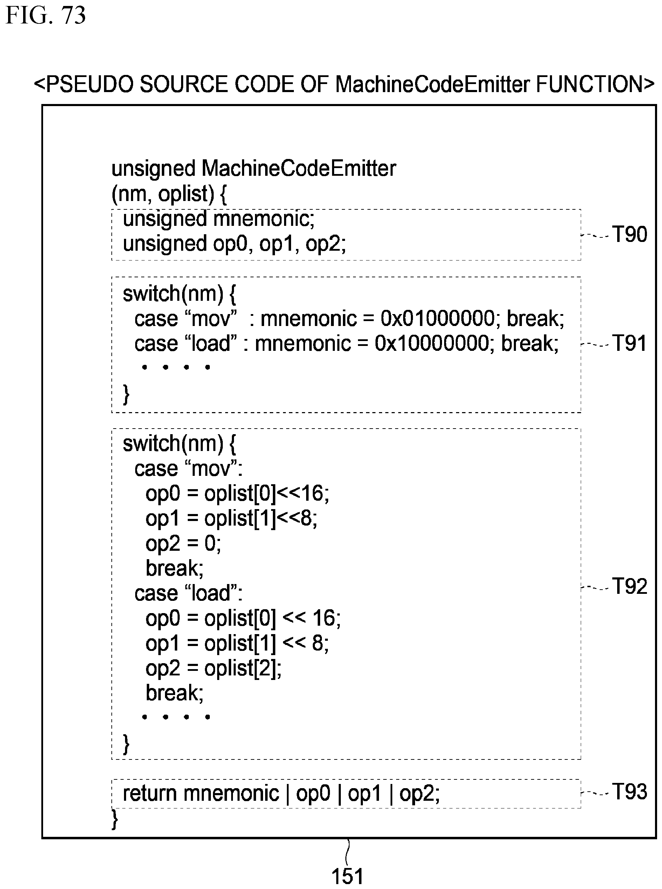

FIG. 73 is a schematic diagram illustrating an example of a source file 151 in which a C++ pseudo source code of the MachineCodeEmitter function is described. The source file 151 may be a part of the source file of the assembler program itself.

In this example, the codes T90 to T93 realize the function of the MachineCodeEmitter function. Among these, the code T90 is a statement that declares each of the variable "mnemonic" and the variables "op0", "op1", and "op2" as 32-bit unsigned integers.

The code T91 is a code that substitutes an opcode corresponding to the content of the variable "nm" received as an argument by the MachineCodeEmitter function for the variable "mnemonic". For example, when the mnemonic identified by the variable "nm" is "mov", the opcode "0x01000000" of the mov instruction is substituted for the variable "mnemonic".

Then, the code T92 is a code that locates these variables at the bit positions specified in an instruction specification by performing bit operation on each of the variables "op0", "op1" and "op2" according to the contents of the variable "nm". For example, in the case of the mov instruction, the first operand is located on 17th to 24th bits in the 32 bits, and the second operand is located on 8th to 16th bits. Therefore, in the case of the mov instruction, the bit string of the variable "op0" is located on 17th to 24th bits in the 32 bits by executing a statement "op0 = oplist [0] << 16;". On the other hand, for the variable "op1", the bit string of "op1" is located on the 8th to 16th bits in the 32 bit by executing a statement "op1 = oplist [1] << 8;". Since the mov instruction does not take the third operand, the statement "op2 = 0;" sets the variable "op2" to "0".

Further, the code T93 is a statement that generates a bit string in which each of the variables "mnemonic", "op0", "op1" and "op2" is concatenated in order from the most significant bit, and returns it as a return value. The bit string is a machine language that represents the process performed by the instruction identified by the variable "nm" for the operand identified by the variable "oplist".

In this way, the MachineCodeEmitter function is a function that generates a machine language that represents the process performed by the instruction represented by the argument "nm" for the operand represented by the argument "oplist".

When the processor 90 is developed, a set of tools for generating a executable program of the machine language running on the processor 90 is also developed. The set of tools include a compiler for converting source files written in C or C++ into the assembly language, and an assembler program for converting the assembly language into the machine language. Such a set of tools include, for example, LLVM The MachineCodeEmitter function is a function built into a LLVM assembler program, and the operation of the assembler program is verified and provided when the assembler program is developed. Therefore, in the present embodiment, it is not necessary to verify the operation of whether the mnemonic function generates the correct machine language, and the burden on the developer can be reduced.

The developer can develop various application programs to be executed by the processor by using the source file 150 in which the mnemonic function is defined as described above. Therefore, the development environment of the application program will be described below.

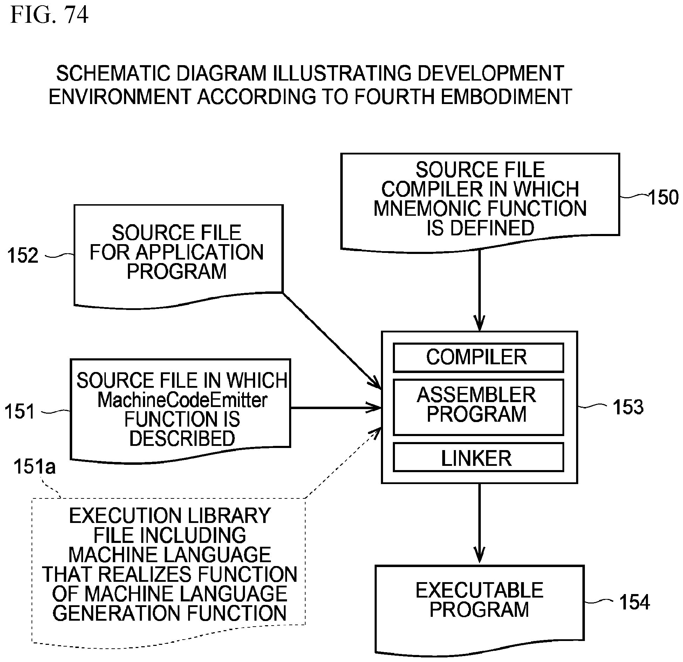

FIG. 74 is a schematic diagram illustrating the development environment using the source file 150 in which the mnemonic function is defined.

In this example, the developer generates the source file 152 for the application program using, for example, C++. The source file 152 is a file premised on using the function of the JIT compiler technology, and includes a description for calling the mnemonic function in the source file 150 in addition to a library function of C++.

Then, under the instruction of the developer, a program group 153 including the compiler, the assembler program, and the linker performs build. At the time of the build, the compiler included in the program group 153 compiles the source file 152.

At this time, the compiler loads each of the source files 150, 151, 152 and outputs an intermediate language file of the assembly language. Among these source files, the source file 151 is a source file in which the above-mentioned MachineCodeEmitter function is described. Then, the assembler program converts the intermediate language file into the instruction sequence of the machine language to generate an object file.

The linker then links the object file with the various libraries to generate a binary executable program 154 that can be executed by the processor 90.

In a processor in which generation rules of the machine language are concealed, the execution library file may be available even though the source file of the assembler program is not published. In that case, instead of the source file 151, an execution library file 151a whose function of the machine language generation function has been converted into the instruction sequence of the machine language in advance is used as an input, and the execution library file 151a may be generated by linking this.

As described above, the executable program 154 can be generated from the source file 152 for the application program.

In the present embodiment, as illustrated in FIGs. 55 to 69, the codes T74 to T78 that detect the exceptions according to the detection rules of FIGs. 52A and 52B are described in the source file 150 that defines each mnemonic function. Therefore, if there is a description error in the source file 152 for the application program that applies to the detection rules of FIGs. 52Aand 52B, an error is output when the executable program 154 is executed. Thereby, the developer can notice that there is the description error in the source file 152, and it becomes easy for the developer to debug the source file 152.

Next, the operation of the information processing device 117 when the executable program 154 is executed will be described.

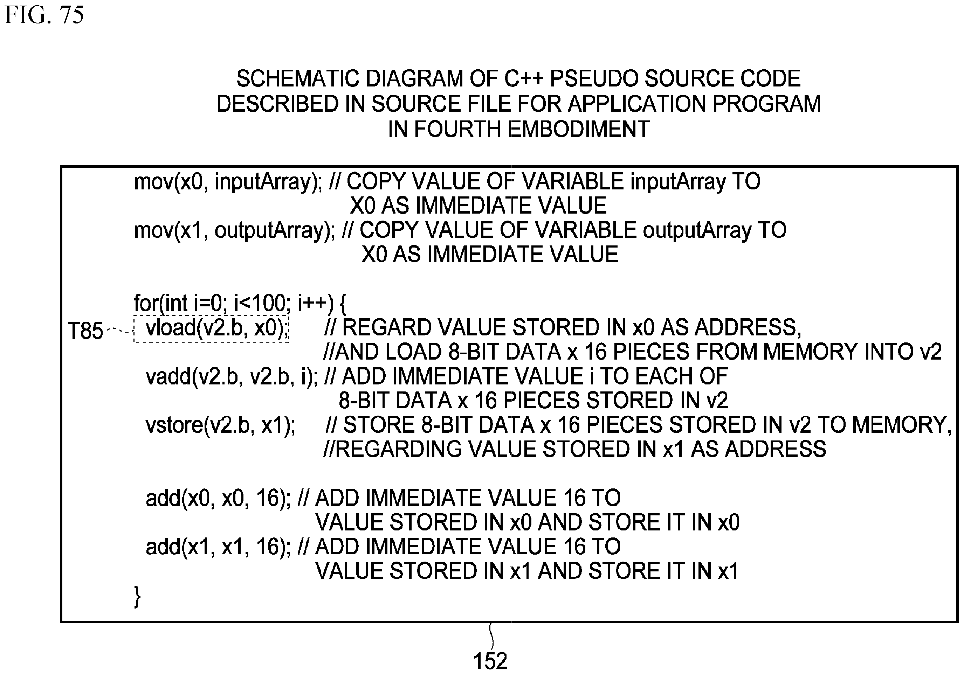

FIG. 75 is a schematic diagram of a C++ pseudo source code described in the source file 152 for the application program for acquiring the executable program 154.

As illustrated in FIG. 75, in this example, it is assumed that the mnemonic functions corresponding to the mov instruction, the load instruction, the add instruction, and the store instruction, respectively, are described in the source file 152.

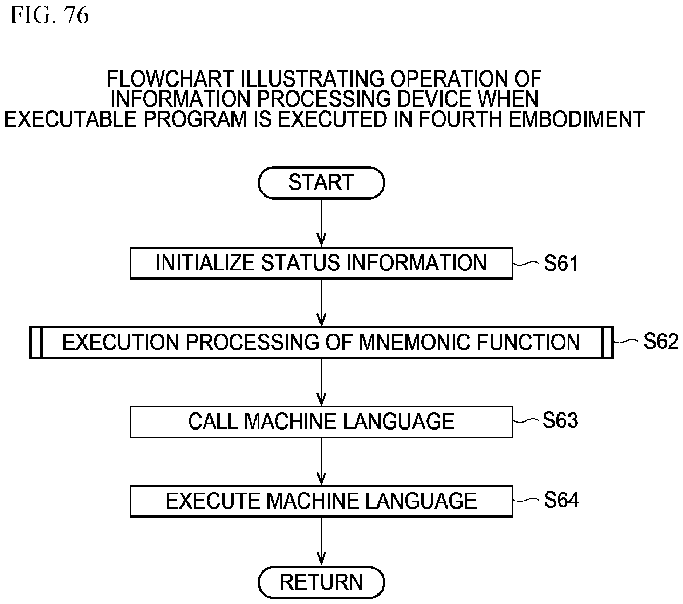

FIG. 76 is a flowchart illustrating the operation of the information processing device 117 when the executable program 154 obtained by compiling this source file 152 is executed.

First, the information processing device 117 initializes the status information 145 (see FIG. 51) (step S61).

For example, the information processing device 117 stores "CLEAN" in all the elements of the arrays "dataSizeVReg", "dataTypeGReg", and "dataTypeVReg". Further, the information processing device 117 stores "FALSE" in all the elements of the arrays "readAccessGReg", "readAccessVReg", "writeAccessGReg", and "writeAccessVReg".

Next, the information processing device 117 executes the execution process of the mnemonic function described in the executable program 154 (step S62). This process is performed for each of the plurality of mnemonic functions described in the executable program 154 of FIG. 75.

For example, when the execution process of the mnemonic function load (v2.b, x0) described in the code T85 of FIG. 75 is executed, the MachineCodeEmitter function is called inside the mnemonic function load (v2.b, x0). Then, the MachineCodeEmitter function generates the machine language 128 (see FIG. 45) corresponding to the code "load v2.b, x0" of the assembly language and writes it to the memory 28.

Next, the information processing device 117 calls the machine language 128 generated in step S62 (step S63) and executes it (step S64).

As described above, the process of the information processing device 117 when executing the executable program 154 is completed.

Next, the execution process of the mnemonic function in step S62 described above will be described.

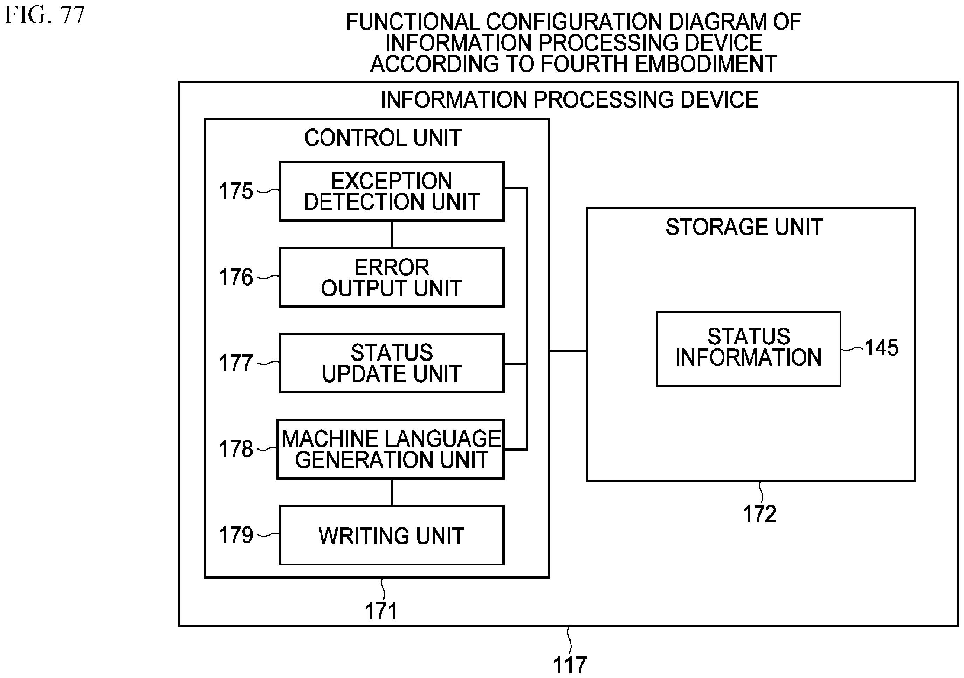

FIG. 77 is a functional configuration diagram of the information processing device 117 when executing the execution process of the mnemonic function.

As illustrated in FIG. 77, the information processing device 117 includes a control unit 171 and a storage unit 172.

Among these, the storage unit 172 is a functional block realized by the memory 28, and stores the above-mentioned status information 145.

On the other hand, the control unit 171 has an exception detection unit 175, an error output unit 176, a status update unit 177, a machine language generation unit 178, and a writing unit 179.

Among these, the exception detection unit 175 is a processing unit realized by the codes T74 to T78 of FIGs. 55 to 69, and detects the exception generated when the mnemonic function is executed, based on the status information 145.

For example, consider a case where the execution process of the mnemonic function vload (v2.b, x0) described in the code T85 of FIG. 75 is executed. In this case, in the code T74 of FIG. 59, the R exception is detected based on the array writeAccessVReg [dst.regIndex] and the array readAccessVReg [dst.regIndex] which are a part of the status information 145. Here, a variable "dst" stores a first argument "v2.b" of the mnemonic function vload (v2.b, x0).

Further, in this case, in the code T75 of FIG. 59, the W exception is detected based on the array writeAccessVReg [addr.regIndex] which is a part of the status information 145. Here, a variable "addr" stores a second argument "x0" of the mnemonic function vload (v2.b, x0).

On the other hand, the error output unit 176 is a processing unit that outputs an error when the exception detection unit 175 detects the exception. In the present embodiment, the error output unit 176 is realized by a throw statement described in each of the codes T74 to T78 of FIGs. 55 to 69. In the example of executing the execution process of the mnemonic function vload (v2.b, x0) described in the code T85 of FIG. 75, the error is output by the throw statement in the code T74 of FIG. 59. As illustrated in FIG. 59, the content of the error is the character string "Invalid register use. Data on destination register is not used.". Further, when the code T75 of FIG. 59 is executed, the character string "Invalid register use. No data written on source register." is output as the error.

The, the status update unit 177 is a processing unit that updates the contents of the status information 145 when the exception detection unit 175 does not detect the exception. The function of the status update unit 177 is realized by the codes T80 to T83 of FIGs. 55 to 69.

Further, the machine language generation unit 178 is a processing unit realized by the MachineCodeEmitter function in the code T79 of FIGs. 55 to 69. As described above, the MachineCodeEmitter function is a function that generates the machine language 128 that represents the process that the instruction corresponding to the mnemonic function performs on the operand.

Then, the writing unit 179 is a processing unit realized by the write function in the code T79 of FIGs. 55 to 69, and is a processing unit that writes the instruction sequence of the machine language generated by the machine language generation unit 178 to the memory 28.

Next, an information processing method executed by each unit of the information processing device 117 illustrated in FIG. 77 will be described.

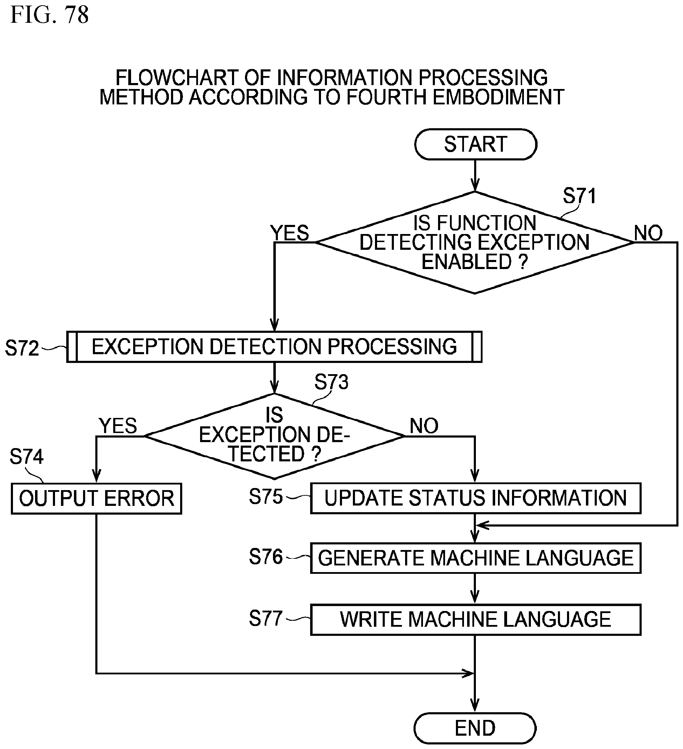

FIG. 78 is a flowchart of the information processing method according to the present embodiment. First, the exception detection unit 175 determines whether the function for detecting the exception is enabled (step S71). For example, the exception detection unit 175 determines that the function is enabled when the value of the argument "no_check" in FIG. 71 is "0", and determines that the function is disabled when the value of the argument "no _check" is other than "0".

Further, when the developer describes a function disable_check () of FIG. 72B in the source file 150, the exception detection unit 175 determines whether the function of detecting the exception is enabled according to the value of the global variable "g_check_on". For example, the exception detection unit 175 determines that the above function is enabled when the value of the global variable "g_check on" is "1", and determines that the above function is disabled when the value of the global variable "g_check_on" is other than "1".

Here, if it is determined that the function for detecting the exception is not enabled (step S71: negation), the process proceeds to step S76.

In step S76, the machine language generation unit 178 generates the machine language 128. For example, consider a case where the mnemonic function vload (v2.b, x0) described in the code T85 of FIG. 75 is executed. In this case, the machine language generation unit 178 generates the machine language 128 of the process performed by the instruction "vload v2.b, x0" of the assembly language corresponding to the mnemonic function vload (v2.b, x0) for the operands "v2.b" and "x0".

Then, the writing unit 179 writes the machine language 128 to the memory 28 (step S77).

On the other hand, if it is determined that the function for detecting the exception is enabled (step S71: affirmative), the process proceeds to step S72.

In step S72, the exception detection unit 175 performs the exception detection processing. The exception detection processing will be described later.

Then, the exception detection unit 175 determines whether the exception has been detected (step S73).

Here, if it is determined that the exception has been detected (step S73: affirmative), the process proceeds to step S74.

In step S74, the error output unit 176 outputs the error, and the process is completed.

On the other hand, if it is determined that no exception has been detected (step S73: negation), the process proceeds to step S75, and the status update unit 177 updates the status information 145. After that, the above-mentioned steps S76 and S77 are executed to complete the process.

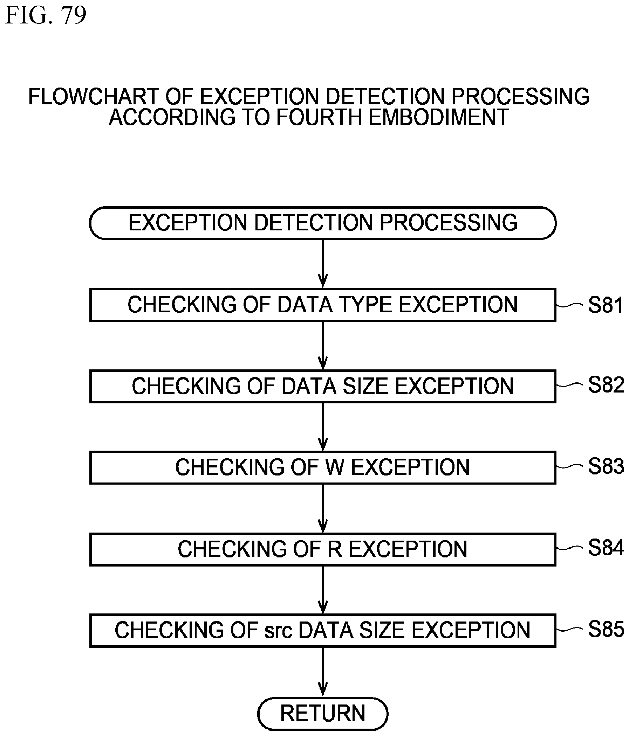

Next, the exception detection process in step S72 will be described. FIG. 79 is a flowchart of the exception detection processing in step S72. This exception detection processing is executed by the exception detection unit 175 as follows based on the detection rules of FIGs. 52Aand 52B.

First, the exception detection unit 175 checks whether there is a data type exception (step S81). This check is performed by executing the code T77 of FIGs. 55 to 69. As described in the code T77, the exception detection unit 175 determines whether the data type actually written in the source register of the argument of the mnemonic function is different from the data type as the arithmetic target by the instruction corresponding to the mnemonic function.

For example, in the code T77 of FIG. 58, it is determined whether the data type "dataTypeVReg[src0.regIndex]" actually written in the first source register is different from the data type "typeFloat" as the arithmetic target by the float_multiply instruction. Further, in the code T77 of FIG. 58, it is also determined whether the data type "dataTypeVReg[src1.regIndex]" actually written in the second source register is different from the data type "typeFloat" as the arithmetic target by the float multiply instruction.

Then, when the data type as the arithmetic target by the instruction and the data type of the data actually written in the source register are different from each other, the exception detection unit 175 detects the data type exception.

Next, the exception detection unit 175 checks whether there is a data size exception (step S82). This check is performed by executing the code T76 of FIGs. 55 to 69. As described in the code T76, the exception detection unit 175 determines whether the data size of the data actually written in the source register of the argument of the mnemonic function is different from the data size specified in the argument.

For example, in the code T76 of FIG. 57, it is determined whether the data size "dataSizeVReg[src0.regIndex]" of the data written in the first source register is different from the data size "sizeS" specified in the argument. Further, in the code T76 of FIG. 57, it is also determined whether the data size "dataSizeVReg[src1.regIndex]" of the data written in the second source register is different from the data size "sizeS" specified in the argument.

Then, when the data size of the data actually written in the source register and the data size specified in the argument are different form each other, the exception detection unit 175 detects the data size exception.

Next, the exception detection unit 175 checks whether there is a W exception (step S83). This check is performed by executing the code T75 of FIGs. 55 to 69. As described in the code T75, the exception detection unit 105 detects the W exception when the element corresponding to the source register specified in the argument of the mnemonic function is "FALSE" among the elements of the arrays "writeAccessGReg" and "writeAccessVReg".

For example, in the code T75 of FIG. 57, it is determined whether "writeAccessVReg[src0.regIndex]" corresponding to the first source register is not "TRUE". Similarly, in this code T75, it is also determined whether "writeAccessVReg[src1.regIndex]" corresponding to the second source register is not "TRUE".

Then, when "writeAccessVReg[src0.regIndex]" is not "TRUE" or when "writeAccessVReg[src1.regIndex]" is not "TRUE", the exception detection unit 105 detects the W exception.

Subsequently, the exception detection unit 175 checks whether there is an R exception (step S84). This check is performed by executing the code T74 of FIGs. 55 to 69. As described in the code T74, when the register specified in the argument of the mnemonic function is the vector register, the exception detection unit 175 performs the check using the array "writeAccessVReg" and the array "readAccessVReg". For example, the exception detection unit 175 uses an element corresponding to the destination register specified in the argument of the mnemonic function among the elements of these arrays "writeAccessVReg" and "readAccessVReg". Then, the exception detection unit 175 detects the R exception when the element of the array "writeAccessVReg" is "TRUE" and the element of the array "readAccessVReg" is "FALSE".

For example, in the code T74 of FIG. 57, when "writeAccessVReg[dst.regIndex]" is "TRUE" and "readAccessVReg[dst.regIndex]" is not "TRUE", the exception detection unit 175 detects the R exception.

Even when the destination register is the general-purpose register, the exception detection unit 175 detects the R exception by using each element of the array "writeAccessGReg" and the array "readAccessGReg".

Next, the exception detection unit 175 checks whether there is a src data type exception (step S85). This check is performed by executing the code T78 of FIGs. 55 to 69. As described in code T78, when the register specified in the argument of the mnemonic function is the vector register, the exception detection unit 175 performs the check using the array "dataTypeVReg". For example, the exception detection unit 175 determines whether the elements of the array "dataTypeVReg" corresponding to the two source registers specified in the argument of the mnemonic function are the same as each other, and detects the src data type exception if they are not the same as each other.

In the code T78 of FIG. 56, the exception detection unit 175 detects the src datatype exception when "dataTypeVReg[src0.regIndex]" corresponding to the first source register and "dataTypeVReg[src1.regIndex]" corresponding to the second source register are not the same as each other.

Even when the source register is the general-purpose register, the exception detection unit 175 detects the src data type exception by using "dataTypeGReg". This completes the exception detection processing.

According to the above-mentioned present embodiment, the developers describe, in the source file 150 that defines the mnemonic function, the codes T74 to T78 that detect the exceptions according to the detection rules of FIGs. 52A and 52B. Therefore, when there is a description error in the source file 152 for the application program, the exception detection unit 175 detects the exception caused by the description error, and the error output unit 176 further outputs the error. The developer can easily debug the source file 152 based on the error, and the efficiency of the program development can be improved.

Further, the exception detection unit 175 detects the exception caused by the description error in this way, so that the time to wastefully execute the executable program 154 with the description error on the processor 90 is reduced. As a result, wasteful consumption of hardware resources such as the processor 90 and the memory 28 can be improved.

Moreover, the above codes T74 to T78 are codes for detecting the exceptions based on the status information 145 (see FIG. 51) of the register indicated by the argument of the mnemonic function. By using each array in the status information 145, the exception detection unit 175 can detect "R exception", "W exception", "data type exception", "data size exception", and "src data type exception". Then, depending on which of these exceptions is detected, the developer can identify a specific description error in the source file 152 for the application program.

### DESCRIPTION OF REFERENCE NUMERALS

20... processor, 21 ... instruction decoding circuit, 22 ... data fetch circuit, 23 ... instruction execution circuit, 24 ... write-back circuit, 25 ... exception processing circuit, 26 ... status register file, 27 ... arithmetic register file, 28 ... memory, 28a ... instruction memory, 28b ... data memory, 30 ... execution circuit, 31 ... status update circuit, 32a ... first exception detection unit, 32b ... second exception detection unit, 40 ... selection circuit, 41 ... exception detection circuit, 42 ... exception signal generation circuit, 43 ... data type exception detection circuit, 44 ... data size exception detection circuit, 45 ... W exception detection circuit, 46 ... src data type exception detection circuit, 47 ... R exception detection circuit, 50 ... exception vector table, 60, 100 ... information processing device, 60a, 100a ... storage device, 60b, 100b ... memory, 60c, 100c ... processor, 60d, 100d ... communication interface, 60e, 100e ... display device, 60f, 100f ... input device, 60g, 100g ... bus, 60h, 100h ... recording medium, 61 ... simulation program, 63 ... control unit, 64 ... storage unit, 65 ... environment construction unit, 66 ... simulation execution unit, 70 ... pseudo processor, 71 ... instruction decoding unit, 72 ... data fetch unit, 73 ... instruction execution unit, 74 ... write-back unit, 75 ... exception processing unit, 76 ... status register file unit, 76a ... second storage area, 77 ... arithmetic register file unit, 77a ... first storage area, 78 ... memory unit, 78a ... instruction memory unit, 78b ... data memory unit, 78c ... third storage area, 82 ... exception detection unit, 82a ... first exception detection unit, 82b ... second exception detection unit, 83 ... execution unit, 101 ... control unit, 102 ... storage unit, 103 ... initialization unit, 104 ... acquisition unit, 105 ... exception detection unit, 106 ... error output unit, 107 ... status update unit, 108 ... machine language generation unit, 110, 145 ... status information, 112 ... assembler program, 117 ... information processing device, 153 ... program group, 171 ... control unit, 172 ... storage unit, 175 ... exception detection unit, 176 ... error output unit, 177 ... status update unit, 178 ... machine language generation unit, 179 ... writing unit.

## Claims

1. A processor comprising:
a first register;
a second register configured to store status information related to the first register; and
a detection circuit configured to detect an exception in an instruction in which the first register is specified in an operand, based on the status information stored in the second register.

2. The processor as claimed in claim 1, wherein
the status information has a first flag indicating whether the first register has been used as a write destination register before the execution of the instruction, and
the detection circuit detects the exception when the first flag indicates that the first register has not been used as the write destination register.

3. The processor as claimed in claim 1, wherein
the status information has a first flag indicating whether the first register has been used as a write destination register before the execution of the instruction and a second flag indicating whether the first register has been used as a read source register before the execution of the instruction, and
the detection circuit detects the exception when the first flag indicates that the first register has been used as the write destination register and the second flag indicates that the first register has not been used as the read source register.

4. The processor as claimed in claim 1, wherein
the status information has type information indicating a data type of data stored in the first register,
the detection circuit detects the exception when the data type indicated by the type information does not match a data type on which the instruction is calculated.

5. The processor as claimed in claim 1, wherein
the first register is a vector register in which a plurality of elements of vector data are stored,
the status information has size information indicating a data size of the elements stored in the first register, and
the detection circuit detects the exception when the data size indicated by the size information does not match a data size of the first register specified in the operand.

6. The processor as claimed in claim 1, comprising:
a plurality of first registers; and
a plurality of second registers corresponding to the plurality of the first registers, respectively;
wherein the status information has type information indicating a data type of data stored in the first register, and
if the plurality of first registers are specified in a plurality of source registers in the instruction, respectively, and the instruction is on the premise that the data types of the data stored in the respective source registers match each other, the detection circuit detects the exception when the respective type information in the first registers does not match each other.

7. The processor as claimed in claim 1, comprising:
an execution circuit configured to execute a first store instruction that stores the status information stored in the second register in the first register, and a first load instruction that writes the status information stored in the first register to the second register.

8. The processor as claimed in claim 1, comprising:
an execution circuit configured to execute a second store instruction that stores the status information stored in the second register in a memory, and a second load instruction that writes the status information stored in the memory to the second register.

9. The processor as claimed in claim 1, further comprising:
a plurality of first registers;
a plurality of second registers corresponding to the plurality of the first registers, respectively; and
an execution circuit configured to execute a third store instruction that stores the plurality of status information stored in the plurality of respective second registers in the memory at once, and a third load instruction that writes the plurality of status information stored in the memory to the second registers at once, respectively.

10. The processor as claimed in claim 1, comprising:
an execution circuit configured to execute a disable instruction that disables a function of the detection circuit detecting the exception and an enable instruction that enables the function.

11. The processor as claimed in claim 10, wherein
each of the disable instruction and the enable instruction takes a type of the exception as an operand, and
the execution circuit disables the function detecting the exception of the type by executing the disable instruction, and enables the function detecting the exception of the type by executing the enable instruction.

12. The processor as claimed in claim 10, comprising:
a plurality of second registers;
wherein each of the disable instruction and the enable instruction takes one of the plurality of second registers as an operand, and
the execution circuit disables the function detecting the exception by using the status information stored in the second register specified in the operand of the disable instruction, and enables the function detecting the exception by using the status information stored in the second register specified in the operand of the enable instruction.

13. A simulation program that causes a computer to execute a process, the process comprising:
securing, in a memory, a first storage area that simulates a first register;
securing, in the memory, a second storage area that simulates a second register that stores status information related to the first register;
detecting an exception in an instruction in which the first register is specified in an operand, based on the status information stored in the second register.

14. The simulation program as claimed in claim 13, wherein
the status information has a first flag indicating whether the first register has been used as a write destination register before the execution of the instruction, and
the detecting detects the exception when the first flag indicates that the first register has not been used as the write destination register.

15. The simulation program as claimed in claim 13, wherein
the status information has a first flag indicating whether the first register has been used as a write destination register before the execution of the instruction and a second flag indicating whether the first register has been used as a read source register before the execution of the instruction, and
the detecting detects the exception when the first flag indicates that the first register has been used as the write destination register and the second flag indicates that the first register has not been used as the read source register.

16. The simulation program as claimed in claim 13, wherein
the status information has type information indicating a data type of data stored in the first register,
the detecting detects the exception when the data type indicated by the type information does not match a data type on which the instruction is calculated.

17. The simulation program as claimed in claim 13, wherein
the first register is a vector register in which a plurality of elements of vector data are stored,
the status information has size information indicating a data size of the elements stored in the first register, and
the detecting detects the exception when the data size indicated by the size information does not match a data size of the first register specified in the operand.

18. The simulation program as claimed in claim 13, wherein
the first storage area simulates a plurality of first registers, and the second storage area simulates a plurality of second registers corresponding to the plurality of first registers, respectively;
the status information has type information indicating a data type of data stored in the first register, and
if the plurality of first registers are specified in a plurality of source registers in the instruction, respectively, and the instruction is on the premise that the data types of the data stored in the respective source registers match each other, the detection circuit detects the exception when the respective type information in the first registers does not match each other.

19. An assembler program that causes a computer to execute a process, the process comprising:
acquiring a code of an assembly language of an instruction in which a register is specified in an operand;
detecting an exception in the instruction based on status information related to the register;
outputting an error when the exception is detected; and
generating a machine language of the code when the exception is not detected.

20. An information processing program that causes a computer to execute a process, the process comprising:
detecting, when a function associated with an instruction receives an argument representing a register specified in an operand of the instruction, an exception in the instruction based on status information related to the register represented by the argument;
outputting an error when the exception is detected;
generating a machine language representing a process performed by the instruction for the operand when the exception is not detected; and
writing the machine language to a memory.
